# EUROPEAN PATENT APPLICATION

(11) **EP 4 723 511 A1**
(43) Date of publication of application: **08.04.2026**
(21) Application number: 23939765.6
(22) Date of filing: 11.10.2023
(51) Int. Cl.: H04B 10/27

(54) **BASE STATION, CONTROL DEVICE, SIGNAL TRANSFER SYSTEM, AND SIGNAL TRANSFER METHOD**

(30) Priority: 31.05.2023 WO PCT/JP2023/020296
(71) Applicant: NTT, Inc., Tokyo 100-8116 (JP)
(72) Inventor: MIYAMOTO Kenji, Musashino-shi, Tokyo 180-8585 (JP); SAKAI Yoshihito, Musashino-shi, Tokyo 180-8585 (JP); SHIMADA Tatsuya, Musashino-shi, Tokyo 180-8585 (JP)
(74) Representative: Santarelli
(86) International application number: PCT/JP2023/036861
(87) International publication number: WO 2024/247297

(57) **Abstract**

A base station including: an information acquisition unit configured to acquire control information regarding communication with one or more terminals for each traffic flow exchanged between the one or more terminals and an upper device; and a control unit configured to generate a dedicated optical path in any section to the upper device in a case where it is determined that the dedicated optical path for transferring a specific traffic flow is necessary on a basis of the control information acquired for the each traffic flow.

## Description

### Technical Field

The present invention relates to a base station, a control device, a signal transfer system, and a signal transfer method.

The present application claims priority on the basis of PCT/JP2023/020296 filed in Japan on May 31, 2023, the contents of which are incorporated herein by reference.

### Background Art

In a conventional mobile communication network, an optical path is generated between each of a plurality of base stations and a core node serving as a connection destination of each base station. Then, communication is performed between the each base station and the core node serving as a connection destination of the each base station via the generated optical path. In a case where a plurality of wireless terminals is connected to the same base station, traffic flows of the plurality of wireless terminals connected to the same base station are transferred in a mixed manner on one optical path.

### Citation List

### Non Patent Literature

Non Patent Literature 1: "3GPP TS 38.300 V17.3.0", 3GPP (registered trademark), 2022
Non Patent Literature 2: "3GPP TS 38.401 V17.3.0", 3GPP (registered trademark), 2022.
Non Patent Literature 3: Taichi KATSURAGAWA et al., "RAN inteligent-ka ni muketa torikumi (in Japanese) (Efforts toward RAN intelligence)", NTT DOCOMO Technical Journal, vol. 30, 2022.
Non Patent Literature 4: "O-RAN.WGl.Use-Cases-Detailed-Specification-v09.00", O-RAN Alliance, 2022.
Non Patent Literature 5: "3GPP TS 23.501 V18.0.0", 3GPP (registered trademark), 2022.

### Summary of Invention

### Technical Problem

However, in a case where a specific wireless terminal needs to satisfy a strict delay requirement, there is a problem that a delay increases due to traffic congestion or the like in the same optical path due to passing through the optical path mixed with other traffic flows.

In view of the above circumstances, an object of the present invention is to provide a technology capable of satisfying a delay requirement while reducing a delay even in a case where there is a specific wireless terminal that needs to satisfy a strict delay requirement.

### Solution to Problem

One aspect of the present invention is a base station including: an information acquisition unit configured to acquire control information regarding communication with one or more terminals for each traffic flow exchanged between the one or more terminals and an upper device; and a control unit configured to generate a dedicated optical path in any section to the upper device in a case where it is determined that the dedicated optical path for transferring a specific traffic flow is necessary on the basis of the control information acquired for the each traffic flow.

One aspect of the present invention is a control device in a signal transfer system including one or more base stations that accommodate one or more terminals, one or more optical transmission devices that communicate with the one or more base stations, and the control device that controls at least the one or more optical transmission devices, the control device including: a control determination unit configured to transmit, to at least the one or more optical transmission devices, an instruction to generate a dedicated optical path in any section between the one or more base stations and an upper device in a case where it is determined that the dedicated optical path for transferring a specific traffic flow is necessary on the basis of control information regarding communication with the one or more terminals acquired for each traffic flow exchanged between the one or more terminals and the upper device.

One aspect of the present invention is a control device in a signal transfer system including one or more base stations that accommodate one or more terminals, one or more optical transmission devices that communicate with the one or more base stations, and the control device that communicates with at least the one or more base stations, the control device including: an information analysis unit configured to acquire, from the one or more base stations, control information regarding communication with the one or more terminals acquired for each traffic flow exchanged between the one or more terminals and an upper device, and determine whether or not a dedicated optical path for transferring a specific traffic flow is necessary on the basis of the acquired control information.

One aspect of the present invention is a signal transfer system including: one or more base stations configured to accommodate one or more terminals; and one or more optical transmission devices configured to perform communication with the one or more base stations, and the signal transfer system including: an information acquisition unit configured to acquire control information regarding communication between the one or more base stations and the one or more terminals for each traffic flow exchanged between the one or more terminals and an upper device; and a control unit configured to generate a dedicated optical path in any section between the one or more base stations and the upper device in a case where it is determined that the dedicated optical path for transferring a specific traffic flow is necessary on the basis of the control information acquired for the each traffic flow, and transfer the specific traffic flow to a transfer destination via the generated dedicated optical path.

One aspect of the present invention is a signal transfer method in a signal transfer system including one or more base stations that accommodate one or more terminals and one or more optical transmission devices that communicate with the one or more base stations, the signal transfer method including: acquiring control information regarding communication between the one or more base stations and the one or more terminals for each traffic flow exchanged between the one or more terminals and an upper device; generating a dedicated optical path in any section between the one or more base stations and the upper device in a case where it is determined that the dedicated optical path for transferring a specific traffic flow is necessary on the basis of the control information acquired for the each traffic flow; and transferring the specific traffic flow to a transfer destination via the generated dedicated optical path.

### Advantageous Effects of Invention

According to the present invention, it is possible to satisfy a delay requirement while reducing a delay even in a case where there is a specific wireless terminal that needs to satisfy a strict delay requirement.

### Brief Description of Drawings

[Fig. 1] A diagram illustrating a configuration example of a signal transfer system according to a first embodiment.
[Fig. 2] A flowchart illustrating an example of a flow of processing executed by the signal transfer system according to the first embodiment.
[Fig. 3] A diagram illustrating a configuration example of a signal transfer system according to Modification 1 of the first embodiment.
[Fig. 4] A diagram illustrating a configuration example of a signal transfer system according to Modification 2 of the first embodiment.
[Fig. 5] A diagram illustrating a configuration example of a signal transfer system according to Modification 3 of the first embodiment.
[Fig. 6] A diagram illustrating a configuration example of an application example (part 1) of the signal transfer system according to the first embodiment.
[Fig. 7] A sequence diagram illustrating a flow of the processing of the signal transfer system according to the first embodiment.
[Fig. 8] A diagram illustrating a configuration example of an application example (part 2) of the signal transfer system according to the first embodiment.
[Fig. 9] A sequence diagram illustrating a flow of the processing of the signal transfer system according to the first embodiment.
[Fig. 10] A diagram illustrating a configuration example of a signal transfer system according to a second embodiment.
[Fig. 11] A flowchart illustrating an example of a flow of processing executed by the signal transfer system according to the second embodiment.
[Fig. 12] A diagram illustrating a configuration example of an application example (part 1) of the signal transfer system according to the second embodiment.
[Fig. 13] A diagram illustrating a configuration example of an application example (part 2) of the signal transfer system according to the second embodiment.
[Fig. 14] A diagram illustrating a configuration example of a signal transfer system according to a third embodiment.
[Fig. 15] A flowchart illustrating an example of a flow of processing executed by the signal transfer system according to the third embodiment.
[Fig. 16] A diagram illustrating a configuration example of an application example (part 1) of the signal transfer system according to the third embodiment.
[Fig. 17] A diagram illustrating a configuration example of an application example (part 2) of the signal transfer system according to the third embodiment.
[Fig. 18] A diagram illustrating a configuration example of a signal transfer system according to a fourth embodiment.
[Fig. 19] A flowchart illustrating an example of a flow of processing executed by the signal transfer system according to the fourth embodiment.
[Fig. 20] A diagram illustrating a configuration example of an application example (part 1) of the signal transfer system according to the fourth embodiment.
[Fig. 21] A sequence diagram illustrating a flow of the processing of the signal transfer system according to the fourth embodiment.
[Fig. 22] A diagram illustrating a configuration example of an application example (part 2) of the signal transfer system according to the fourth embodiment.
[Fig. 23] A sequence diagram illustrating a flow of the processing of the signal transfer system according to the fourth embodiment.
[Fig. 24] A diagram illustrating a configuration example of a signal transfer system according to a fifth embodiment.
[Fig. 25] A flowchart illustrating an example of a flow of processing executed by the signal transfer system according to the fifth embodiment.
[Fig. 26] A diagram illustrating a configuration example of an application example (part 1) of the signal transfer system according to the fifth embodiment.
[Fig. 27] A diagram illustrating a configuration example of an application example (part 2) of the signal transfer system according to the fifth embodiment.
[Fig. 28] A diagram illustrating a configuration example of a signal transfer system according to a sixth embodiment.
[Fig. 29] A flowchart illustrating an example of a flow of processing executed by the signal transfer system according to the sixth embodiment.
[Fig. 30] A diagram illustrating a configuration example of an application example (part 1) of the signal transfer system according to the sixth embodiment.
[Fig. 31] A diagram illustrating a configuration example of an application example (part 2) of the signal transfer system according to the sixth embodiment.
[Fig. 32] A sequence diagram illustrating a flow of processing of a signal transfer system according to a seventh embodiment.
[Fig. 33] A diagram (part 1) for describing processing of buffering a packet in optical path switching according to the seventh embodiment.
[Fig. 34] A diagram (part 2) for describing the processing of buffering a packet in optical path switching according to the seventh embodiment.
[Fig. 35] A diagram (part 3) for describing the processing of buffering a packet in optical path switching according to the seventh embodiment.
[Fig. 36] A diagram (part 4) for describing the processing of buffering a packet in optical path switching according to the seventh embodiment.
[Fig. 37] A diagram illustrating a configuration example of a signal transfer system according to a tenth embodiment.
[Fig. 38] A sequence diagram illustrating a flow of processing of the signal transfer system according to the tenth embodiment.
[Fig. 39] A diagram (part 1) for describing processing of buffering a packet in optical path switching according to the tenth embodiment.
[Fig. 40] A diagram (part 2) for describing the processing of buffering a packet in optical path switching according to the tenth embodiment.
[Fig. 41] A diagram (part 3) for describing the processing of buffering a packet in optical path switching according to the tenth embodiment.
[Fig. 42] A diagram (part 4) for describing the processing of buffering a packet in optical path switching according to the tenth embodiment.
[Fig. 43] A diagram illustrating a configuration example of a signal transfer system according to an eleventh embodiment.
[Fig. 44] A diagram illustrating a configuration example of a signal transfer system according to a twelfth embodiment.

### Description of Embodiments

Embodiments of the present invention will be described below with reference to the drawings.

### (First Embodiment)

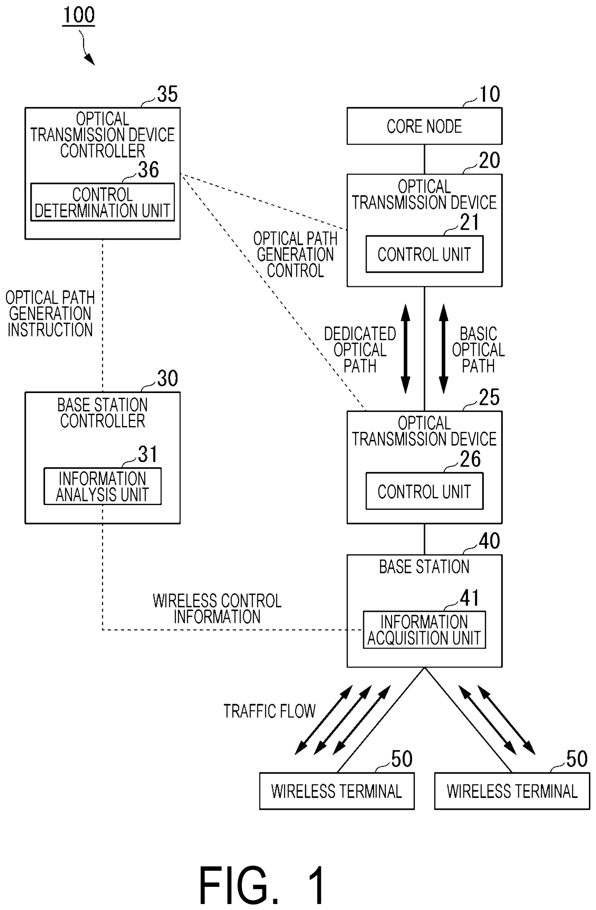

Fig. 1 is a diagram illustrating a configuration example of a signal transfer system 100 according to a first embodiment. The signal transfer system 100 is a system that transfers a signal from one communication device to the other communication device. The signal transfer system 100 includes, for example, a core node 10, one or more optical transmission devices 20 and 25, a base station controller 30, an optical transmission device controller 35, and one or more base stations 40.

The core node 10 and the optical transmission device 20, the optical transmission device 20 and the optical transmission device 25, and the optical transmission device 25 and the base station 40 are connected by an optical transmission line. The optical transmission line is a path for transmitting an optical signal, and is, for example, an optical fiber. The optical transmission line may include an optical amplifier that amplifies the optical signal.

The core node 10 is a device that communicates with each of one or more wireless terminals 50 wirelessly connected to each base station 40. For example, the core node 10 receives an uplink signal transmitted from the wireless terminal 50 and transmits a downlink signal to the wireless terminal 50. The core node 10 is an aspect of an upper device.

The optical transmission devices 20 and 25 are devices that transfer signals exchanged between the core node 10 and each of the one or more wireless terminals 50. For example, the optical transmission devices 20 and 25 transfer the uplink signal transmitted from the wireless terminal 50 to the core node 10. For example, the optical transmission devices 20 and 25 transfer the downlink signal transmitted from the core node 10 to the wireless terminal 50 via the base station 40. Furthermore, the optical transmission devices 20 and 25 perform dedicated optical path generation processing in response to an instruction from the optical transmission device controller 35.

The dedicated optical path generation processing is processing of generating a dedicated optical path in any section from the core node 10 to the base station 40. The dedicated optical path is an optical path having a wavelength different from a basic optical path that is usually used, and is, for example, an optical path configured to transmit a specific traffic flow. In a case where communication is performed between the wireless terminal 50 and the core node 10, the optical transmission devices 20 and 25 generate an optical path for transferring an optical signal in a section from the core node 10 to the base station 40. This optical path is the basic optical path that is normally used to exchange, with the core node 10, all signals transmitted and received by each of the wireless terminals 50 connected to the same base station 40. In the basic optical path, as described above, a plurality of traffic flows of the wireless terminals 50 connected to the same base station 40 is mixed. In contrast, the dedicated optical path is an optical path set for transmitting a specific traffic flow, other traffic flows are not mixed.

The optical transmission devices 20 and 25 may generate such a dedicated optical path between the optical transmission device 20 and the optical transmission device 25 or between end points (for example, between the core node 10 and the base station 40) of a wired network. Note that termination points of the basic optical path and the dedicated optical path may be the optical transmission devices 20 and 25, or may be the end points of the wired network. In a case where the core node 10 and the base station 40 are set as termination points of the optical path, the optical transmission device controller 35 performs optical path generation control of the dedicated optical path not only for the optical transmission devices 20 and 25 but also for the core node 10 and the base station 40. In this case, the core node 10 and the base station 40 also generate a dedicated optical path. For example, the base station 40 generates the dedicated optical path in addition to the basic optical path to the optical transmission device 25.

The example illustrated in Fig. 1 illustrates a case where the termination points of the basic optical path and the dedicated optical path are between the optical transmission device 20 and the optical transmission device 25 as an example. Therefore, the optical transmission devices 20 and 25 generate the dedicated optical path between the optical transmission device 20 and the optical transmission device 25. The same similarly applies to the other embodiments to be described below.

The base station controller 30 acquires information related to wireless communication between the base station 40 and the wireless terminal 50 (hereinafter referred to as "wireless control information") from the base station 40. The wireless control information includes band information for each traffic flow, information indicating priority for each traffic flow, and wireless quality information. The band information for each traffic flow is, for example, a packet data convergence protocol (PDCP) throughput for each traffic flow. Note that the band information for each traffic flow may be a scheduling request, an uplink grant, a buffer status report, a PDCP SDU data volume for each QoS flow indicator (QFI), a PDCP PDU size, and the like. The information indicating priority for each traffic flow is a QoS class indicator (QCI), a 5G QoS indicator (5QI), or the like. The wireless quality information is a reference signal received power (RSRP), a reference signal received quality (RSRQ), a received signal strength indicator (RSSI), and the like of each wireless terminal 50.

The base station controller 30 determines whether or not a dedicated optical path is necessary for a specific traffic flow of the wireless terminal 50 on the basis of the acquired wireless control information. In a case of determining that the dedicated optical path is necessary, the base station controller 30 instructs the optical transmission device controller 35 to generate the dedicated optical path.

The optical transmission device controller 35 is a control device that controls each of the optical transmission devices 20 and 25 by transmitting a control signal. The optical transmission device controller 35 instructs each of the optical transmission devices 20 and 25 to generate the dedicated optical path in response to an instruction from the base station controller 30.

The base station 40 is a device that communicates with each of the one or more wireless terminals 50. For example, the base station 40 transmits a signal transferred from the optical transmission device 25 to the wireless terminal 50, and transfers a signal received from the wireless terminal 50 to the optical transmission device 25. The base station 40 wirelessly transmits the signal transferred from the optical transmission device 25 to the wireless terminal 50, and converts the signal received from the wireless terminal 50 into an optical signal and transfers the optical signal to the optical transmission device 25. Furthermore, the base station 40 has a function to acquire the wireless control information for each traffic flow. The base station 40 transfers the acquired wireless control information for each traffic flow to the base station controller 30.

The wireless terminal 50 is a user terminal operated by a user. The wireless terminal 50 has one or more traffic flows. The wireless terminal 50 wirelessly communicates with the base station 40. The wireless terminal 50 receives, for example, the downlink signal transmitted from the core node 10 via the base station 40. The wireless terminal 50 transmits, for example, the uplink signal addressed to the core node 10 to the base station 40.

The one or more optical transmission devices 20 and 25, the base station controller 30, the optical transmission device controller 35, and the one or more base stations 40 included in the signal transfer system 100 are configured using, for example, a processor such as a central processing unit (CPU), a memory, and a communication interface. Each device of the one or more optical transmission devices 20 and 25, the base station controller 30, the optical transmission device controller 35, and the one or more base stations 40 functions as a communication device including a control unit when the processor executes a program.

The control unit provides each function for causing the communication device to function as the optical transmission devices 20 and 25, the base station controller 30, the optical transmission device controller 35, or the base station 40. All or some of the functions of the control unit may be implemented by using hardware such as an application specific integrated circuit (ASIC), a programmable logic device (PLD), or a field programmable gate array (FPGA).

The program may be recorded on a computer-readable recording medium. Examples of the computer-readable recording medium include a portable medium such as a flexible disk, a magneto-optical disc, a ROM, a CD-ROM, or a semiconductor storage device (for example, solid state drive (SSD)), or a storage device such as a hard disk or a semiconductor storage device internally installed in a computer system. The above-described program may be transmitted via a telecommunication line.

Next, a specific configuration of each device will be described. Each base station 40 includes an information acquisition unit 41. The information acquisition unit 41 included in the base station 40 acquires the wireless control information for each traffic flow exchanged between the wireless terminal 50 and the core node 10. Note that, in the following description, a case where the information acquisition unit 41 acquires the wireless control information for each traffic flow from the wireless terminal 50 toward the core node 10 will be described as an example. The information acquisition unit 41 included in the base station 40 notifies the base station controller 30 of the acquired wireless control information.

Note that each of the base stations 40 may be, for example, a Wi-Fi (registered trademark) access point. The signal transfer system 100 is not necessarily applied to a mobile communication system, and may be applied to a wireless communication system other than the mobile communication system.

The base station controller 30 includes an information analysis unit 31. The information analysis unit 31 acquires the wireless control information acquired by the information acquisition unit 41 of each base station 40. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information. Specifically, in a case where a predetermined determination criterion is satisfied on the basis of the wireless control information, the information analysis unit 31 determines that the dedicated optical path is necessary for the traffic flow from which the wireless control information is acquired. Specifically, in a case where the predetermined determination criterion is not satisfied on the basis of the wireless control information, the information analysis unit 31 determines that the dedicated optical path is not necessary for the traffic flow from which the wireless control information is acquired.

The predetermined determination criterion is, for example, any one of a fact that a radio band is equal to or greater than a threshold, a fact that an ID of a priority is a specific numerical value, or a fact that the base station 40 notifies the base station controller 30 of a request for generating the dedicated optical path as the wireless control information. In a case where the predetermined determination criterion is satisfied, the information analysis unit 31 transmits an optical path generation instruction to the optical transmission device controller 35. The optical path generation instruction is a control signal for providing notification that generation of the dedicated optical path is necessary.

When transmitting the optical path generation instruction, the information analysis unit 31 notifies the optical transmission device controller 35 of an optical path identifier of the dedicated optical path. The optical path identifier is, for example, a destination IP address, a VLAN ID, a QFI, a PDU session ID, single-network slice selection assistance information (S-NSSAI) that is an ID of a network slice, or the like. Note that there may be a plurality of destinations (for example, core nodes 10) of the dedicated optical path with respect to the base station 40.

The optical transmission device controller 35 includes a control determination unit 36. When the optical path generation instruction is received from the base station controller 30, the control determination unit 36 performs the optical path generation control of the dedicated optical path for the optical transmission devices 20 and 25. The optical path generation control is control for causing the optical transmission devices 20 and 25 to generate the dedicated optical path for a specific traffic flow. The optical transmission device controller 35 notifies the optical transmission devices 20 and 25 of the optical path identifier. Note that, as described above, in a case where the termination points of the basic optical path and the dedicated optical path are set as the core node 10 and the base station 40, the optical transmission device controller 35 notifies the core node 10 and the base station 40 of the optical path identifier.

The optical transmission device 20 includes a control unit 21. The control unit 21 generates the dedicated optical path in a predetermined section according to the optical path generation control of the optical transmission device controller 35. For example, the control unit 21 generates the dedicated optical path in a section between the optical transmission device 20 and the optical transmission device 25. In a case where the termination points of the basic optical path and the dedicated optical path are set as the core node 10 and the base station 40, the control unit 21 generates the dedicated optical paths in a section between the core node 10 and the optical transmission device 20 and a section between the optical transmission device 20 and the optical transmission device 25.

Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35. In a case where the input optical signal matches the optical path identifier, the control unit 21 outputs the input optical signal to the dedicated optical path. In a case where the input optical signal does not match the optical path identifier, the control unit 21 outputs the input optical signal to the basic optical path.

The optical transmission device 25 includes a control unit 26. The control unit 26 generates the dedicated optical path in a predetermined section according to the optical path generation control of the optical transmission device controller 35. For example, the control unit 26 generates the dedicated optical path in a section between the optical transmission device 20 and the optical transmission device 25. In a case where the termination points of the basic optical path and the dedicated optical path are set as the core node 10 and the base station 40, the control unit 26 generates dedicated optical paths in a section between the optical transmission device 20 and the optical transmission device 25 and a section between the optical transmission device 25 and the base station 40.

Moreover, when the optical signal is input after the generation of the dedicated optical path, the control unit 26 determines which of the basic optical path or the dedicated optical path the input optical signal is output to according to the optical path identifier notification of which is provided from the optical transmission device controller 35. In a case where the input optical signal matches the optical path identifier, the control unit 26 outputs the input optical signal to the dedicated optical path. In a case where the input optical signal does not match the optical path identifier, the control unit 26 outputs the input optical signal to the basic optical path.

In the signal transfer system 100 according to the first embodiment, the information analysis unit 31 is included in a control unit of the base station controller 30, the control determination unit 36 is included in a control unit of the optical transmission device controller 35, and the information acquisition unit 41 is included in a control unit of the base station 40.

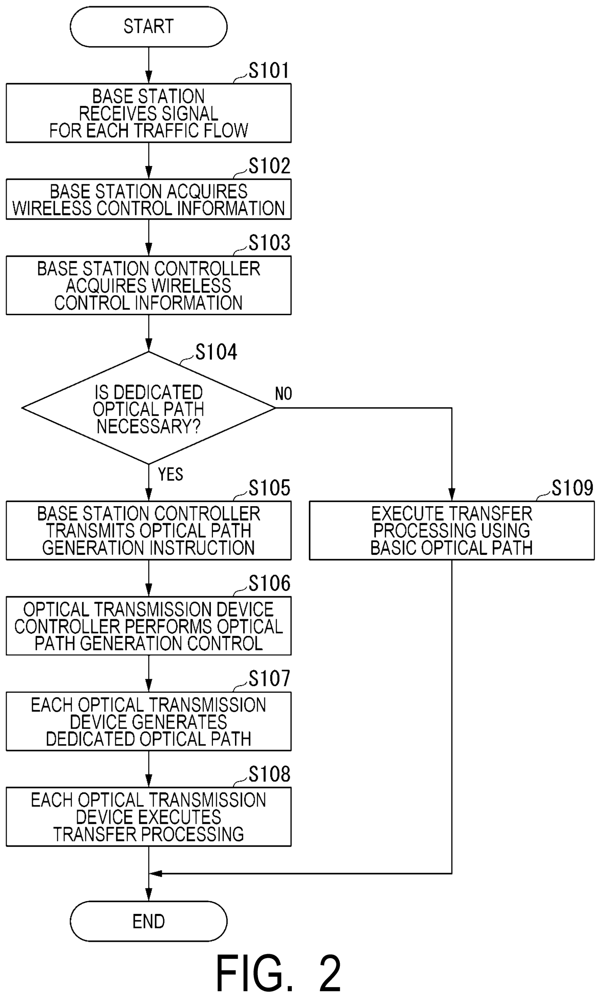

Fig. 2 is a flowchart illustrating an example of a flow of processing executed by the signal transfer system 100 in the first embodiment. In the signal transfer system 100, the processing illustrated in Fig. 2 is repeatedly performed. Note that it is assumed that the basic optical path is generated in a wired section from the core node 10 to the base station 40 at the start of the processing in Fig. 2.

The base station 40 receives a signal of each traffic flow (step S101). The information acquisition unit 41 included in the base station 40 acquires the wireless control information for each traffic flow on the basis of the received signal (step S102). The information acquisition unit 41 transmits the acquired wireless control information to the base station controller 30.

The information analysis unit 31 included in the base station controller 30 acquires the wireless control information transmitted from the information acquisition unit 41 (step S103). The information analysis unit 31 determines whether or not the dedicated optical path is necessary on the basis of the acquired wireless control information (step S104). In a case where the information analysis unit 31 determines that the dedicated optical path is necessary (YES in step S104), the information analysis unit 31 transmits the optical path generation instruction to the optical transmission device controller 35 (step S105).

The control determination unit 36 included in the optical transmission device controller 35 acquires the optical path generation instruction transmitted from the base station controller 30. The control determination unit 36 performs the optical path generation control for each of the optical transmission devices 20 and 25 on the basis of the acquired optical path generation instruction (step S106). As a result, the control units 21 and 26 of the respective optical transmission devices 20 and 25 generate the dedicated optical path between the optical transmission device 20 and the optical transmission device 25 (step S107). Thereafter, each of the optical transmission devices 20 and 25 performs transfer processing of the input optical signal (step S108).

Specifically, the base station 40 converts the signal transmitted from the wireless terminal 50 into an optical signal and outputs the optical signal to the optical transmission device 25. The optical transmission device 25 receives the optical signal output from the base station 40. The control unit 26 of the optical transmission device 25 determines which of the basic optical path or the dedicated optical path the received optical signal is output to on the basis of the received optical signal and the optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 25 is input to the optical transmission device 20 via the optical path. The optical transmission device 20 receives the optical signal output from the optical transmission device 25. The control unit 21 of the optical transmission device 20 transmits the received optical signal to the core node 10 via the optical transmission line. Note that, in a case where the dedicated optical path is also generated between the core node 10 and the optical transmission device 20, the control unit 21 determines which of the basic optical path or the dedicated optical path the received optical signal is output to on the basis of the received optical signal and the optical path identifier. In this way, in the signal transfer system 100, a signal based on a specific traffic flow can be transferred through the dedicated optical path.

In the processing of step S104, in a case where the information analysis unit 31 determines that the dedicated optical path is not necessary (NO in step S104), the information analysis unit 31 does not transmit the optical path generation instruction to the optical transmission device controller 35. As a result, the transfer processing using the basic optical path is executed in the wired section from the core node 10 to the base station 40 (step S109).

According to the signal transfer system 100 configured as described above, in the case where it is determined that the dedicated optical path for transferring a specific traffic flow of a specific wireless terminal 50 is necessary on the basis of the wireless control information acquired for each traffic flow, the optical transmission device 20 generates the dedicated optical path in any section between the base station 40 and the core node 10, and transfers the specific traffic flow of the specific wireless terminal 50 to the core node 10 via the generated dedicated optical path. As a result, it is possible to reduce a delay due to congestion with other traffic or the like by causing the traffic flow that needs to satisfy a strict delay requirement to pass through the dedicated optical path. As described above, according to the present embodiment, it is possible to reduce the delay of the specific traffic flow of the specific wireless terminal 50 that has generated the dedicated optical path as compared with the related art that uses only the basic optical path.

### (Modification 1 of First Embodiment)

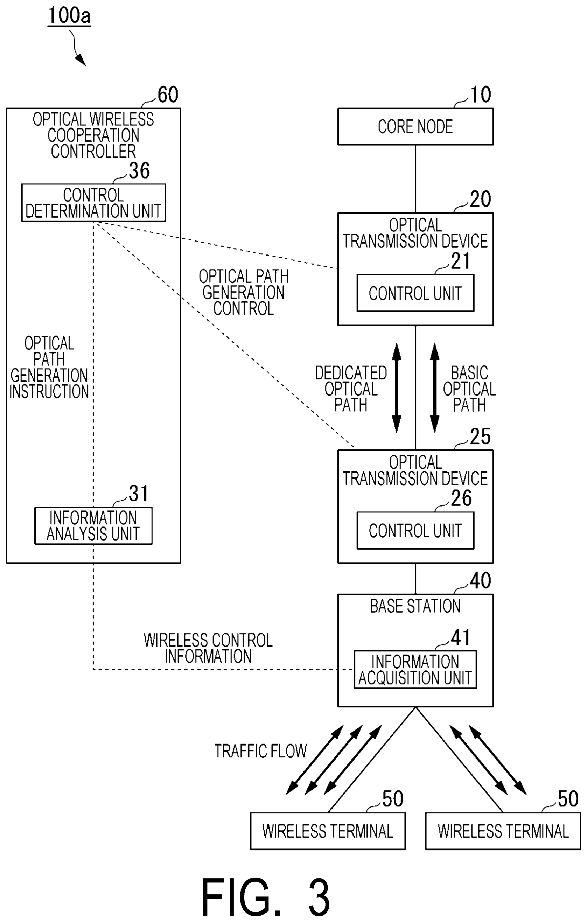

In the above-described signal transfer system 100, the base station controller 30 and the optical transmission device controller 35 are provided as separate devices. The base station controller 30 and the optical transmission device controller 35 may be implemented as one device. Fig. 3 is a diagram illustrating a configuration example of a signal transfer system 100a according to Modification 1 of the first embodiment. The signal transfer system 100a includes, for example, the core node 10, the one or more optical transmission devices 20 and 25, the one or more base stations 40, and an optical wireless cooperation controller 60. The signal transfer system 100a is different in configuration from the signal transfer system 100 in not including the base station controller 30 and the optical transmission device controller 35 but newly including the optical wireless cooperation controller 60. Hereinafter, differences from the signal transfer system 100 will be mainly described.

The optical wireless cooperation controller 60 is a control device having both the functions of the base station controller 30 and the optical transmission device controller 35. The optical wireless cooperation controller 60 includes the information analysis unit 31 and the control determination unit 36. The information analysis unit 31 and the control determination unit 36 perform processing similar to the functional units of the same names described in the first embodiment. With this configuration, communication (for example, transmission of the optical path generation instruction or the like) between the information analysis unit 31 and the control determination unit 36 is performed inside the optical wireless cooperation controller 60. The optical wireless cooperation controller 60 may acquire information from an outside, such as movement information of an automobile or a trajectory of a drone, as the wireless control information.

### (Modification 2 of First Embodiment)

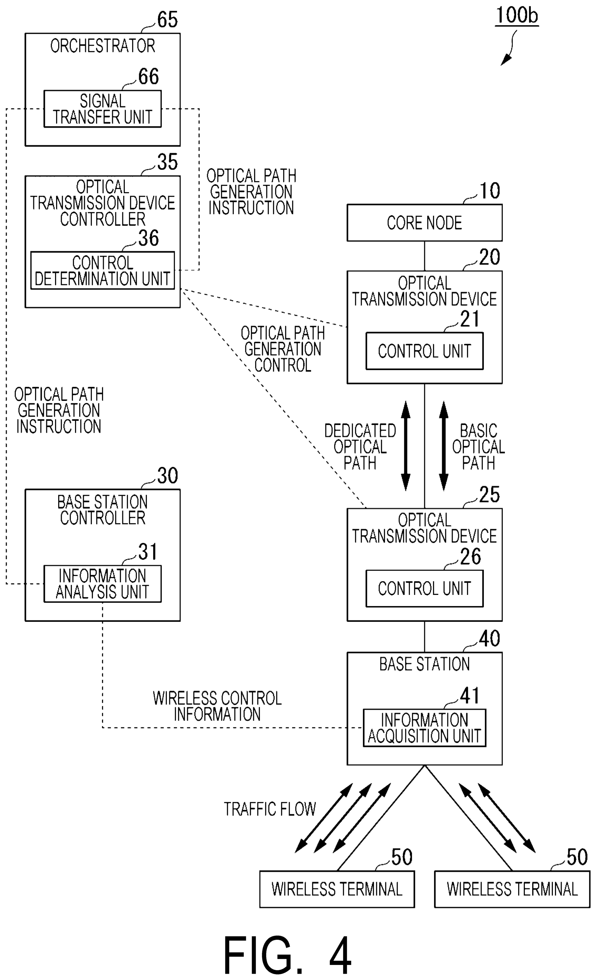

The above-described signal transfer system 100 may further include an orchestrator 65 that is an upper device that controls the base station controller 30 and the optical transmission device controller 35. Fig. 4 is a diagram illustrating a configuration example of a signal transfer system 100b according to Modification 2 of the first embodiment. The signal transfer system 100b includes, for example, the core node 10, the one or more optical transmission devices 20 and 25, the base station controller 30, the optical transmission device controller 35, the one or more base stations 40, and the orchestrator 65. The signal transfer system 100b is different in configuration from the signal transfer system 100 in newly including the orchestrator 65. Hereinafter, differences from the signal transfer system 100 will be mainly described.

In a case of determining that generation of the dedicated optical path is necessary, the base station controller 30 generates the optical path generation instruction. The base station controller 30 transmits the generated optical path generation instruction to the orchestrator 65.

The orchestrator 65 is located above the base station controller 30 and the optical transmission device controller 35. The orchestrator 65 includes a signal transfer unit 66. The signal transfer unit 66 relays information between the base station controller 30 and the optical transmission device controller 35. For example, the signal transfer unit 66 relays the optical path generation instruction transmitted from the base station controller 30 to the optical transmission device controller 35.

The optical transmission device controller 35 receives the optical path generation instruction relayed by the orchestrator 65. The optical transmission device controller 35 performs control according to the received optical path generation instruction. The control performed by the optical transmission device controller 35 is similar to that in the first embodiment.

### (Modification 3 of First Embodiment)

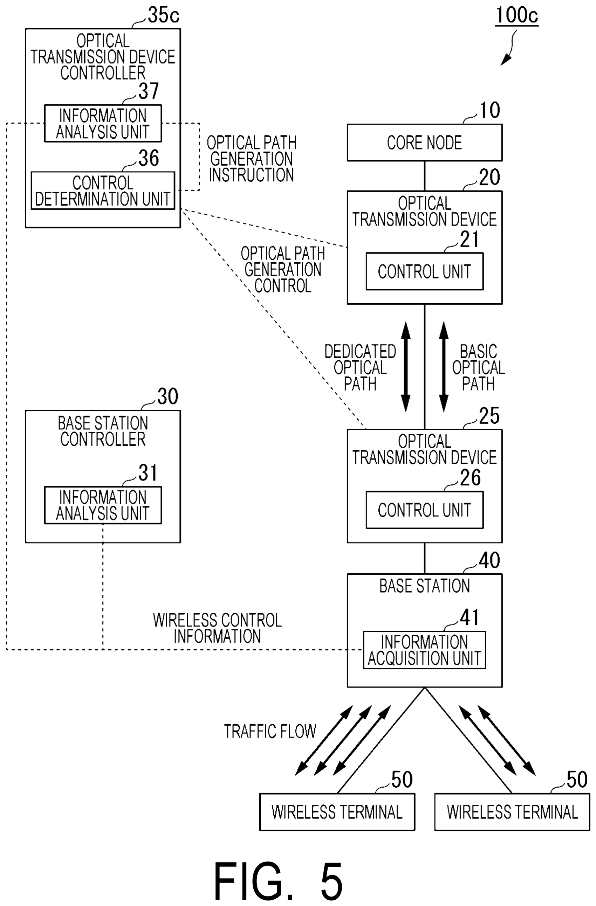

The signal transfer system 100 may be configured as illustrated in Fig. 5. Fig. 5 is a diagram illustrating a configuration example of a signal transfer system 100c according to Modification 3 of the first embodiment. The signal transfer system 100c includes, for example, the core node 10, the one or more optical transmission devices 20 and 25, the base station controller 30, an optical transmission device controller 35c, and the one or more base stations 40. The signal transfer system 100c is different in configuration from the signal transfer system 100 in including the optical transmission device controller 35c instead of the optical transmission device controller 35. Hereinafter, differences from the signal transfer system 100 will be mainly described.

The optical transmission device controller 35c includes the control determination unit 36 and an information analysis unit 37. The information analysis unit 37 performs processing similar to the information analysis unit 31 included in the base station controller 30. That is, the information analysis unit 37 receives the wireless control information. The information analysis unit 37 determines necessity of generation of the dedicated optical path on the basis of the wireless control information. In a case of determining that the dedicated optical path is necessary, the information analysis unit 37 generates the optical path generation instruction. The information analysis unit 37 outputs the generated optical path generation instruction to the control determination unit 36. The control determination unit 36 performs control according to the optical path generation instruction output from the information analysis unit 37. The control performed by the optical transmission device controller 35 is similar to that in the first embodiment.

As described above, the optical transmission device controller 35c does not acquire the optical path generation instruction from the base station controller 30, but the optical transmission device controller 35c acquires the optical path generation instruction from the information analysis unit 37. The base station controller 30 and the optical transmission device controller 35c have a common control determination criterion, so that the optical transmission device controller 35c can perform the optical path generation control at timing desired by the base station controller 30 and the base station 40 even if there is no optical path generation instruction of the base station controller 30. Note that the common control determination criterion may be provided to the base station controller 30 and the optical transmission device controller 35c from the beginning at the time of installing the controllers, or an instruction may be received from the orchestrator 65 described in Modification 2.

### (Application Example 1 of First Embodiment)

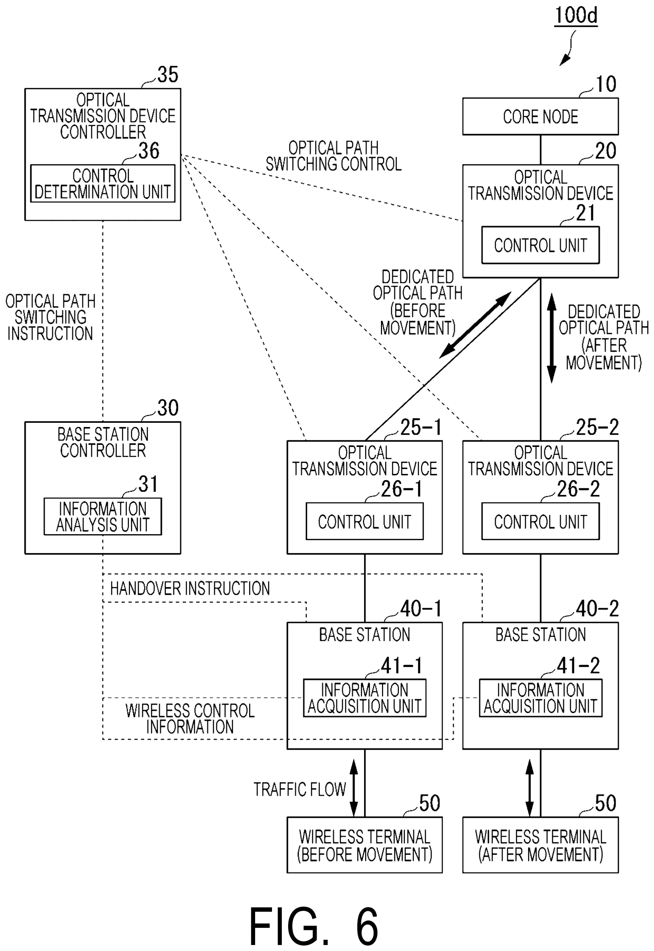

Next, an application example of the signal transfer system 100 in the first embodiment will be described with reference to Figs. 6 to 9. Fig. 6 is a diagram illustrating a configuration example of an application example (part 1) of the signal transfer system 100 according to the first embodiment. In the application example (part 1) of the signal transfer system 100, switching of the dedicated optical path according to handover will be described.

In a case of generating the dedicated optical path for each traffic flow, it is necessary to switch the dedicated optical path when the wireless terminal 50 moves. However, in the related art, the basic path is only generated for each base station 40, and there is no control method for switching the dedicated optical path according to the movement of the wireless terminal 50.

Therefore, in the application example (part 1) of the signal transfer system 100, first, the wireless control information for each wireless terminal 50 is transmitted from the base station 40 to the base station controller 30. The base station controller 30 detects the movement of the wireless terminal 50 on the basis of the wireless control information, determines implementation of the handover, and instructs the optical transmission device controller 35 to switch the dedicated optical path according to the handover. The optical transmission device controller 35 instructs each optical transmission device 25 to switch the path of the dedicated optical path on the basis of the instruction from the base station controller 30. By such control, it is possible to switch the path of the dedicated optical path generated on the basis of a specific traffic flow in the wireless terminal 50 according to the movement of the wireless terminal 50. Hereinafter, a configuration for implementing the above processing will be described.

As illustrated in Fig. 6, a signal transfer system 100d includes, for example, the core node 10, the one or more optical transmission devices 20 and 25, the base station controller 30, the optical transmission device controller 35, and the one or more base stations 40. Fig. 6 illustrates a configuration in which the signal transfer system 100d includes the two optical transmission devices 25 (for example, optical transmission devices 25-1 and 25-2) and the two base stations 40 (for example, base stations 40-1 and 40-2), but the number of the optical transmission devices 25 and the number of the base stations 40 may be three or more.

The core node 10 and the optical transmission device 20, the optical transmission device 20 and the optical transmission device 25-1, the optical transmission device 20 and the optical transmission device 25-2, the optical transmission device 25-1 and the base station 40-1, and the optical transmission device 25-2 and the base station 40-2 are connected by an optical transmission line.

Functional units included in the optical transmission devices 20, 25-1, and 25-2, the base station controller 30, the optical transmission device controller 35, and the base stations 40-1 and 40-2 are similar to those of the signal transfer system 100. Operation in some devices is different from that of the signal transfer system 100. Hereinafter, differences from the signal transfer system 100 will be mainly described.

It is assumed that the base station 40-1 is a base station (movement source base station) that performs communication before the wireless terminal 50 moves, and the base station 40-2 is a base station (movement destination base station) that performs communication after the wireless terminal 50 moves. Moreover, it is assumed that the dedicated optical path is generated by the method illustrated in Fig. 2 between the optical transmission device 20 and the optical transmission device 25-1 connected to the base station 40-1. In such a case, the wireless terminal 50 communicates with the core node 10 via the base station 40-1, the optical transmission device 25-1, and the optical transmission device 20 before moving.

The base station 40 includes the information acquisition unit 41. The information acquisition unit 41 acquires the wireless control information for each traffic flow exchanged between the wireless terminal 50 and the core node 10. The information acquisition unit 41 transfers the acquired wireless control information to the base station controller 30.

The base station controller 30 includes an information analysis unit 31. The information analysis unit 31 acquires the wireless control information acquired by the information acquisition unit 41 of each base station 40. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information received from the base station 40. In a case of determining that the handover is necessary, the information analysis unit 31 instructs the target base station 40 to perform the handover. Moreover, in the case of determining that the handover is necessary, the information analysis unit 31 transmits an optical path switching instruction to the optical transmission device controller 35. The optical path switching instruction is a control signal for providing notification that switching of the optical path is necessary.

When transmitting the optical path switching instruction, the information analysis unit 31 notifies the optical transmission device controller 35 of information indicating the base station 40 as a switching source, information indicating the base station 40 as a switching destination, and the optical path identifier of the dedicated optical path.

The optical transmission device controller 35 includes the control determination unit 36. When the optical path generation instruction is received from the base station controller 30, the control determination unit 36 performs the optical path generation control of the dedicated optical path for the optical transmission devices 20 and 25. Moreover, when the optical path switching instruction is received from the base station controller 30, the control determination unit 36 performs optical path switching control of the dedicated optical path for the optical transmission devices 20 and 25.

The optical transmission device 20 includes the control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35. Moreover, the control unit 21 switches the dedicated optical path in a predetermined section according to the optical path switching control of the optical transmission device controller 35. Here, the optical path switching control may be performed in a way of further generating another dedicated optical path for the path after the switching and deleting the dedicated optical path of the path before the switching, or may be performed in a way of switching an output port of the optical transmission device 20 (for example, switching an output port of the optical transmission device 20 from for the optical transmission device 25-1 to for the optical transmission device 25-2) while keeping one dedicated optical path.

The optical transmission devices 25-1 and 25-2 include control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35. Moreover, the control units 26-1 and 26-2 switch the dedicated optical path in a predetermined section according to the optical path switching control of the optical transmission device controller 35.

In the signal transfer system 100d, the information analysis unit 31 is included in a control unit of the base station controller 30, the control determination unit 36 is included in a control unit of the optical transmission device controller 35, and the information acquisition unit 41 is included in a control unit of the base station 40.

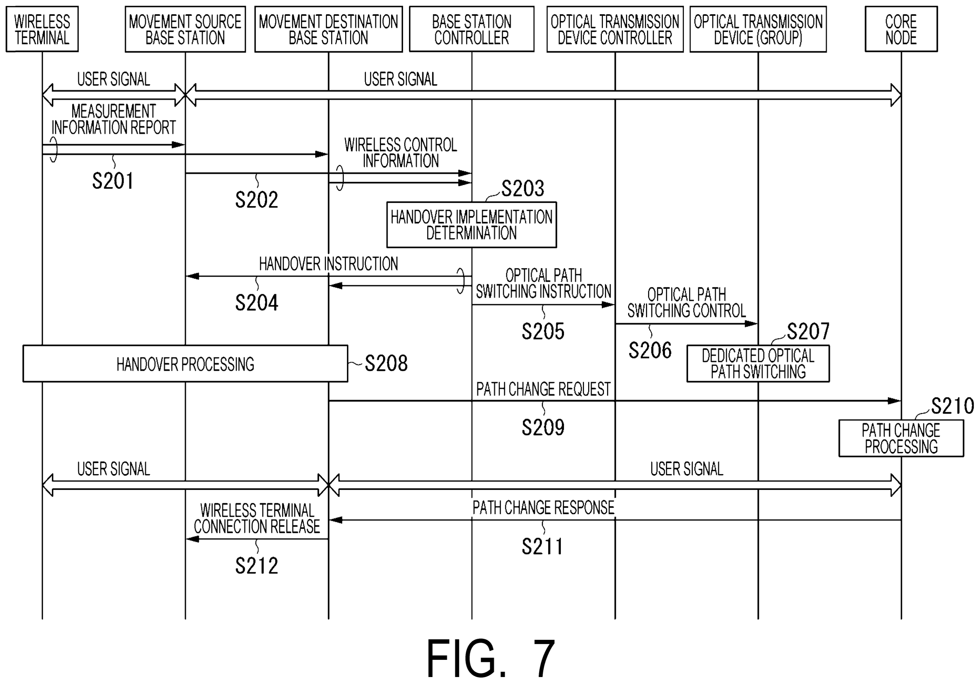

Fig. 7 is a sequence diagram illustrating a flow of processing of the signal transfer system 100d according to the first embodiment. Note that, in Fig. 7, the optical transmission devices 20 and 25 are collectively referred to as an optical transmission device (group). At the start of the processing of Fig. 7, it is assumed that the wireless terminal 50 is connected to the base station 40-1 as a movement source base station. Therefore, a user signal transmitted from the wireless terminal 50 is transferred to the core node 10 via the base station 40-1.

The wireless terminal 50 transmits measurement information to each of the base stations 40-1 and 40-2 (step S201). Here, it is assumed that the wireless terminal 50 moves near the base station 40-2 in response to movement of the user of the wireless terminal 50. The information acquisition units 41-1 and 41-2 of the base stations 40-1 and 40-2 acquire the measurement information transmitted from the wireless terminal 50. The information acquisition units 41-1 and 41-2 transfer the acquired measurement information to the base station controller 30 as the wireless control information (step S202).

The information analysis unit 31 of the base station controller 30 determines whether or not the handover is necessary on the basis of the wireless control information transferred from each of the base stations 40-1 and 40-2 (step S203). Here, it is assumed that it is determined that the handover is necessary. The information analysis unit 31 of the base station controller 30 instructs the target base station 40 to perform the handover (step S204).

Further, the information analysis unit 31 transmits the optical path switching instruction to the optical transmission device controller 35 (step S205). The control determination unit 36 of the optical transmission device controller 35 receives the optical path switching instruction transmitted from the base station controller 30. The control determination unit 36 performs the optical path switching control of the dedicated optical path for the optical transmission devices 20 and 25 in response to the received optical path switching instruction (step S206). For example, the control determination unit 36 instructs the optical transmission devices 20 and 25 to switch the dedicated optical path from between the optical transmission device 20 and the optical transmission device 25-1 to between the optical transmission devices 20 and the optical transmission device 25-2.

The control units 21 and 26 of the optical transmission devices 20 and 25 switch the dedicated optical path according to the optical path switching control from the optical transmission device controller 35 (step S207). Specifically, the control unit 26-1 of the optical transmission device 25-1 deletes the dedicated optical path to the optical transmission device 20. The control unit 26-2 of the optical transmission device 25-2 generates the dedicated optical path to the optical transmission device 20. The control unit 21 of the optical transmission device 20 performs switching so as to form the dedicated optical path to the optical transmission device 25. Thereby, the dedicated optical path is opened between the optical transmission device 20 and the optical transmission device 25-2.

The base stations 40-1 and 40-2 switch the connection with the wireless terminal 50 in response to the handover instruction from the base station controller 30 (step S208). As a result, for example, the base station 40 serving as a connection destination of the wireless terminal 50 is switched from the base station 40-1 to the base station 40-2. When the connection switching is completed, the control unit 26-2 of the optical transmission device 25-2 transmits a path change request to the core node 10 (step S209).

The core node 10 receives the path change request transmitted from the optical transmission device 25-2. The core node 10 performs path change processing in response to the received path change request (step S210). Specifically, in a case of transmitting a signal addressed to the wireless terminal 50, the core node 10 performs path change so as to provide a path through the optical transmission device 25-2. As a result, the user signal transmitted from the wireless terminal 50 is transferred to the core node 10 via the base station 40-2. Here, the deletion of the dedicated optical path between the optical transmission device 25-1 and the optical transmission device 20 described above may be performed at the time when the processing of step S210 is completed and the path between the optical transmission device 25-1 and the optical transmission device 20 becomes unnecessary.

When the path change processing is completed, the core node 10 transmits a path change response indicating that the path change process is completed to the base station 40-2 (step S211). The base station 40-2 receives the path change response transmitted from the core node 10. In response to the received path change response, the base station 40-2 causes the base station 40-1 as the movement source base station to release the connection of the wireless terminal 50 (step S212).

According to the signal transfer system 100d configured as described above, it is possible to cope with the handover due to the movement of the wireless terminal 50 while reducing the delay in the dedicated optical path.

### (Modification of Application Example 1 of First Embodiment)

The signal transfer system 100d may be modified as in Modification 1, Modification 2, and Modification 3 in the first embodiment.

### (Application Example 2 of First Embodiment)

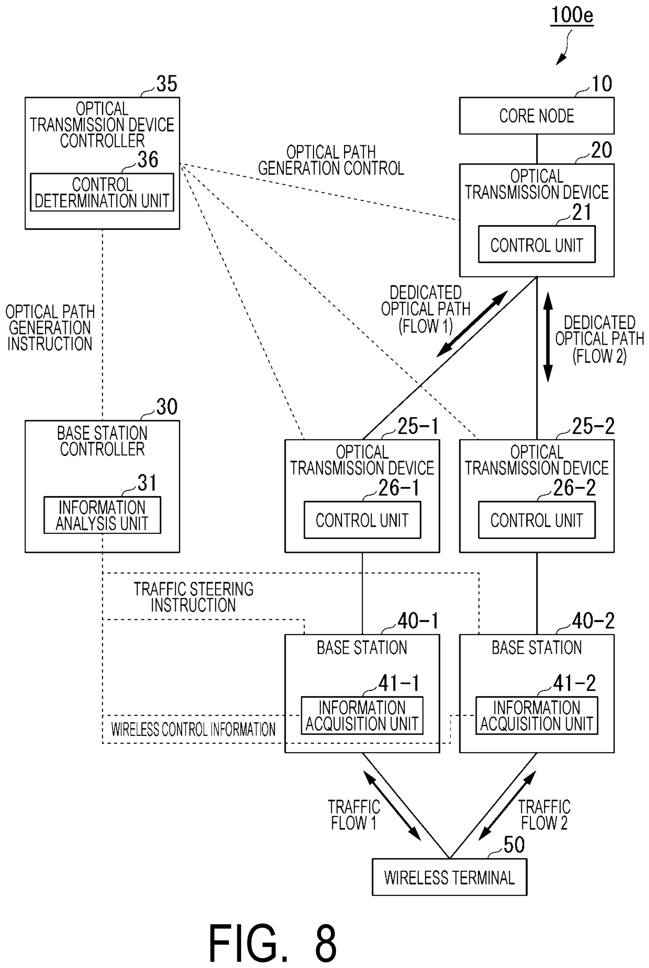

Next, an application example of the signal transfer system 100 in the first embodiment will be described. Fig. 8 is a diagram illustrating a configuration example of an application example (part 2) of the signal transfer system 100 according to the first embodiment. In the application example (part 2) of the signal transfer system 100, generation of the dedicated optical path for each base station according to traffic steering will be described. The traffic steering is a method of dividing the base stations as connection destinations for each of the traffic flows having different traffic amounts and priorities.

In the traffic steering, the dedicated optical path needs to be generated for each traffic flow, but in the related art, the basic path is only generated for each base station, and there is no control method for generating the dedicated optical path according to a setting of the traffic steering.

Therefore, in the application example (part 2) of the signal transfer system 100, first, the wireless control information for each wireless terminal 50 is transmitted from the base station 40 to the base station controller 30. Next, the base station controller 30 determines a connection destination base station of the wireless terminal 50 according to the traffic flow of the special wireless terminal 50. Next, the base station controller 30 executes setting of the connection destination base station according to the traffic flow for each base station 40, and instructs the optical transmission device controller 35 to generate the dedicated optical path for the connection base station. The optical transmission device controller 35 that has received the instruction executes dedicated optical path generation for the connection destination base station of the wireless terminal 50 according to the traffic flow. With the above control, it is possible to generate the dedicated optical path set for each traffic flow. Hereinafter, a configuration for implementing the above processing will be described.

As illustrated in Fig. 8, the signal transfer system 100e includes, for example, a core node 10, one or more optical transmission devices 20 and 25, a base station controller 30, an optical transmission device controller 35, and one or more base stations 40. Fig. 8 illustrates a configuration in which the signal transfer system 100e includes the two optical transmission devices 25 (for example, optical transmission devices 25-1 and 25-2) and the two base stations 40 (for example, base stations 40-1 and 40-2), but the number of the optical transmission devices 25 and the number of the base stations 40 may be three or more.

The core node 10 and the optical transmission device 20, the optical transmission device 20 and the optical transmission device 25-1, the optical transmission device 20 and the optical transmission device 25-2, the optical transmission device 25-1 and the base station 40-1, and the optical transmission device 25-2 and the base station 40-2 are connected by an optical transmission line.

Functional units included in the optical transmission devices 20, 25-1, and 25-2, the base station controller 30, the optical transmission device controller 35, and the base stations 40-1 and 40-2 are similar to those of the signal transfer system 100. Operation in some devices is different from that of the signal transfer system 100. Hereinafter, differences from the signal transfer system 100 will be mainly described.

It is assumed that the base station 40-1 is a base station that performs communication before the wireless terminal 50 performs the traffic steering. Moreover, it is assumed that the dedicated optical path is generated by the method illustrated in Fig. 2 between the optical transmission device 20 and the optical transmission device 25-1 connected to the base station 40-1. In such a case, the wireless terminal 50 communicates with the core node 10 via the base station 40-1, the optical transmission device 25-1, and the optical transmission device 20.

The base station 40 includes the information acquisition unit 41. The information acquisition unit 41 acquires the wireless control information for each traffic flow exchanged between the wireless terminal 50 and the core node 10. The information acquisition unit 41 transfers the acquired wireless control information to the base station controller 30.

The base station controller 30 includes an information analysis unit 31. The information analysis unit 31 acquires the wireless control information acquired by the information acquisition unit 41 of each base station 40. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information received from the base station 40. Here, a determination criterion as to whether the traffic steering is necessary may be determined in advance. For example, the information analysis unit 31 may determine that the traffic steering is necessary when different types of traffic flows are transmitted from the same wireless terminal 50. The different types of traffic flows are, for example, a traffic flow of voice and a traffic flow of mobile broadband (MBB) such as a video. In a case of determining that the traffic steering is necessary, the information analysis unit 31 instructs the target base station 40 to perform the traffic steering. Moreover, in a case of determining that traffic steering is necessary, the information analysis unit 31 transmits the optical path generation instruction to the optical transmission device controller 35. In this case, when transmitting the optical path generation instruction, the information analysis unit 31 notifies the optical transmission device controller 35 of the optical path identifier of the dedicated optical path to be generated in each optical transmission device 25 connected to each base station 40.

The optical transmission device controller 35 includes the control determination unit 36. When the optical path generation instruction is received from the base station controller 30, the control determination unit 36 performs the optical path generation control of the dedicated optical path for the optical transmission devices 20 and 25. For example, in a case where the optical path identifier of the dedicated optical path generated in each of the optical transmission devices 25 is included in the optical path generation instruction, the control determination unit 36 instructs the optical transmission devices 25-1 and 25-2 to generate the dedicated optical paths having different wavelengths.

The optical transmission device 20 includes the control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35.

The optical transmission devices 25-1 and 25-2 include the control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35.

Note that the information analysis unit 31 of the base station controller 30 may determine release of the traffic steering on the basis of the wireless control information transferred from the base station 40 in a similar procedure to the above procedure, and instruct the optical transmission device controller 35 to delete the dedicated optical path. In this case, the control determination unit 36 of the optical transmission device controller 35 performs control to delete the dedicated optical path for the optical transmission devices 20 and 25 targeted for deletion of the dedicated optical path.

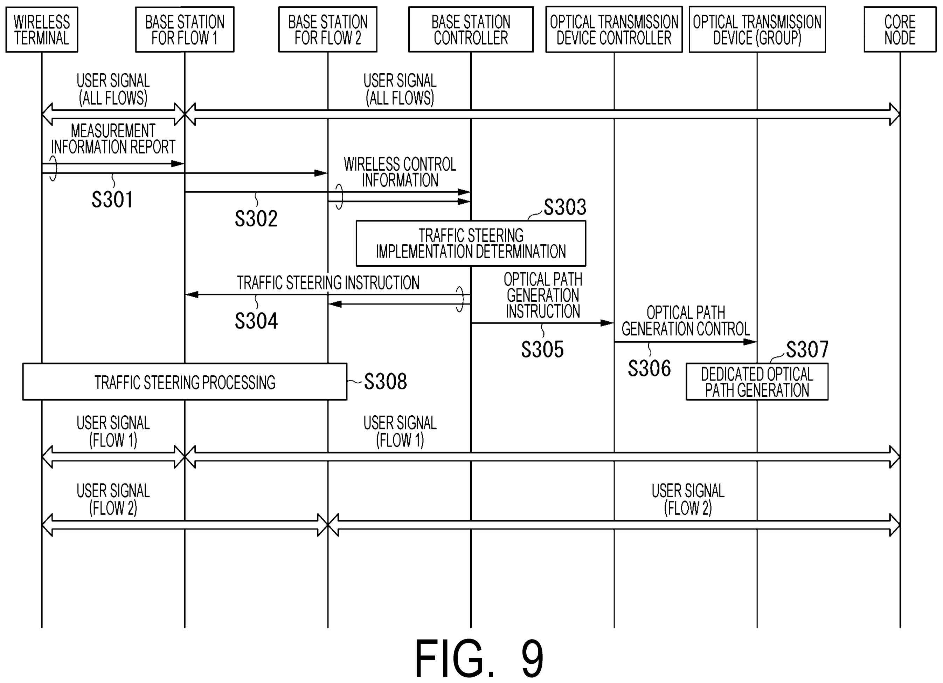

Fig. 9 is a sequence diagram illustrating a flow of processing of the signal transfer system 100e according to the first embodiment. Note that, in Fig. 9, the optical transmission devices 20 and 25 are collectively referred to as an optical transmission device (group). At the start of the processing of Fig. 9, it is assumed that the wireless terminal 50 is connected to the base station 40-1. Therefore, user signals (all flows) transmitted from the wireless terminal 50 are transferred to the core node 10 via the base station 40-1. Here, as an example, description will be given assuming that the base station 40-1 is a macrocell base station of a radio wave in a low frequency band having a wide cover area and a small band, and the base station 40-2 is a small cell base station of a radio wave in a high frequency band having a narrow cover area and a large band. Moreover, as an example, it is assumed that Traffic Flow 1 is a voice traffic flow and Traffic Flow 2 is a video traffic flow.

The wireless terminal 50 transmits measurement information to each of the base stations 40-1 and 40-2 (step S301). The information acquisition units 41-1 and 41-2 of the base stations 40-1 and 40-2 acquire the measurement information transmitted from the wireless terminal 50. The information acquisition units 41-1 and 41-2 transfer the acquired measurement information to the base station controller 30 as the wireless control information (step S302).

The information analysis unit 31 of the base station controller 30 determines whether or not the traffic steering is necessary on the basis of the wireless control information transferred from each of the base stations 40-1 and 40-2 (step S303). Here, it is assumed that it is determined that the traffic steering is necessary. The information analysis unit 31 of the base station controller 30 instructs the target base station 40 to perform the traffic steering (step S304).

Further, the information analysis unit 31 transmits the optical path generation instruction to the optical transmission device controller 35 (step S305). The control determination unit 36 of the optical transmission device controller 35 receives the optical path generation instruction transmitted from the base station controller 30. The control determination unit 36 performs the optical path generation control of the dedicated optical path for the optical transmission devices 20 and 25 in response to the received optical path generation instruction (step S306). For example, the control determination unit 36 instructs the optical transmission device 20 and the optical transmission device 25-1 to generate the dedicated optical path for Traffic Flow 1, and instructs the optical transmission device 20 and the optical transmission device 25-2 to generate the dedicated optical path for Traffic Flow 2.

The control units 21 and 26 of the optical transmission devices 20 and 25 generate the dedicated optical path according to the optical path generation control from the optical transmission device controller 35 (step S307). Specifically, the control unit 26-1 of the optical transmission device 25-1 generates the dedicated optical path to the optical transmission device 20 for Traffic Flow 1. The control unit 26-2 of the optical transmission device 25-2 generates the dedicated optical path for Traffic Flow 2.

The base stations 40-1 and 40-2 set the traffic steering in response to the instruction to execute the traffic steering from the base station controller 30 (step S308). For example, the base stations 40-1 and 40-2 perform connection change such that Traffic Flow 1 related to voice is transmitted and received by the base station 40-1, and Traffic Flow 2 related to video is transmitted and received by the base station 40-2. As a result, for example, Traffic Flow 1 transmitted from the wireless terminal 50 is transmitted to the base station 40-1, and Traffic Flow 2 transmitted from the wireless terminal 50 is transmitted to the base station 40-2.

According to the signal transfer system 100e configured as described above, it is possible to support the traffic steering of dividing the connection destination base station for each traffic flow of the wireless terminal 50 while reducing a delay in the dedicated optical path.

### (Modification of Application Example 2 of First Embodiment)

The signal transfer system 100e may be modified as in Modification 1, Modification 2, and Modification 3 in the first embodiment.

### (Second Embodiment)

In a second embodiment, a signal transfer system using a central station and a distributed station arranged in a distributed manner as a base station will be described. More specifically, in the second embodiment, an optical transmission device is installed in a section called mobile midhaul (MMH), and performs optical path generation or switching according to control of an optical transmission device controller.

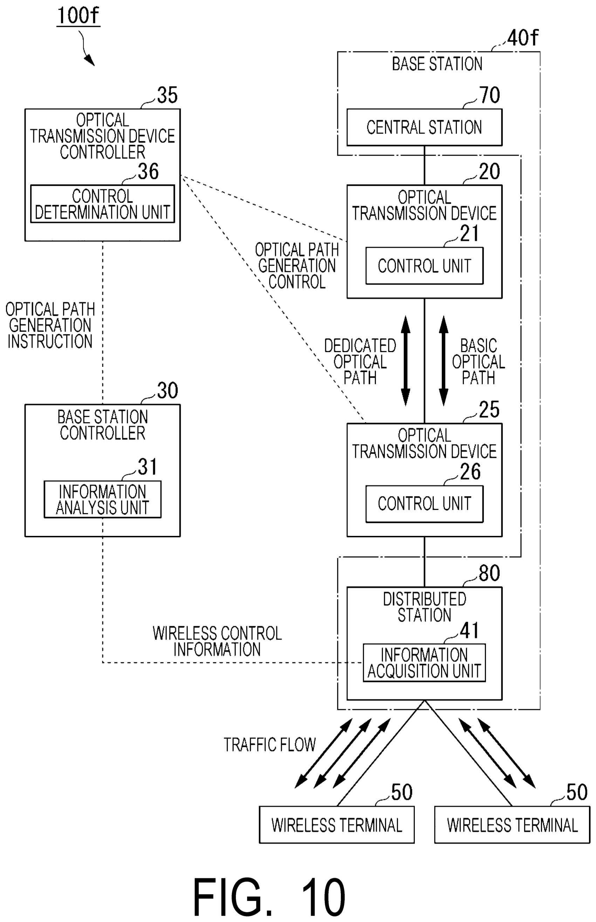

Fig. 10 is a diagram illustrating a configuration example of a signal transfer system 100f in the second embodiment. The signal transfer system 100f includes, for example, one or more optical transmission devices 20 and 25, a base station controller 30, an optical transmission device controller 35, and one or more base stations 40f. The base station 40f includes a central station 70 and one or more distributed stations 80. As described above, the signal transfer system 100f is different in configuration from the signal transfer system 100 in not including the core node 10 but including the base station 40f including the central station 70 and the one or more distributed stations 80 instead of the base station 40. Hereinafter, differences from the signal transfer system 100 will be mainly described.

The central station 70 and the one or more distributed stations 80 are configured using, for example, a processor such as a CPU, a memory, and a communication interface. Each device of the central station 70 and the one or more distributed stations 80 functions as a communication device including a control unit when the processor executes a program.

The control unit provides each function for causing the communication device to function as the central station 70 or the distributed station 80. Note that all or some of the functions of the control unit may be implemented by using hardware such as an ASIC, a PLD, or an FPGA. The program may be recorded on a computer-readable recording medium. The computer-readable recording medium is, for example, a portable medium such as a flexible disk, a magneto-optical disk, a ROM, a CD-ROM, or a semiconductor storage device (for example, SSD), or a storage device such as a hard disk or a semiconductor storage device built in a computer system. The above-described program may be transmitted via a telecommunication line.

For example, the central station 70 in the second embodiment is one or more central units (CUs) in a mobile communication system, and the one or more distributed stations 80 are distributed units (DUs) in the mobile communication system. In this case, a CU-DU section where the optical transmission devices 20 and 25 are installed is referred to as a mobile midhaul (MMH).

Note that the central station 70 may be a Wi-Fi controller, and the one or more distributed stations 80 may be Wi-Fi access points. The signal transfer system 100b is not necessarily applied to the mobile communication system, and may be applied to a wireless communication system other than the mobile communication system.

The optical transmission devices 20 and 25 perform processing similar to that of the device of the same name described in the first embodiment.

The central station 70 is a device that communicates with each of one or more wireless terminals 50 wirelessly connected to each distributed station 80. For example, the central station 70 receives an uplink signal transmitted from the wireless terminal 50 and transmits a downlink signal to the wireless terminal 50. The central station 70 is an aspect of an upper device.

The distributed station 80 is a device that communicates with the wireless terminal 50. The distributed station 80 transmits a signal transferred from the optical transmission device 25 to the wireless terminal 50 or transfers a signal received from the wireless terminal 50 to the optical transmission device 25 as a transfer destination by communication with the wireless terminal 50.

The distributed station 80 includes an information acquisition unit 41. The information acquisition unit 41 included in the distributed station 80 acquires wireless control information for each traffic flow exchanged between a wireless terminal 50 and the core node 10. The information acquisition unit 41 included in the distributed station 80 notifies the base station controller 30 of the acquired wireless control information.

In the signal transfer system 100f according to the second embodiment, an information analysis unit 31 is included in a control unit of the base station controller 30, a control determination unit 36 is included in a control unit of the optical transmission device controller 35, and the information acquisition unit 41 is included in a control unit of the distributed station 80.

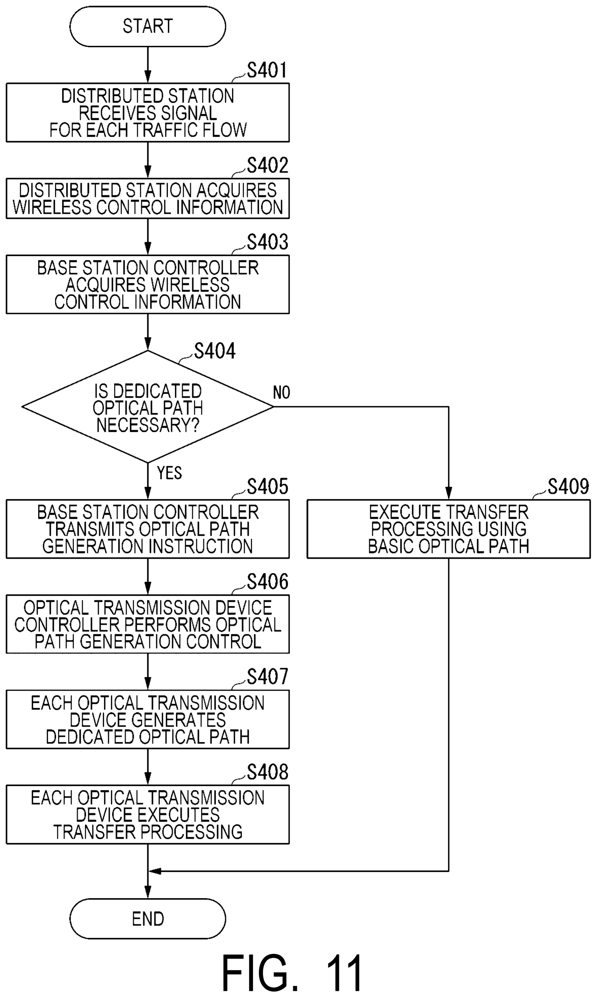

Fig. 11 is a flowchart illustrating an example of a flow of processing executed by the signal transfer system 100f in the second embodiment. In the signal transfer system 100f, the processing illustrated in Fig. 11 is repeatedly performed. Note that it is assumed that a basic optical path is generated in a wired section from the central station 70 to the distributed station 80 at the start of the processing in Fig. 11.

The distributed station 80 receives a signal of each traffic flow (step S401). The information acquisition unit 41 included in the distributed station 80 acquires the wireless control information for each traffic flow on the basis of the received signal (step S402). The information acquisition unit 41 transmits the acquired wireless control information to the base station controller 30.

The information analysis unit 31 included in the base station controller 30 acquires the wireless control information transmitted from the information acquisition unit 41 (step S403). Note that the information analysis unit 31 of the base station controller 30 may acquire information from an outside, such as movement information of an automobile or a trajectory of a drone, as the wireless control information. The information analysis unit 31 determines whether or not a dedicated optical path is necessary on the basis of the acquired wireless control information (step S404). In a case where the information analysis unit 31 determines that the dedicated optical path is necessary (YES in step S404), the information analysis unit 31 transmits an optical path generation instruction to the optical transmission device controller 35 (step S405).

The control determination unit 36 included in the optical transmission device controller 35 acquires the optical path generation instruction transmitted from the base station controller 30. The control determination unit 36 performs optical path generation control for each of the optical transmission devices 20 and 25 on the basis of the acquired optical path generation instruction (step S406). As a result, control units 21 and 26 of the respective optical transmission devices 20 and 25 generate the dedicated optical path between the optical transmission device 20 and the optical transmission device 25 (step S407). Thereafter, each of the optical transmission devices 20 and 25 performs transfer processing of an input optical signal (step S408).

Specifically, the distributed station 80 converts the signal transmitted from the wireless terminal 50 into an optical signal and outputs the optical signal to the optical transmission device 25. The optical transmission device 25 receives an optical signal output from the distributed station 80. The control unit 26 of the optical transmission device 25 determines which of the basic optical path or the dedicated optical path the received optical signal is output to on the basis of the received optical signal and an optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 25 is input to the optical transmission device 20 via the optical path. The optical transmission device 20 receives the optical signal output from the optical transmission device 25. The control unit 21 of the optical transmission device 20 transmits the received optical signal to the central station 70 via an optical transmission line. Note that, in a case where the dedicated optical path is also generated between the central station 70 and the optical transmission device 20, the control unit 21 determines which of the basic optical path or the dedicated optical path the received optical signal is output to on the basis of the received optical signal and the optical path identifier. In this way, in the signal transfer system 100f, a signal based on a specific traffic flow can be transferred through the dedicated optical path.

In the processing of step S404, in a case where the information analysis unit 31 determines that the dedicated optical path is not necessary (NO in step S404), the information analysis unit 31 does not transmit the optical path generation instruction to the optical transmission device controller 35. As a result, the transfer processing using the basic optical path is executed in the wired section from the distributed station 80 to the central station 70 (step S409).

According to the signal transfer system 100f configured as described above, it is possible to obtain similar effects to those of the first embodiment even in the configuration in which the base station 40f is arranged in a distributed manner.

### (Modification 1 of Second Embodiment)

The signal transfer system 100f may be modified similarly to Modification 1 of the first embodiment. That is, the signal transfer system 100f may not include the base station controller 30 and the optical transmission device controller 35 but may newly include an optical wireless cooperation controller 60. Since a specific operation is similar to that of Modification 1 of the first embodiment, description thereof will be omitted.

### (Modification 2 of Second Embodiment)

The signal transfer system 100f may be modified similarly to Modification 2 of the first embodiment. That is, the signal transfer system 100f may further include an orchestrator 65. Since a specific operation is similar to that of Modification 2 of the first embodiment, description thereof will be omitted.

### (Modification 3 of Second Embodiment)

The signal transfer system 100f may be modified similarly to Modification 3 of the first embodiment. That is, the optical transmission device controller 35 in the signal transfer system 100f may further include an information analysis unit 37. Since a specific operation is similar to that of Modification 3 of the first embodiment, description thereof will be omitted.

### (Application Example 1 of Second Embodiment)

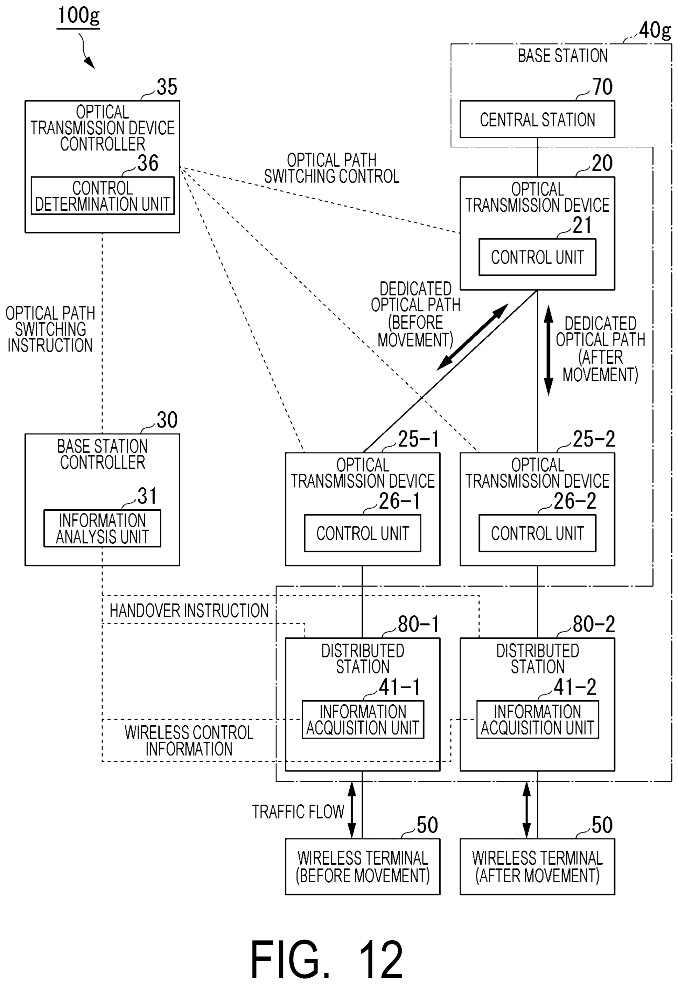

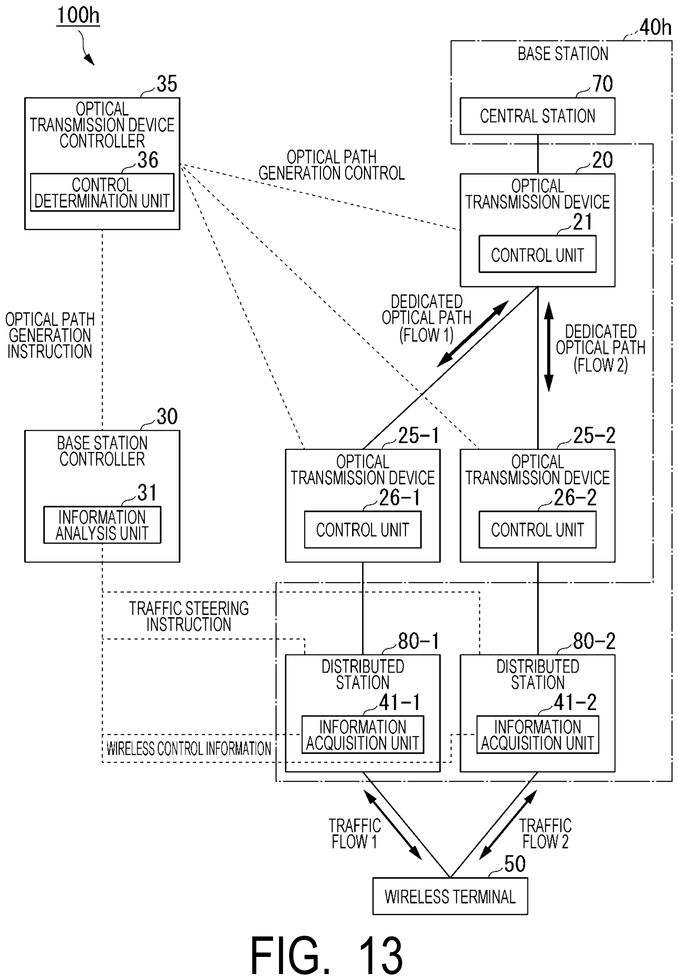

Next, an application example of the signal transfer system 100f in the second embodiment will be described with reference to Figs. 12 and 13. Fig. 12 is a diagram illustrating a configuration example of an application example (part 1) of the signal transfer system 100f according to the second embodiment. In the application example (part 1) of the signal transfer system 100f, switching of the dedicated optical path according to handover will be described.

As illustrated in Fig. 12, a signal transfer system 100g includes, for example, the one or more optical transmission devices 20 and 25, the base station controller 30, the optical transmission device controller 35, and one or more base stations 40g. The base station 40g includes a central station 70 and one or more distributed stations 80. Fig. 12 illustrates a configuration in which the signal transfer system 100g includes the two optical transmission devices 25 (for example, optical transmission devices 25-1 and 25-2) and the two distributed stations 80 (for example, distributed stations 80-1 and 80-2), but the number of the optical transmission devices 25 and the number of the distributed stations 80 may be three or more. Hereinafter, differences from the signal transfer system 100 will be mainly described.

It is assumed that the distributed station 80-1 is a distributed station (movement source distributed station) that performs communication before the wireless terminal 50 moves, and the distributed station 80-2 is a distributed station (movement destination distributed station) that performs communication after the wireless terminal 50 moves. Moreover, it is assumed that the dedicated optical path is generated by the method illustrated in Fig. 11 between the optical transmission device 20 and the optical transmission device 25-1 connected to the distributed station 80-1. In such a case, the wireless terminal 50 communicates with the central station 70 via the distributed station 80-1, the optical transmission device 25-1, and the optical transmission device 20 before moving.

The distributed station 80 includes an information acquisition unit 41. The information acquisition unit 41 acquires the wireless control information for each traffic flow exchanged between the wireless terminal 50 and the central station 70. The information acquisition unit 41 transfers the acquired wireless control information to the base station controller 30.

The base station controller 30 includes an information analysis unit 31. The information analysis unit 31 acquires the wireless control information acquired by the information acquisition unit 41 of each distributed station 80. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information received from the distributed station 80. In a case of determining that the handover is necessary, the information analysis unit 31 instructs the target distributed station 80 to perform the handover. Moreover, in the case of determining that the handover is necessary, the information analysis unit 31 transmits an optical path switching instruction to the optical transmission device controller 35.

When transmitting the optical path switching instruction, the information analysis unit 31 notifies the optical transmission device controller 35 of information indicating the distributed station 80 as a switching source, information indicating the distributed station 80 as a switching destination, and the optical path identifier of the dedicated optical path.

The optical transmission device controller 35 includes a control determination unit 36. When the optical path generation instruction is received from the base station controller 30, the control determination unit 36 performs the optical path generation control of the dedicated optical path for the optical transmission devices 20 and 25. Moreover, when the optical path switching instruction is received from the base station controller 30, the control determination unit 36 performs optical path switching control of the dedicated optical path for the optical transmission devices 20 and 25.

The optical transmission device 20 includes a control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35. Moreover, the control unit 21 switches the dedicated optical path in a predetermined section according to the optical path switching control of the optical transmission device controller 35. Here, the optical path switching control may be performed in a way of further generating another dedicated optical path for the path after the switching and deleting the dedicated optical path of the path before the switching, or may be performed in a way of switching an output port of the optical transmission device 20 (for example, switching an output port of the optical transmission device 20 from for the optical transmission device 25-1 to for the optical transmission device 25-2) while keeping one dedicated optical path.

The optical transmission devices 25-1 and 25-2 include control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35. Moreover, the control units 26-1 and 26-2 switch the dedicated optical path in a predetermined section according to the optical path switching control of the optical transmission device controller 35.

In the signal transfer system 100g, the information analysis unit 31 is included in the control unit of the base station controller 30, the control determination unit 36 is included in the control unit of the optical transmission device controller 35, and the information acquisition unit 41 is included in the control unit of the distributed station 80.

Since processing at the time of handover in the signal transfer system 100g is similar to the processing illustrated in Fig. 7, description thereof will be omitted. For example, a movement source base station in Fig. 7 may be set to a movement source distributed station, a movement destination base station may be set to a movement destination distributed station, and the core node 10 may be set to the central station 70.

According to the signal transfer system 100g configured as described above, it is possible to cope with the handover due to movement of the wireless terminal 50 while reducing a delay in the dedicated optical path.

### (Modification of Application Example 1 of Second Embodiment)

The signal transfer system 100g may be modified as in Modification 1, Modification 2, and Modification 3 in the second embodiment.

### (Application Example 2 of Second Embodiment)

Next, an application example of the signal transfer system 100f in the second embodiment will be described. Fig. 13 is a diagram illustrating a configuration example of an application example (part 2) of the signal transfer system 100f according to the second embodiment. In the application example (part 2) of the signal transfer system 100f, generation of the dedicated optical path for each base station according to traffic steering will be described.

As illustrated in Fig. 13, a signal transfer system 100h includes, for example, the one or more optical transmission devices 20 and 25, the base station controller 30, the optical transmission device controller 35, and one or more base stations 40h. The base station 40h includes the central station 70 and the one or more distributed stations 80. Fig. 13 illustrates a configuration in which a signal transfer system 100g includes the two optical transmission devices 25 (for example, optical transmission devices 25-1 and 25-2) and the two distributed stations 80 (for example, distributed stations 80-1 and 80-2), but the number of the optical transmission devices 25 and the number of the distributed stations 80 may be three or more.

The central station 70 and the optical transmission device 20, the optical transmission device 20 and the optical transmission device 25-1, the optical transmission device 20 and the optical transmission device 25-2, the optical transmission device 25-1 and the distributed station 80-1, and the optical transmission device 25-2 and the distributed station 80-2 are connected by an optical transmission line.

Functional units included in the optical transmission devices 20, 25-1, and 25-2, the base station controller 30, the optical transmission device controller 35, and the distributed stations 80-1 and 80-2 are similar to those of the signal transfer system 100f. Operation in some devices is different from that of the signal transfer system 100f. Hereinafter, differences from the signal transfer system 100f will be mainly described.

It is assumed that the distributed station 80-1 is a base station that performs communication before the wireless terminal 50 performs the traffic steering. Moreover, it is assumed that the dedicated optical path is generated by the method illustrated in Fig. 11 between the optical transmission device 20 and the optical transmission device 25-1 connected to the distributed station 80-1. In such a case, the wireless terminal 50 communicates with the central station 70 via the distributed station 80-1, the optical transmission device 25-1, and the optical transmission device 20.

The distributed station 80 includes the information acquisition unit 41. The information acquisition unit 41 acquires the wireless control information for each traffic flow exchanged between the wireless terminal 50 and the central station 70. The information acquisition unit 41 transfers the acquired wireless control information to the base station controller 30.

The base station controller 30 includes the information analysis unit 31. The information analysis unit 31 acquires the wireless control information acquired by the information acquisition unit 41 of each distributed station 80. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information received from the distributed station 80. In a case of determining that the traffic steering is necessary, the information analysis unit 31 instructs the target distributed station 80 to perform the traffic steering. Moreover, in a case of determining that traffic steering is necessary, the information analysis unit 31 transmits the optical path generation instruction to the optical transmission device controller 35. In this case, when transmitting the optical path generation instruction, the information analysis unit 31 notifies the optical transmission device controller 35 of the optical path identifier of the dedicated optical path to be generated in each optical transmission device 25 connected to each distributed station 80.

The optical transmission device controller 35 includes the control determination unit 36. When the optical path generation instruction is received from the base station controller 30, the control determination unit 36 performs the optical path generation control of the dedicated optical path for the optical transmission devices 20 and 25. For example, in a case where the optical path identifier of the dedicated optical path generated in each of the optical transmission devices 25 is included in the optical path generation instruction, the control determination unit 36 instructs the optical transmission devices 25-1 and 25-2 to generate the dedicated optical paths having different wavelengths.

The optical transmission device 20 includes the control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35.

The optical transmission devices 25-1 and 25-2 include the control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35.

Note that the information analysis unit 31 of the base station controller 30 may determine release of the traffic steering on the basis of the wireless control information transferred from the distributed station 80 in a similar procedure to the above procedure, and instruct the optical transmission device controller 35 to delete the dedicated optical path. In this case, the control determination unit 36 of the optical transmission device controller 35 performs control to delete the dedicated optical path for the optical transmission devices 20 and 25 targeted for deletion of the dedicated optical path.

Since processing at the time of traffic steering in the signal transfer system 100h is similar to the processing illustrated in Fig. 9, description thereof will be omitted. For example, the movement source base station in Fig. 9 may be set to the movement source distributed station, the movement destination base station may be set to the movement destination distributed station, and the core node 10 may be set to the central station 70.

According to the signal transfer system 100h configured as described above, it is possible to support the traffic steering of dividing the connection destination base station for each traffic flow of the wireless terminal 50 while reducing a delay in the dedicated optical path.

### (Modification of Application Example 2 of Second Embodiment)

The signal transfer system 100h may be modified as in Modification 1, Modification 2, and Modification 3 in the second embodiment.

### (Third Embodiment)

In a third embodiment, a signal transfer system using a central station and a distributed station arranged in a distributed manner as a base station will be described. More specifically, in the third embodiment, an optical transmission device is installed in a section called mobile fronthaull (MFH), and performs optical path generation or switching according to control of an optical transmission device controller.

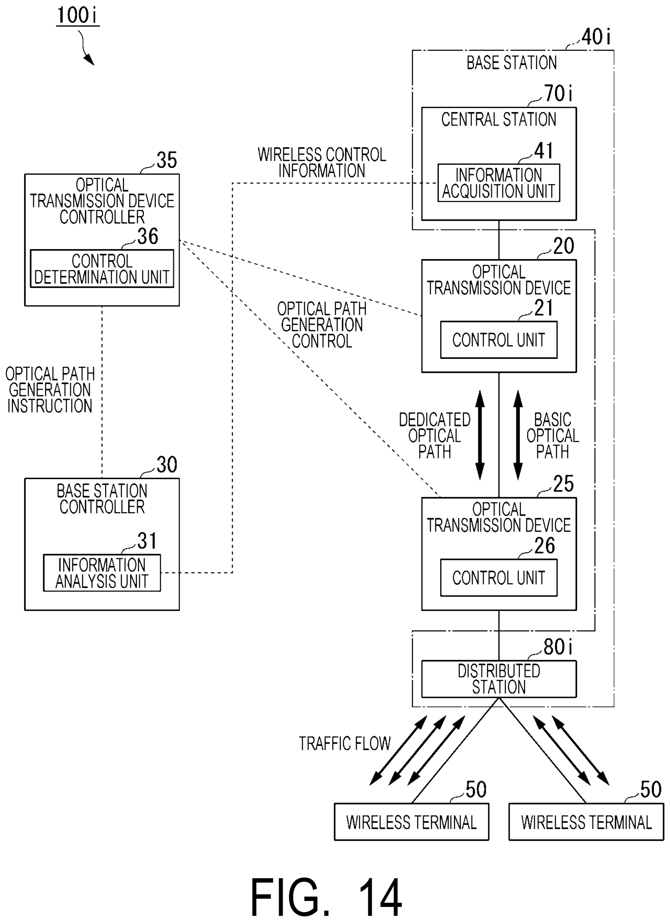

Fig. 14 is a diagram illustrating a configuration example of a signal transfer system 100i in the third embodiment. The signal transfer system 100i includes, for example, one or more optical transmission devices 20 and 25, a base station controller 30, an optical transmission device controller 35, and one or more base stations 40i. The base station 40i includes a central station 70i and one or more distributed stations 80i. As described above, the signal transfer system 100i is different in configuration from the signal transfer system 100 in not including the core node 10 but including the base station 40i including the central station 70i and the one or more distributed stations 80i instead of the base station 40. Hereinafter, differences from the signal transfer system 100 will be mainly described.

The central station 70i and the one or more distributed stations 80i are configured using, for example, a processor such as a CPU, a memory, and a communication interface. Each device of the central station 70i and the one or more distributed stations 80i functions as a communication device including a control unit when the processor executes a program.

The control unit provides each function for causing the communication device to function as the central station 70i or the distributed station 80i. Note that all or some of the functions of the control unit may be implemented by using hardware such as an ASIC, a PLD, or an FPGA. The program may be recorded on a computer-readable recording medium. The computer-readable recording medium is, for example, a portable medium such as a flexible disk, a magneto-optical disk, a ROM, a CD-ROM, or a semiconductor storage device (for example, SSD), or a storage device such as a hard disk or a semiconductor storage device built in a computer system. The above-described program may be transmitted via a telecommunication line.

For example, the central station 70i in the third embodiment is one or more DUs in a mobile communication system, and the one or more distributed stations 80i are radio units (RUs) in the mobile communication system. In this case, a DU-RU section in which the optical transmission devices 20 and 25 are installed is referred to as a mobile fronthaul (MFH).

Note that the central station 70i may be a Wi-Fi controller, and one or more distributed stations 80i may be Wi-Fi access points. The signal transfer system 100i is not necessarily applied to the mobile communication system, and may be applied to a wireless communication system other than the mobile communication system.

The optical transmission devices 20 and 25 perform processing similar to that of the device of the same name described in the first embodiment.

The central station 70i performs processing similar to the central station 70 in the second embodiment. Furthermore, the central station 70i includes an information acquisition unit 41. The information acquisition unit 41 included in the central station 70i acquires wireless control information for each traffic flow exchanged between a wireless terminal 50 and the central station 70i. The information acquisition unit 41 included in the central station 70i notifies the base station controller 30 of the acquired wireless control information.

The distributed station 80i is a device that communicates with the wireless terminal 50. The distributed station 80i transmits a signal transferred from the optical transmission device 25 to the wireless terminal 50 or transfers a signal received from the wireless terminal 50 to the optical transmission device 25 as a transfer destination by communication with the wireless terminal 50. Unlike the distributed station 80 in the second embodiment, the distributed station 80i does not include an information acquisition unit 41.

In the signal transfer system 100i according to the third embodiment, an information analysis unit 31 is included in a control unit of the base station controller 30, a control determination unit 36 is included in a control unit of the optical transmission device controller 35, and the information acquisition unit 41 is included in a control unit of the central station 70i.

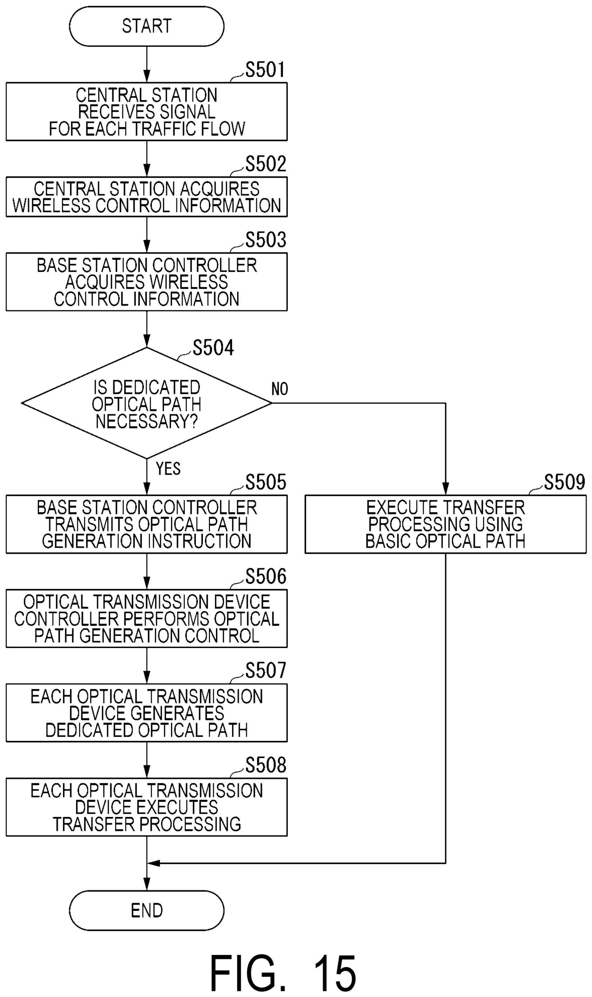

Fig. 15 is a flowchart illustrating an example of a flow of processing executed by the signal transfer system 100i in the third embodiment. In the signal transfer system 100i, the processing illustrated in Fig. 15 is repeatedly performed. Note that it is assumed that a basic optical path is generated in a wired section from the central station 70i to the distributed station 80i at the start of the processing in Fig. 15.

The distributed station 80i receives a signal of each traffic flow (step S501). The information acquisition unit 41 included in the distributed station 80i acquires the wireless control information for each traffic flow on the basis of the received signal (step S502). The information acquisition unit 41 transmits the acquired wireless control information to the base station controller 30.

The information analysis unit 31 included in the base station controller 30 acquires the wireless control information transmitted from the information acquisition unit 41 included in the distributed station 80i (step S503). Note that the information analysis unit 31 of the base station controller 30 may acquire information from an outside, such as movement information of an automobile or a trajectory of a drone, as the wireless control information. The information analysis unit 31 determines whether or not a dedicated optical path is necessary on the basis of the acquired wireless control information (step S504). In a case where the information analysis unit 31 determines that the dedicated optical path is necessary (YES in step S504), the information analysis unit 31 transmits an optical path generation instruction to the optical transmission device controller 35 (step S505).

The control determination unit 36 included in the optical transmission device controller 35 acquires the optical path generation instruction transmitted from the base station controller 30. The control determination unit 36 performs optical path generation control for each of the optical transmission devices 20 and 25 on the basis of the acquired optical path generation instruction (step S506). As a result, control units 21 and 26 of the respective optical transmission devices 20 and 25 generate the dedicated optical path between the optical transmission device 20 and the optical transmission device 25 (step S507). Thereafter, each of the optical transmission devices 20 and 25 performs transfer processing of an input optical signal (step S508).

Specifically, the distributed station 80i converts the signal transmitted from the wireless terminal 50 into an optical signal and outputs the optical signal to the optical transmission device 25. The optical transmission device 25 receives the optical signal output from the distributed station 80i. The control unit 26 of the optical transmission device 25 determines which of the basic optical path or the dedicated optical path the received optical signal is output to on the basis of the received optical signal and an optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 25 is input to the optical transmission device 20 via the optical path. The optical transmission device 20 receives the optical signal output from the optical transmission device 25. The control unit 21 of the optical transmission device 20 transmits the received optical signal to the central station 70i via the optical transmission line. Note that, in a case where the dedicated optical path is also generated between the central station 70i and the optical transmission device 20, the control unit 21 determines which of the basic optical path or the dedicated optical path the received optical signal is output to on the basis of the received optical signal and the optical path identifier. In this way, in the signal transfer system 100i, a signal based on a specific traffic flow can be transferred through the dedicated optical path.

In the processing of step S504, in a case where the information analysis unit 31 determines that the dedicated optical path is not necessary (NO in step S504), the information analysis unit 31 does not transmit the optical path generation instruction to the optical transmission device controller 35. As a result, the transfer processing using the basic optical path is executed in the wired section from the distributed station 80i to the central station 70i (step S509).

According to the signal transfer system 100i configured as described above, it is possible to obtain similar effects to those of the first embodiment even in the configuration in which the base station 40f is arranged in a distributed manner.

### (Modification 1 of Third Embodiment)

The signal transfer system 100i may be modified similarly to Modification 1 of the first embodiment. That is, the signal transfer system 100i may not include the base station controller 30 and the optical transmission device controller 35 but may newly include an optical wireless cooperation controller 60. Since a specific operation is similar to that of Modification 1 of the first embodiment, description thereof will be omitted.

### (Modification 2 of Third Embodiment)

The signal transfer system 100i may be modified similarly to Modification 2 of the first embodiment. That is, the signal transfer system 100i may further include an orchestrator 65. Since a specific operation is similar to that of Modification 2 of the first embodiment, description thereof will be omitted.

### (Modification 3 of Third embodiment)

The signal transfer system 100i may be modified similarly to Modification 3 of the first embodiment. That is, the optical transmission device controller 35 in the signal transfer system 100i may further include an information analysis unit 37. Since a specific operation is similar to that of Modification 3 of the first embodiment, description thereof will be omitted.

### (Application Example 1 of Third Embodiment)

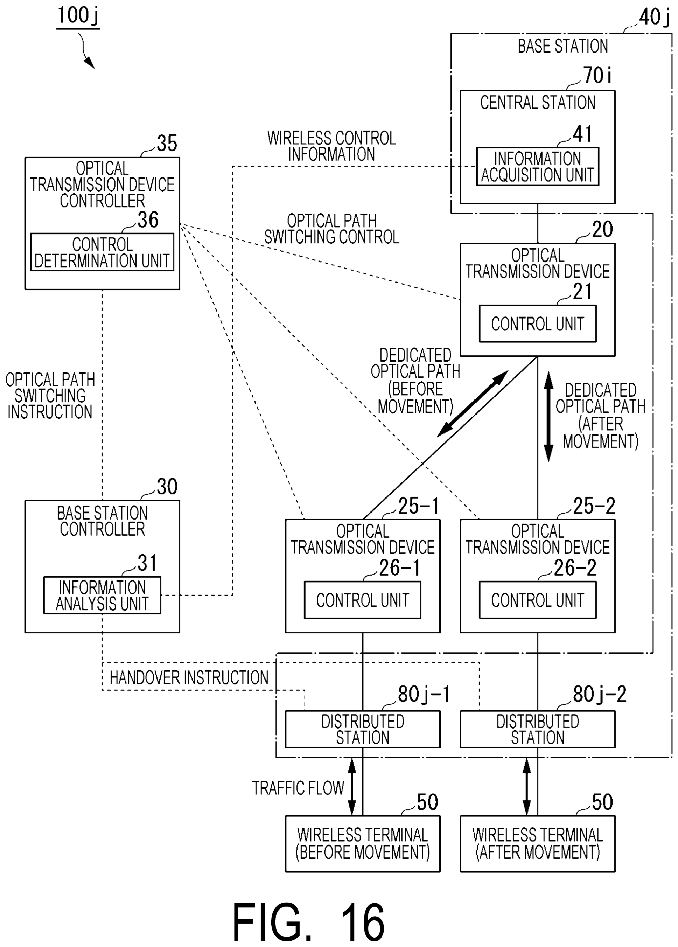

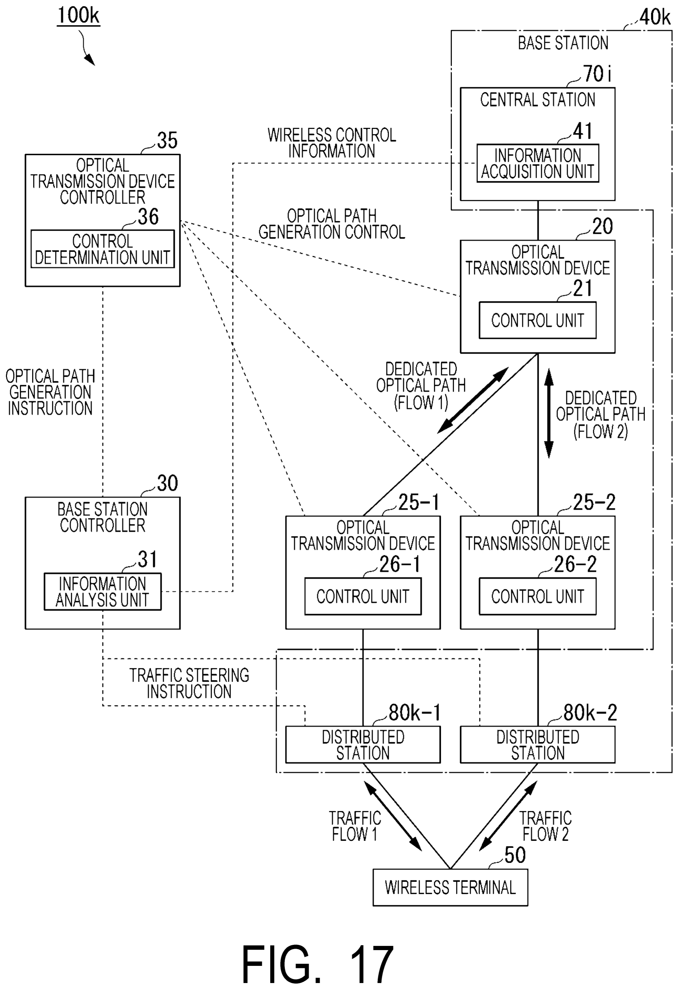

Next, an application example of the signal transfer system 100i in the third embodiment will be described with reference to Figs. 16 and 17. Fig. 16 is a diagram illustrating a configuration example of an application example (part 1) of the signal transfer system 100i according to the third embodiment. In the application example (part 1) of the signal transfer system 100i, switching of the dedicated optical path according to handover will be described.

As illustrated in Fig. 16, a signal transfer system 100j includes, for example, the one or more optical transmission devices 20 and 25, the base station controller 30, the optical transmission device controller 35, and one or more base stations 40j. The base station 40j includes the central station 70i and one or more distributed stations 80j. Fig. 16 illustrates a configuration in which the signal transfer system 100j includes the two optical transmission devices 25 (for example, optical transmission devices 25-1 and 25-2) and the two distributed stations 80j (for example, distributed stations 80j-1 and 80j-2), but the number of the optical transmission devices 25 and the number of the distributed stations 80j may be three or more. Hereinafter, differences from the signal transfer system 100 will be mainly described.

It is assumed that the distributed station 80j-1 is a distributed station (movement source distributed station) that performs communication before the wireless terminal 50 moves, and the distributed station 80j-2 is a distributed station (movement destination distributed station) that performs communication after the wireless terminal 50 moves. Moreover, it is assumed that the dedicated optical path is generated by the method illustrated in Fig. 15 between the optical transmission device 20 and the optical transmission device 25-1 connected to the distributed station 80j-1. In such a case, the wireless terminal 50 communicates with the central station 70i via the distributed station 80j-1, the optical transmission device 25-1, and the optical transmission device 20 before moving.

The base station controller 30 includes an information analysis unit 31. The information analysis unit 31 acquires the wireless control information acquired by the information acquisition unit 41. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information received from the distributed station 80j. In a case of determining that the handover is necessary, the information analysis unit 31 instructs the target distributed station 80j to perform the handover. Moreover, in the case of determining that the handover is necessary, the information analysis unit 31 transmits an optical path switching instruction to the optical transmission device controller 35.

When transmitting the optical path switching instruction, the information analysis unit 31 notifies the optical transmission device controller 35 of information indicating the distributed station 80j as a switching source, information indicating the distributed station 80j as a switching destination, and the optical path identifier of the dedicated optical path.

The optical transmission device controller 35 includes the control determination unit 36. When the optical path generation instruction is received from the base station controller 30, the control determination unit 36 performs the optical path generation control of the dedicated optical path for the optical transmission devices 20 and 25. Moreover, when the optical path switching instruction is received from the base station controller 30, the control determination unit 36 performs optical path switching control of the dedicated optical path for the optical transmission devices 20 and 25.

The optical transmission device 20 includes the control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35. Moreover, the control unit 21 switches the dedicated optical path in a predetermined section according to the optical path switching control of the optical transmission device controller 35. Here, the optical path switching control may be performed in a way of further generating another dedicated optical path for the path after the switching and deleting the dedicated optical path of the path before the switching, or may be performed in a way of switching an output port of the optical transmission device 20 (for example, switching an output port of the optical transmission device 20 from for the optical transmission device 25-1 to for the optical transmission device 25-2) while keeping one dedicated optical path.

The optical transmission devices 25-1 and 25-2 include control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35. Moreover, the control units 26-1 and 26-2 switch the dedicated optical path in a predetermined section according to the optical path switching control of the optical transmission device controller 35.

In the signal transfer system 100j, the information analysis unit 31 is included in a control unit of the base station controller 30, the control determination unit 36 is included in a control unit of the optical transmission device controller 35, and the information acquisition unit 41 is included in a control unit of the central station 70i.

Since processing at the time of handover in the signal transfer system 100i is similar to the processing illustrated in Fig. 7, description thereof will be omitted. For example, a movement source base station in Fig. 7 may be set to a movement source distributed station, a movement destination base station may be set to a movement destination distributed station, and the core node 10 may be set to the central station 70i.

According to the signal transfer system 100j configured as described above, it is possible to cope with the handover due to movement of the wireless terminal 50 while reducing a delay in the dedicated optical path.

### (Modification of Application Example 1 of Third Embodiment)

The signal transfer system 100j may be modified as in Modification 1, Modification 2, and Modification 3 in the third embodiment.

### (Application Example 2 of Third Embodiment)

Next, an application example of the signal transfer system 100i in the third embodiment will be described. Fig. 17 is a diagram illustrating a configuration example of an application example (part 2) of the signal transfer system 100i according to the third embodiment. In the application example (part 2) of the signal transfer system 100i, generation of the dedicated optical path for each base station according to traffic steering will be described.

As illustrated in Fig. 17, a signal transfer system 100k includes, for example, the one or more optical transmission devices 20 and 25, the base station controller 30, the optical transmission device controller 35, and one or more base stations 40k. The base station 40k includes the central station 70i and the one or more distributed stations 80k. Fig. 17 illustrates a configuration in which the signal transfer system 100k includes the two optical transmission devices 25 (for example, optical transmission devices 25-1 and 25-2) and the two distributed stations 80k (for example, distributed stations 80k-1 and 80k-2), but the number of the optical transmission devices 25 and the number of the distributed stations 80k may be three or more.

The central station 70i and the optical transmission device 20, the optical transmission device 20 and the optical transmission device 25-1, the optical transmission device 20 and the optical transmission device 25-2, the optical transmission device 25-1 and the distributed station 80k-1, and the optical transmission device 25-2 and the distributed station 80k-2 are connected by an optical transmission line.

Functional units included in the optical transmission devices 20, 25-1, and 25-2, the base station controller 30, the optical transmission device controller 35, and the central station 70i are similar to those of the signal transfer system 100i. Operation in some devices is different from that of the signal transfer system 100i. Hereinafter, differences from the signal transfer system 100i will be mainly described.

It is assumed that the distributed station 80k-1 is a base station that performs communication before the wireless terminal 50 performs the traffic steering. Moreover, it is assumed that the dedicated optical path is generated by the method illustrated in Fig. 15 between the optical transmission device 20 and the optical transmission device 25-1 connected to the distributed station 80k-1. In such a case, the wireless terminal 50 communicates with the central station 70i via the distributed station 80k-1, the optical transmission device 25-1, and the optical transmission device 20.

The base station controller 30 includes an information analysis unit 31. The information analysis unit 31 acquires the wireless control information acquired by the information acquisition unit 41 of the central station 70i. Note that the information analysis unit 31 of the base station controller 30 may acquire information from an outside, such as movement information of an automobile or a trajectory of a drone, as the wireless control information. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information received from the central station 70i. In a case of determining that the traffic steering is necessary, the information analysis unit 31 instructs the target distributed station 80k to perform the traffic steering. Moreover, in a case of determining that traffic steering is necessary, the information analysis unit 31 transmits the optical path generation instruction to the optical transmission device controller 35. In this case, when transmitting the optical path generation instruction, the information analysis unit 31 notifies the optical transmission device controller 35 of the optical path identifier of the dedicated optical path to be generated in each optical transmission device 25 connected to each distributed station 80k.

The optical transmission device controller 35 includes the control determination unit 36. When the optical path generation instruction is received from the base station controller 30, the control determination unit 36 performs the optical path generation control of the dedicated optical path for the optical transmission devices 20 and 25. For example, in a case where the optical path identifier of the dedicated optical path generated in each of the optical transmission devices 25 is included in the optical path generation instruction, the control determination unit 36 instructs the optical transmission devices 25-1 and 25-2 to generate the dedicated optical paths having different wavelengths.

The optical transmission device 20 includes the control unit 21. The control unit 21 generates the dedicated optical path in a predetermined section according to the optical path generation control of the optical transmission device controller 35. Moreover, when the optical signal is input after the generation of the dedicated optical path, the control unit 21 determines which of the basic optical path or the dedicated optical path the input optical signal is output to according to the optical path identifier notification of which is provided from the optical transmission device controller 35.

The optical transmission devices 25-1 and 25-2 include the control units 26-1 and 26-2. The control units 26-1 and 26-2 generate the dedicated optical path in a predetermined section according to the optical path generation control of the optical transmission device controller 35. Moreover, when the optical signal is input after the generation of the dedicated optical path, the control units 26-1 and 26-2 determine which of the basic optical path or the dedicated optical path the input optical signal is output to according to the optical path identifier notification of which is provided from the optical transmission device controller 35.

Note that the information analysis unit 31 of the base station controller 30 may determine release of the traffic steering on the basis of the wireless control information transferred from the distributed station 80k in a similar procedure to the above procedure, and instruct the optical transmission device controller 35 to delete the dedicated optical path. In this case, the control determination unit 36 of the optical transmission device controller 35 performs control to delete the dedicated optical path for the optical transmission devices 20 and 25 targeted for deletion of the dedicated optical path.

Since processing at the time of traffic steering in the signal transfer system 100k is similar to the processing illustrated in Fig. 9, description thereof will be omitted. For example, the base station (Flow 1) in Fig. 9 may be set to the distributed station 80k-1, the base station (Flow 2) may be set to the distributed station 80k-2, and the core node 10 may be set to the central station 70i.

According to the signal transfer system 100k configured as described above, it is possible to support the traffic steering of dividing the connection destination base station for each traffic flow of the wireless terminal 50 while reducing a delay in the dedicated optical path.

### (Modification of Application Example 2 of Third Embodiment)

The signal transfer system 100k may be modified as in Modification 1, Modification 2, and Modification 3 in the third embodiment.

### (Fourth Embodiment)

In a fourth embodiment, a configuration in which a signal transfer system does not include a base station controller and an optical transmission device controller, and a base station instructs each optical transmission device to generate or switch an optical path will be described.

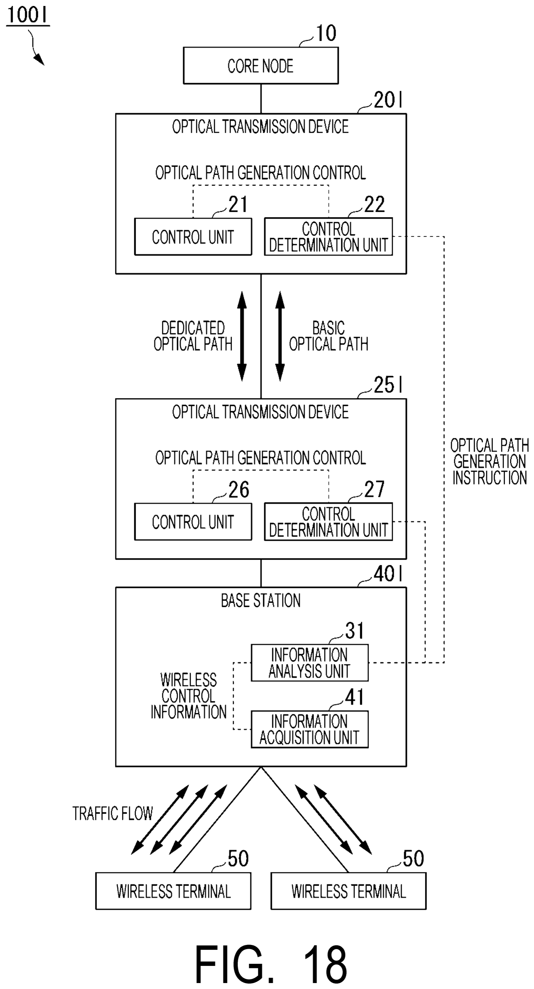

Fig. 18 is a diagram illustrating a configuration example of a signal transfer system 1001 in the fourth embodiment. The signal transfer system 1001 is a system that transfers a signal from one communication device to the other communication device. The signal transfer system 1001 includes, for example, a core node 10, one or more optical transmission devices 201 and 251, and one or more base stations 401. The signal transfer system 1001 is different in configuration from the signal transfer system 100 in not including a base station controller 30 and an optical transmission device controller 35 but including the optical transmission devices 201 and 251 and the base station 401 instead of the optical transmission devices 20 and 25 and the base station 40. Hereinafter, differences from the signal transfer system 100 will be mainly described.

The core node 10 and the optical transmission device 201, the optical transmission device 201 and the optical transmission device 251, and the optical transmission device 251 and the base station 401 are connected by an optical transmission line.

The optical transmission devices 201 and 251 are devices that transfer signals exchanged between an upper device (for example, the core node 10) and each of one or more wireless terminals 50. For example, the optical transmission devices 201 and 251 transfer an uplink signal transmitted from the wireless terminal 50 to the upper device. Furthermore, the optical transmission devices 201 and 251 perform dedicated optical path generation processing in response to an instruction from the base station 401.

The optical transmission devices 201 and 251 may generate a dedicated optical path between the optical transmission device 201 and the optical transmission device 251 or between end points (for example, between the core node 10 and the base station 401) of a wired network. Note that termination points of a basic optical path and the dedicated optical path may be the optical transmission devices 201 and 251, or may be the end points of the wired network. In a case where the core node 10 and the base station 401 are set as termination points of the optical path, the base station 401 performs optical path generation control of the dedicated optical path not only for the optical transmission devices 201 and 251 but also for the core node 10.

Furthermore, the optical transmission devices 201 and 251 perform dedicated optical path generation control in response to an instruction from the base station 401.

The base station 401 is a device that communicates with each of the one or more wireless terminals 50. For example, the base station 401 transmits a signal transferred from the optical transmission device 251 to the wireless terminal 50, and transfers a signal received from the wireless terminal 50 to the optical transmission device 251. The base station 401 wirelessly transmits the signal transferred from the optical transmission device 251 to the wireless terminal 50, and converts the signal received from the wireless terminal 50 into an optical signal and transfers the optical signal to the optical transmission device 251. Furthermore, the base station 401 has a function to acquire wireless control information for each traffic flow.

Moreover, the base station 401 determines whether or not a dedicated optical path is necessary for a specific traffic flow of the wireless terminal 50 on the basis of the acquired wireless control information. In a case of determining that the dedicated optical path is necessary, the base station 401 instructs each of the optical transmission devices 201 and 251 to generate the dedicated optical path.

The one or more optical transmission devices 201 and 251 included in the signal transfer system 1001 and the one or more base stations 401 are configured using, for example, a processor such as a CPU, a memory, and a communication interface. Each of the one or more optical transmission devices 201 and 251 and the one or more base stations 401 functions as a communication device including a control unit when the processor executes a program.

The control unit provides each function for causing the communication device to function as the optical transmission devices 201 and 251 or the base station 401. Note that all or some of the functions of the control unit may be implemented by using hardware such as an ASIC, a PLD, or an FPGA.

The program may be recorded on a computer-readable recording medium. Examples of the computer-readable recording medium include a portable medium such as a flexible disk, a magneto-optical disc, a ROM, a CD-ROM, or a semiconductor storage device (for example, solid state drive (SSD)), or a storage device such as a hard disk or a semiconductor storage device internally installed in a computer system. The above-described program may be transmitted via a telecommunication line.

Next, a specific configuration of each device will be described. Each base station 401 includes an information analysis unit 31 and an information acquisition unit 41. The information acquisition unit 41 included in the base station 40 acquires the wireless control information for each traffic flow exchanged between the wireless terminal 50 and the core node 10. The information acquisition unit 41 included in the base station 40 notifies the information analysis unit 31 of the acquired wireless control information.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information. In a case where the predetermined determination criterion is satisfied, the information analysis unit 31 transmits an optical path generation instruction to each of the optical transmission devices 201 and 251. When transmitting the optical path generation instruction, the information analysis unit 31 notifies each of the optical transmission devices 201 and 251 of an optical path identifier of the dedicated optical path.

The optical transmission device 201 includes a control unit 21 and a control determination unit 22. The control unit 21 generates the dedicated optical path in a predetermined section according to the optical path generation control of the base station 401. Moreover, when the optical signal is input after the generation of the dedicated optical path, the control unit 21 determines which of the basic optical path or the dedicated optical path the input optical signal is output to according to the optical path identifier notification of which is provided from the base station 401. In a case where the input optical signal matches the optical path identifier, the control unit 21 outputs the input optical signal to the dedicated optical path. In a case where the input optical signal does not match the optical path identifier, the control unit 21 outputs the input optical signal to the basic optical path.

When the optical path generation instruction is received from the base station 401, the control determination unit 22 performs the optical path generation control of the dedicated optical path for the control unit 21.

The optical transmission device 25 includes a control unit 26 and a control determination unit 27. The control unit 26 generates the dedicated optical path in a predetermined section according to the optical path generation control of the base station 401. Moreover, when the optical signal is input after the generation of the dedicated optical path, the control unit 26 determines which of the basic optical path or the dedicated optical path the input optical signal is output to according to the optical path identifier notification of which is provided from the base station 401. In a case where the input optical signal matches the optical path identifier, the control unit 26 outputs the input optical signal to the dedicated optical path. In a case where the input optical signal does not match the optical path identifier, the control unit 26 outputs the input optical signal to the basic optical path.

When the optical path generation instruction is received from the base station 401, the control determination unit 27 performs the optical path generation control of the dedicated optical path for the control unit 26.

In the signal transfer system 1001 according to the fourth embodiment, the information analysis unit 31 and the information acquisition unit 41 are included in a control unit of the base station 401.

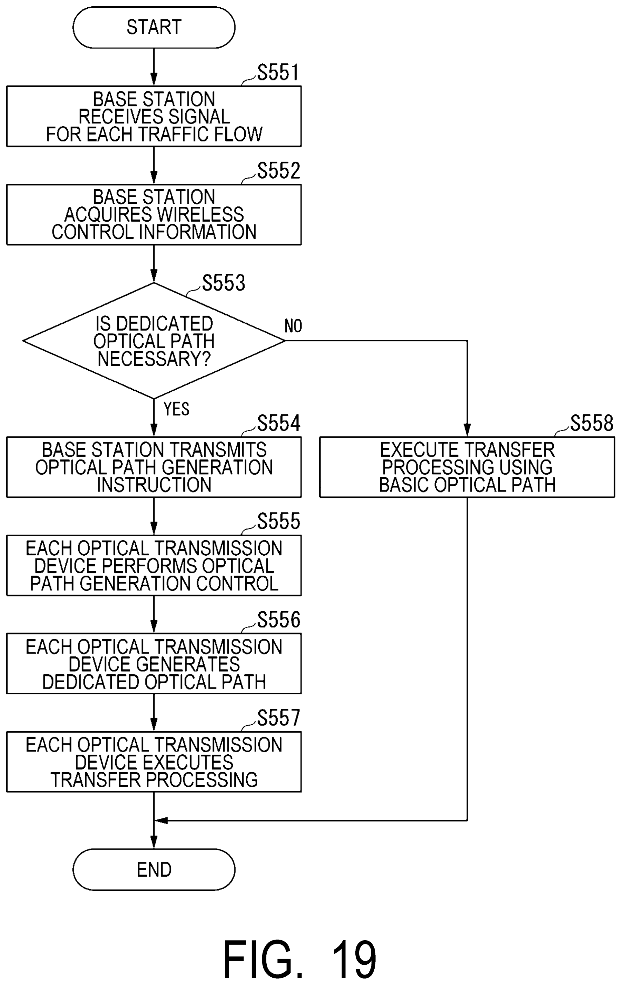

Fig. 19 is a flowchart illustrating an example of a flow of processing executed by the signal transfer system 1001 in the fourth embodiment. In the signal transfer system 1001, the processing illustrated in Fig. 19 is repeatedly performed. Note that it is assumed that the basic optical path is generated in a wired section from the core node 10 to the base station 401 at the start of the processing in Fig. 19.

The base station 401 receives a signal of each traffic flow (step S551). The information acquisition unit 41 included in the base station 401 acquires the wireless control information for each traffic flow on the basis of the received signal (step S552). The information acquisition unit 41 outputs the acquired wireless control information to the information analysis unit 31 included in the base station 401.

The information analysis unit 31 acquires the wireless control information output from the information acquisition unit 41. The information analysis unit 31 determines whether or not the dedicated optical path is necessary on the basis of the acquired wireless control information (step S553). In a case where the information analysis unit 31 determines that the dedicated optical path is necessary (YES in step S553), the information analysis unit 31 transmits the optical path generation instruction to each of the optical transmission devices 201 and 251 (step S554).

The control determination units 22 and 27 included in the respective optical transmission devices 201 and 251 acquire the optical path generation instruction transmitted from the information analysis unit 31 included in the base station 401. The control determination units 22 and 27 perform optical path generation control on the basis of the acquired optical path generation instruction (step S555). Specifically, the control determination unit 22 included in the optical transmission device 201 instructs the control unit 21 to execute the optical path generation control, and the control determination unit 27 included in the optical transmission device 251 instructs the control unit 26 to execute the optical path generation control. As a result, the control units 21 and 26 of the respective optical transmission devices 201 and 251 generate the dedicated optical path between the optical transmission device 201 and the optical transmission device 251 (step S556). Thereafter, each of the optical transmission devices 201 and 251 performs transfer processing of an input optical signal (step S557).

Specifically, the base station 401 converts the signal transmitted from the wireless terminal 50 into an optical signal and outputs the optical signal to the optical transmission device 251. The optical transmission device 251 receives the optical signal output from the base station 401. The control unit 26 of the optical transmission device 251 determines which of the basic optical path or the dedicated optical path the received optical signal is output to on the basis of the received optical signal and an optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 251 is input to the optical transmission device 201 via the optical path. The optical transmission device 201 receives the optical signal output from the optical transmission device 251. The control unit 21 of the optical transmission device 201 transmits the received optical signal to the core node 10 via the optical transmission line. Note that, in a case where the dedicated optical path is also generated between the core node 10 and the optical transmission device 201, the control unit 21 determines which of the basic optical path or the dedicated optical path the received optical signal is output to on the basis of the received optical signal and the optical path identifier. In this way, in the signal transfer system 1001, a signal based on a specific traffic flow can be transferred through the dedicated optical path.

In the processing of step S553, in a case where the information analysis unit 31 included in the base station 401 determines that the dedicated optical path is not necessary (NO in step S553), the information analysis unit 31 does not transmit the optical path generation instruction to each of the optical transmission devices 201 and 251. As a result, the transfer processing using the basic optical path is executed in the wired section from the core node 10 to the base station 401 (step S558).

According to the signal transfer system 1001 configured as described above, it is possible to obtain similar effects to those of the first embodiment even in the configuration not including a control device such as the base station controller 30 or the optical transmission device controller 35.

### (Modification 1 of Fourth Embodiment)

The signal transfer system 1001 may include the optical transmission device controller 35 illustrated in Fig. 1 and may not include the base station controller 30. In such a configuration, the optical transmission device 201 may not include the control determination unit 22, and the optical transmission device 251 may not include the control determination unit 27. The information analysis unit 31 of the base station 401 transmits the optical path generation instruction to the optical transmission device controller 35. A control determination unit 36 of the optical transmission device controller 35 receives the optical path generation instruction transmitted from the base station 401. The control determination unit 36 controls the optical transmission devices 201 and 251 according to the received optical path generation instruction.

### (Modification 2 of Fourth Embodiment)

The signal transfer system 1001 may include the base station controller 30 illustrated in Fig. 1 and may not include the optical transmission device controller 35. In such a configuration, the base station 401 may not include the information analysis unit 31. The information acquisition unit 41 of the base station 401 transmits the acquired wireless control information to the base station controller 30. The information analysis unit 31 of the base station controller 30 receives the wireless control information transmitted from the base station 401. The information analysis unit 31 determines necessity of generation of the dedicated optical path on the basis of the received wireless control information. In a case of determining that the generation of the dedicated optical path is necessary as a result of the determination, the information analysis unit 31 transmits the optical path generation instruction to the optical transmission devices 201 and 251. The control determination unit 22 of the optical transmission device 201 and the control determination unit 27 of the optical transmission device 251 receive the optical path generation instruction transmitted from the base station controller 30. The control determination units 22 and 27 perform control according to the received optical path generation instruction.

### (Application Example 1 of Fourth Embodiment)

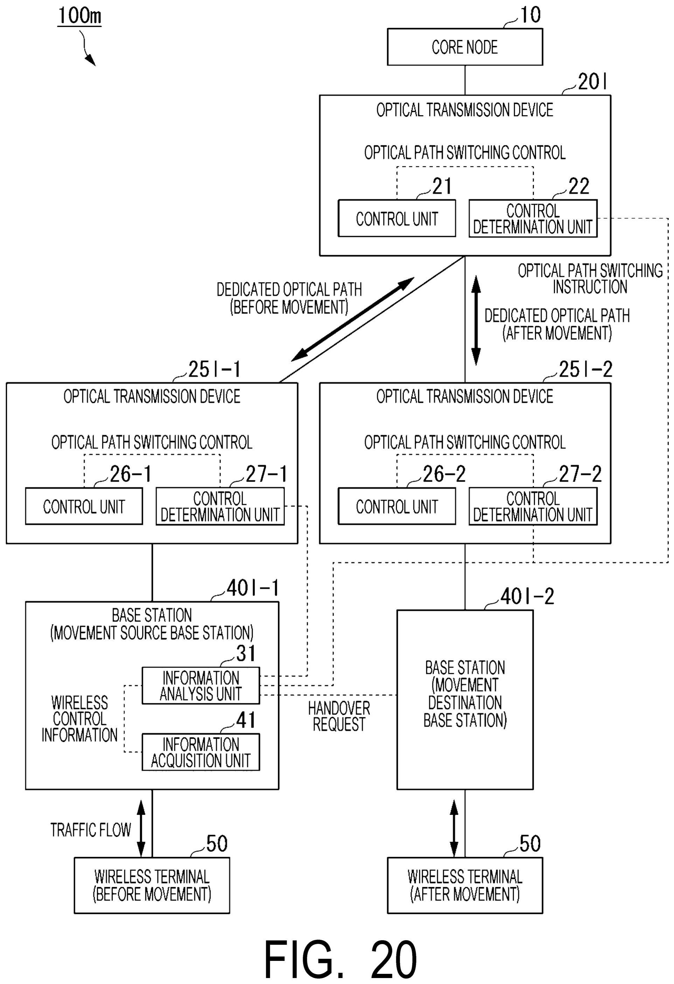

Next, an application example of the signal transfer system 1001 in the fourth embodiment will be described with reference to Figs. 20 to 23. Fig. 20 is a diagram illustrating a configuration example of an application example (part 1) of the signal transfer system 1001 according to the fourth embodiment. In the application example (part 1) of the signal transfer system 1001, switching of the dedicated optical path according to handover will be described.

As illustrated in Fig. 20, a signal transfer system 100m includes, for example, the core node 10, the one or more optical transmission devices 201 and 251, and the one or more base stations 401. Fig. 20 illustrates a configuration in which the signal transfer system 100m includes the two optical transmission devices 251 (for example, optical transmission devices 251-1 and 251-2) and the two base stations 401 (for example, base stations 401-1 and 401-2), but the number of the optical transmission devices 251 and the number of the base stations 401 may be three or more.

The core node 10 and the optical transmission device 201, the optical transmission device 201 and the optical transmission device 251-1, the optical transmission device 201 and the optical transmission device 251-2, the optical transmission device 251-1 and the base station 401-1, and the optical transmission device 251-2 and the base station 401-2 are connected by an optical transmission line.

Functional units included in the optical transmission devices 201, 251-1, and 251-2 and the base station 401-1 are similar to those of the signal transfer system 1001. Operation in some devices is different from that of the signal transfer system 1001. Hereinafter, differences from the signal transfer system 1001 will be mainly described.

It is assumed that the base station 401-1 is a base station (movement source base station) that performs communication before the wireless terminal 50 moves, and the base station 401-2 is a base station (movement destination base station) that performs communication after the wireless terminal 50 moves. Moreover, it is assumed that the dedicated optical path is generated by the method illustrated in Fig. 19 between the optical transmission device 201 and the optical transmission device 251-1 connected to the base station 401-1. In such a case, the wireless terminal 50 communicates with the core node 10 via the base station 401-1, the optical transmission device 251-1, and the optical transmission device 201 before moving.

The base station 401 includes the information analysis unit 31 and the information acquisition unit 41. The information acquisition unit 41 acquires the wireless control information for each traffic flow exchanged between the wireless terminal 50 and the core node 10. The information acquisition unit 41 transfers the acquired wireless control information to the information analysis unit 31.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information acquired by the information acquisition unit 41. In a case of determining that the handover is necessary, the information analysis unit 31 performs a handover request to the target base station 401. Moreover, in a case of determining that the handover is necessary, the information analysis unit 31 transmits an optical path switching instruction to each of the optical transmission devices 201 and 251.

When transmitting the optical path switching instruction, the information analysis unit 31 notifies each of the optical transmission devices 201 and 251 of information indicating the base station 401 (for example, the base station 401-1) as a switching source, information indicating the base station 401 (for example, the base station 401-2) as a switching destination, and the optical path identifier of the dedicated optical path.

The optical transmission device 201 includes the control unit 21 and the control determination unit 22. The control unit 21 generates the dedicated optical path in a predetermined section according to the optical path generation control. Moreover, when the optical signal is input after the generation of the dedicated optical path, the control unit 21 determines which of the basic optical path or the dedicated optical path the input optical signal is output to according to the optical path identifier notification of which is provided from the base station 401. Moreover, the control unit 21 switches the dedicated optical path in a predetermined section according to optical path switching control. Here, the optical path switching control may be performed in a way of further generating another dedicated optical path for the path after the switching and deleting the dedicated optical path of the path before the switching, or may be performed in a way of switching an output port of the optical transmission device 201 (for example, switching an output port of the optical transmission device 201 from for the optical transmission device 251-1 to for the optical transmission device 251-2) while keeping one dedicated optical path.

When the optical path generation instruction is received from the base station 401, the control determination unit 22 performs the optical path generation control of the dedicated optical path for the control unit 21. Moreover, when the optical path switching instruction is received from the base station 401, the control determination unit 22 performs optical path switching control of the dedicated optical path for the control unit 21.

The optical transmission devices 251-1 and 251-2 include control units 261-1 and 261-2 and control determination units 271-1 and 271-2. Control units 26-1 and 26-2 generate the dedicated optical path in a predetermined section according to the optical path generation control. Moreover, when the optical signal is input after the generation of the dedicated optical path, the control units 26-1 and 26-2 determine which of the basic optical path or the dedicated optical path the input optical signal is output to according to the optical path identifier notification of which is provided from the base station 401. Moreover, the control units 26-1 and 26-2 switch the dedicated optical path in a predetermined section according to the optical path switching control.

When the optical path generation instruction is received from the base station 401, the control determination units 271-1 and 271-2 perform optical path generation control of the dedicated optical path for the control units 26-1 and 26-2. Moreover, when the optical path switching instruction is received from the base station 401, the control determination units 271-1 and 271-2 perform the optical path switching control of the dedicated optical path for the control units 26-1 and 26-2.

In the signal transfer system 100m, the information analysis unit 31 and the information acquisition unit 41 are included in the control unit of the base station 401.

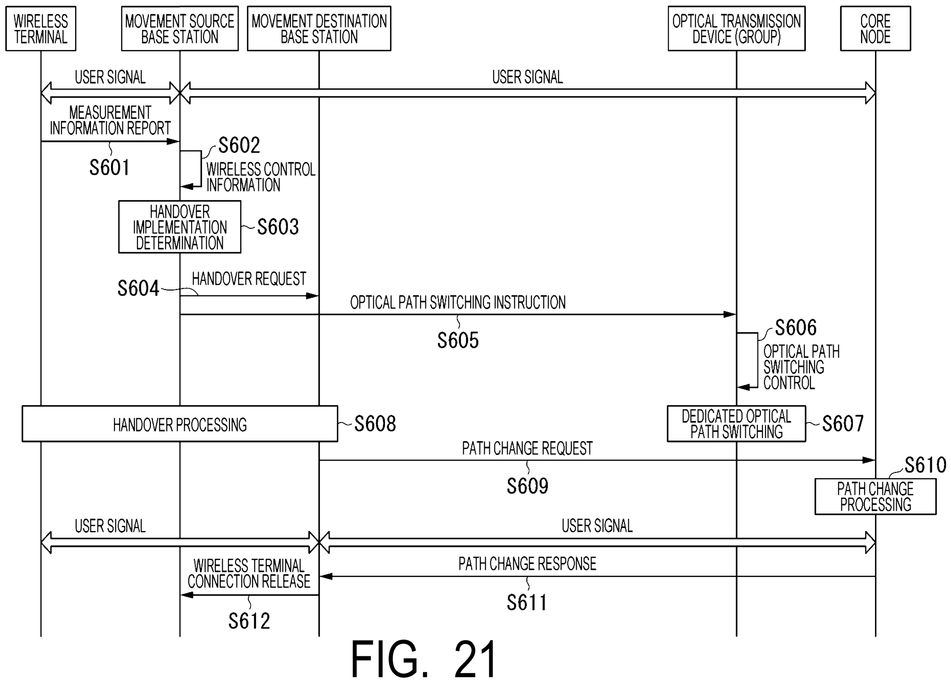

Fig. 21 is a sequence diagram illustrating a flow of processing of the signal transfer system 100m according to the fourth embodiment. Note that, in Fig. 21, the optical transmission devices 201 and 251 are collectively referred to as an optical transmission device (group). At the start of the processing of Fig. 21, it is assumed that the wireless terminal 50 is connected to the base station 401-1 as a movement source base station. Therefore, a user signal transmitted from the wireless terminal 50 is transferred to the core node 10 via the base station 401-1.

The wireless terminal 50 transmits measurement information to the base station 401-1 (step S601). Here, it is assumed that the wireless terminal 50 moves near the base station 40-2 in response to movement of a user of the wireless terminal 50. An information acquisition unit 41-1 of the base station 401-1 acquires the measurement information transmitted from the wireless terminal 50. The information acquisition unit 41-1 outputs the acquired measurement information to an information analysis unit 31-1 as the wireless control information (step S602).

The information analysis unit 31-1 of the base station 401-1 determines whether or not the handover is necessary on the basis of the wireless control information output from the information analysis unit 31-1 (step S603). Here, it is assumed that it is determined that the handover is necessary. The information analysis unit 31-1 requests the base station 401-2 as a switching destination of handover to perform the handover (step S604).

Further, the information analysis unit 31-1 transmits the optical path switching instruction to each of the optical transmission devices 201 and 251 (step S605). The control determination units 22 and 27 of the respective optical transmission devices 201 and 251 receive the optical path switching instruction transmitted from the base station 401. The control determination units 22 and 27 performs the optical path switching control of the dedicated optical path for the control units 21 and 26 in response to the received optical path switching instruction (step S606).

The control units 21 and 26 of the optical transmission devices 201 and 251 switch the dedicated optical path according to the optical path switching control from the control determination units 22 and 27 (step S607). Specifically, the control unit 26-1 of the optical transmission device 251-1 deletes the dedicated optical path to the optical transmission device 20. The control unit 26-2 of the optical transmission device 251-2 generates the dedicated optical path to the optical transmission device 201. The control unit 21 of the optical transmission device 201 performs switching so as to form the dedicated optical path to the optical transmission device 251. Thereby, the dedicated optical path is opened between the optical transmission device 201 and the optical transmission device 251-2.

The base stations 401-1 and 401-2 switch the connection with the wireless terminal 50 according to a result of handover execution determination (step S608). As a result, for example, the base station 401 serving as a connection destination of the wireless terminal 50 is switched from the base station 401-1 to the base station 401-2. When the connection switching is completed, the control unit 26-2 of the optical transmission device 251-2 transmits a path change request to the core node 10 (step S609).

The core node 10 receives the path change request transmitted from the optical transmission device 251-2. The core node 10 performs path change processing in response to the received path change request (step S610). Specifically, in a case of transmitting a signal addressed to the wireless terminal 50, the core node 10 performs path change so as to provide a path through the optical transmission device 251-2. As a result, the user signal transmitted from the wireless terminal 50 is transferred to the core node 10 via the base station 401-2. Here, the deletion of the dedicated optical path between the optical transmission device 251-1 and the optical transmission device 201 described above may be performed at the time when the processing of step S610 is completed and the path between the optical transmission device 251-1 and the optical transmission device 201 becomes unnecessary.

When the path change processing is completed, the core node 10 transmits a path change response indicating that the path change process is completed to the base station 401-2 (step S611). The base station 401-2 receives the path change response transmitted from the core node 10. In response to the received path change response, the base station 401-2 causes the base station 401-1 as the movement source base station to release the connection of the wireless terminal 50 (step S612).

According to the signal transfer system 100m configured as described above, it is possible to cope with the handover due to movement of the wireless terminal 50 while reducing a delay in the dedicated optical path.

### (Modification of Application Example 1 of Fourth Embodiment)

The signal transfer system 100m may be modified as in Modification 1 and Modification 2 in the fourth embodiment.

### (Application Example 2 of Fourth Embodiment)

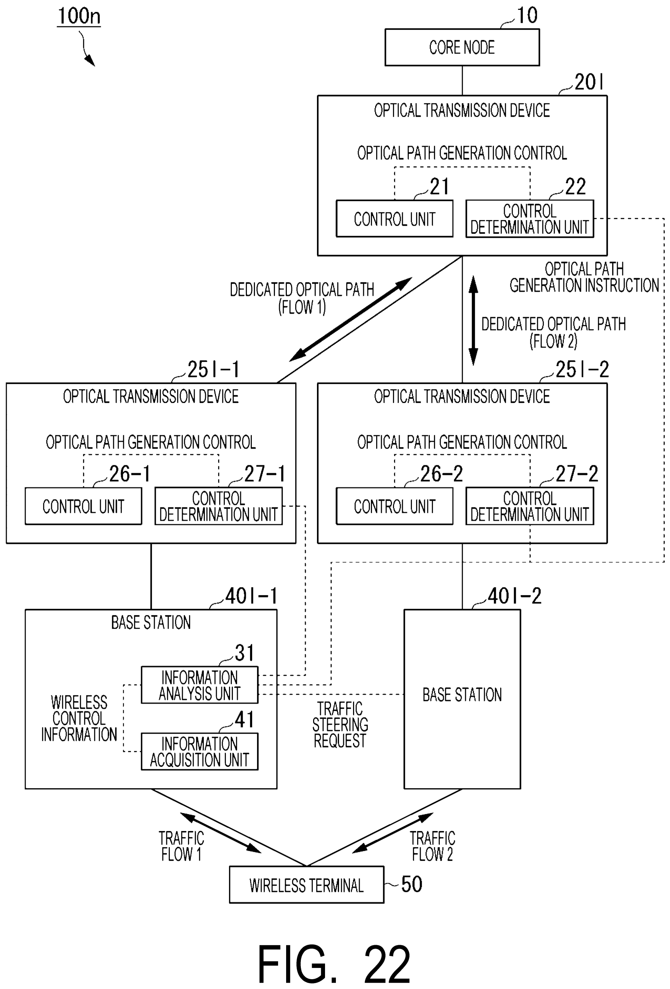

Next, an application example of the signal transfer system 100m in the fourth embodiment will be described. Fig. 22 is a diagram illustrating a configuration example of an application example (part 2) of the signal transfer system 100m according to the fourth embodiment. In the application example (part 2) of the signal transfer system 100m, generation of a dedicated optical path for each base station according to traffic steering will be described.

As illustrated in Fig. 22, a signal transfer system 100n includes, for example, the core node 10, the one or more optical transmission devices 201 and 251, and the one or more base stations 401. Fig. 22 illustrates a configuration in which the signal transfer system 1001 includes the two optical transmission devices 251 (for example, optical transmission devices 251-1 and 251-2) and the two base stations 401 (for example, base stations 401-1 and 401-2), but the number of the optical transmission devices 251 and the number of the base stations 401 may be three or more.

The core node 10 and the optical transmission device 201, the optical transmission device 201 and the optical transmission device 251-1, the optical transmission device 201 and the optical transmission device 251-2, the optical transmission device 251-1 and the base station 401-1, and the optical transmission device 251-2 and the base station 401-2 are connected by an optical transmission line.

Functional units included in the optical transmission devices 201, 251-1, and 251-2 and the base stations 401-1 and 401-2 are similar to those of the signal transfer system 1001. Operation in some devices is different from that of the signal transfer system 1001. Hereinafter, differences from the signal transfer system 1001 will be mainly described.

It is assumed that the base station 401-1 is a base station that performs communication before the wireless terminal 50 performs the traffic steering. Moreover, it is assumed that the dedicated optical path is generated by the method illustrated in Fig. 19 between the optical transmission device 201 and the optical transmission device 251-1 connected to the base station 401-1. In such a case, the wireless terminal 50 communicates with the core node 10 via the base station 401-1, the optical transmission device 251-1, and the optical transmission device 201.

The base station 401 includes the information analysis unit 31 and the information acquisition unit 41. The information acquisition unit 41 acquires the wireless control information for each traffic flow exchanged between the wireless terminal 50 and the core node 10. The information acquisition unit 41 transfers the acquired wireless control information to the information analysis unit 31.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information acquired by the information acquisition unit 41. In a case of determining that the traffic steering is necessary, the information analysis unit 31 instructs the target base station 401 to request the traffic steering. Moreover, in a case of determining that traffic steering is necessary, the information analysis unit 31 transmits the optical path generation instruction to each of the optical transmission devices 201 and 251. In this case, when transmitting the optical path generation instruction, the information analysis unit 31 notifies the optical transmission devices 201 and 251 of the optical path identifier of the dedicated optical path to be generated in each optical transmission device 251 connected to each base station 401.

The optical transmission device 201 includes the control unit 21 and the control determination unit 22. The control unit 21 generates the dedicated optical path in a predetermined section according to the optical path generation control of the control determination unit 22. Moreover, when the optical signal is input after the generation of the dedicated optical path, the control unit 21 determines which of the basic optical path or the dedicated optical path the input optical signal is output to according to the optical path identifier notification of which is provided from the base station 401.

When the optical path generation instruction is received from the base station 401, the control determination unit 22 performs the optical path generation control of the dedicated optical path for the control unit 21. For example, in a case where the optical path identifier of the dedicated optical path generated in each of the optical transmission devices 251 is included in the optical path generation instruction, the control determination unit 22 instructs the control unit 21 to generate the dedicated optical paths having different wavelengths.

The optical transmission devices 25-1 and 25-2 include the control units 26-1 and 26-2 and control determination units 27-1 and 27-2. The control units 26-1 and 26-2 generate the dedicated optical path in a predetermined section according to the optical path generation control of the control determination units 27-1 and 27-2. Moreover, when the optical signal is input after the generation of the dedicated optical path, the control units 26-1 and 26-2 determine which of the basic optical path or the dedicated optical path the input optical signal is output to according to the optical path identifier notification of which is provided from the base station 401.

When the optical path generation instruction is received from the base station 401, the control determination units 27-1 and 27-2 perform the optical path generation control of the dedicated optical path for the control units 26-1 and 26-2. For example, in a case where the optical path identifier of the dedicated optical path generated in each of the control units 26-1 and 26-2 is included in the optical path generation instruction, the control determination units 27-1 and 27-2 instruct the control unit 21 to generate the dedicated optical paths having different wavelengths.

Note that the information analysis unit 31 of the base station 401 may determine release of the traffic steering on the basis of the wireless control information in a similar procedure to the above procedure, and instruct each of the optical transmission devices 201 and 251 to delete the dedicated optical path. In this case, the control determination units 22 and 27 of the respective optical transmission devices 201 and 251 perform control to delete the dedicated optical path to be deleted.

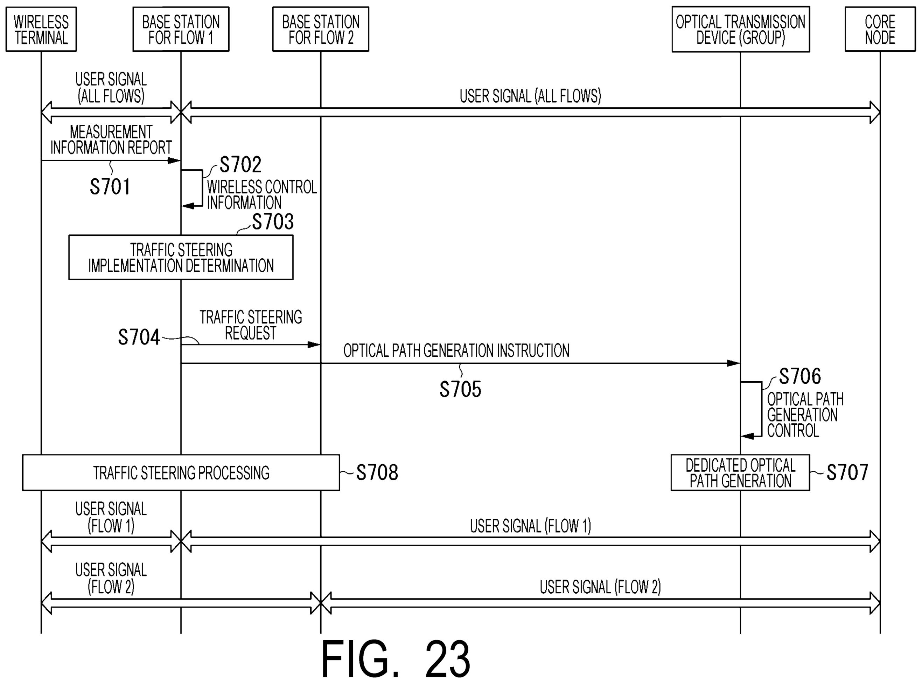

Fig. 23 is a sequence diagram illustrating a flow of processing of the signal transfer system 100n according to the fourth embodiment. Note that, in Fig. 23, the optical transmission devices 201 and 251 are collectively referred to as an optical transmission device (group). At the start of the processing of Fig. 23, it is assumed that the wireless terminal 50 is connected to the base station 401-1. Therefore, user signals (all flows) transmitted from the wireless terminal 50 are transferred to the core node 10 via the base station 401-1. Here, as an example, description will be given assuming that the base station 401-1 is a macrocell base station of a radio wave in a low frequency band having a wide cover area and a small band, and the base station 401-2 is a small cell base station of a radio wave in a high frequency band having a narrow cover area and a large band. Moreover, as an example, it is assumed that Traffic Flow 1 is a voice traffic flow and Traffic Flow 2 is a video traffic flow.

The wireless terminal 50 transmits measurement information to the base station 401-1 (step S701). An information acquisition unit 41-1 of the base station 401-1 acquires the measurement information transmitted from the wireless terminal 50. The information acquisition unit 41-1 outputs the acquired measurement information to the information analysis unit 31-1 as the wireless control information (step S702).

The information analysis unit 31-1 determines whether or not the traffic steering is necessary on the basis of the wireless control information acquired by the information acquisition unit 41-1 (step S703). Here, it is assumed that it is determined that the traffic steering is necessary. The information analysis unit 31-1 requests the target base station 401 to perform the traffic steering (step S704).

Further, the information analysis unit 31-1 transmits the optical path generation instruction to each of the optical transmission devices 201 and 251 (step S705). The control determination units 22 and 27 of the respective optical transmission devices 201 and 251 receive the optical path generation instruction transmitted from the base station 401. The control determination units 22 and 27 performs the optical path generation control of the dedicated optical path for the control units 21 and 26 in response to the received optical path generation instruction (step S706). The control determination unit 27-1 instructs the control unit 26-1 to generate the dedicated optical path for Traffic Flow 1, the control determination unit 27-2 instructs the control unit 26-2 to generate the dedicated optical path for Traffic Flow 2, and the control determination unit 22 instructs the control unit 21 to generate the dedicated optical paths for Traffic Flows 1 and 2.

The control units 21 and 26 of the optical transmission devices 201 and 251 generate the dedicated optical path according to the optical path generation control from the control determination units 22 and 27 (step S707). Specifically, the control unit 26-1 of the optical transmission device 251-1 generates the dedicated optical path to the optical transmission device 201 for Traffic Flow 1. The control unit 26-2 of the optical transmission device 251-2 generates the dedicated optical path for Traffic Flow 2. The control unit 21 of the optical transmission device 201 generates the dedicated optical path to the optical transmission device 251-1 for Traffic Flow 1, and generates the dedicated optical path to the optical transmission device 251-2 for Traffic Flow 2.

The base stations 401-1 and 401-2 set the traffic steering according to a result of execution determination of the traffic steering (step S708). For example, the base stations 401-1 and 401-2 perform connection change such that Traffic Flow 1 related to voice is transmitted and received by the base station 401-1, and Traffic Flow 2 related to video is transmitted and received by the base station 401-2. As a result, for example, Traffic Flow 1 transmitted from the wireless terminal 50 is transmitted to the base station 401-1, and Traffic Flow 2 transmitted from the wireless terminal 50 is transmitted to the base station 401-2.

According to the signal transfer system 100n configured as described above, it is possible to support the traffic steering of dividing the connection destination base station for each traffic flow of the wireless terminal 50 while reducing a delay in the dedicated optical path.

### (Modification of Application Example 2 of Fourth Embodiment)

The signal transfer system 100n may be modified as in Modification 1, Modification 2, and Modification 3 in the fourth embodiment.

### (Fifth Embodiment)

In a fifth embodiment, a signal transfer system using a central station and a distributed station arranged in a distributed manner as a base station will be described. More specifically, in the fifth embodiment, an optical transmission device is installed in a section called an MMH, the signal transfer system does not include a base station controller and an optical transmission device controller, and the base station instructs each optical transmission device to generate or switch an optical path.

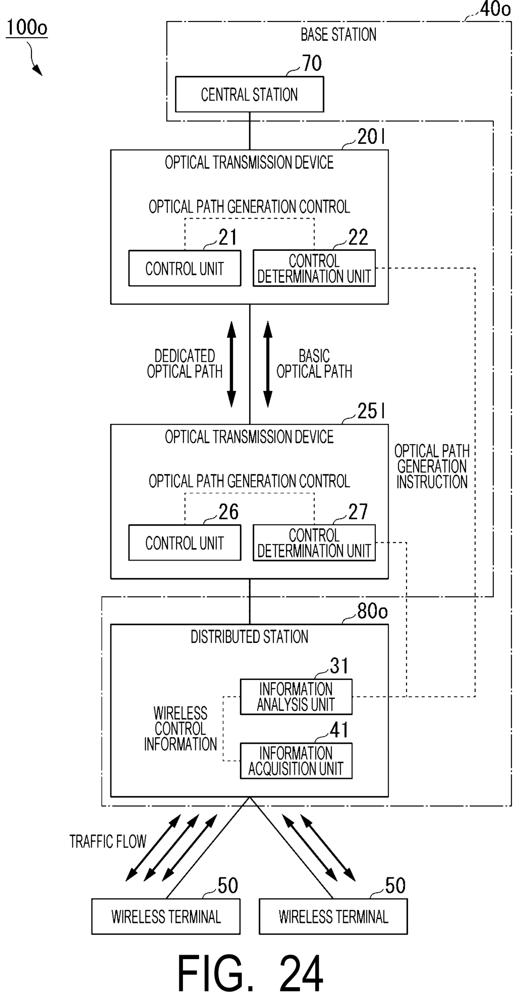

Fig. 24 is a diagram illustrating a configuration example of a signal transfer system 100o in the fifth embodiment. The signal transfer system 100o includes, for example, one or more optical transmission devices 201 and 251, and one or more base stations 40o. The base station 40o includes a central station 70 and one or more distributed stations 80o. As described above, the signal transfer system 100o is different in configuration from the signal transfer system 1001 in not including the core node 10 but including the base station 40o including the central station 70 and the one or more distributed stations 80o instead of the base station 401. Hereinafter, differences from the signal transfer system 1001 will be mainly described.

The central station 70 and the one or more distributed stations 80o are configured using, for example, a processor such as a CPU, a memory, and a communication interface. Each device of the central station 70 and the one or more distributed stations 80o functions as a communication device including a control unit when the processor executes a program.

The control unit provides each function for causing the communication device to function as the central station 70 or the distributed station 80o. Note that all or some of the functions of the control unit may be implemented by using hardware such as an ASIC, a PLD, or an FPGA. The program may be recorded on a computer-readable recording medium. The computer-readable recording medium is, for example, a portable medium such as a flexible disk, a magneto-optical disk, a ROM, a CD-ROM, or a semiconductor storage device (for example, SSD), or a storage device such as a hard disk or a semiconductor storage device built in a computer system. The above-described program may be transmitted via a telecommunication line.

For example, the central station 70 in the fifth embodiment is one or more CUs in a mobile communication system, and the one or more distributed stations 80o are DUs in the mobile communication system. In this case, a CU-DU section in which the optical transmission devices 201 and 251 are installed is referred to as a mobile midhole (MMH).

Note that the central station 70 may be a Wi-Fi controller, and one or more distributed stations 80o may be Wi-Fi access points. The signal transfer system 100o is not necessarily applied to the mobile communication system, and may be applied to a wireless communication system other than the mobile communication system.

The distributed station 80o is a device that communicates with a wireless terminal 50. The distributed station 80o transmits a signal transferred from the optical transmission device 251 to the wireless terminal 50 or transfers a signal received from the wireless terminal 50 to the optical transmission device 251 of the transfer destination by communication with the wireless terminal 50.

The distributed station 80o includes an information analysis unit 31 and an information acquisition unit 41. The information acquisition unit 41 included in the distributed station 80o acquires wireless control information for each traffic flow exchanged between the wireless terminal 50 and the central station 70. The information acquisition unit 41 included in the distributed station 80o outputs the acquired wireless control information to the information analysis unit 31.

The information analysis unit 31 acquires the wireless control information output from the information acquisition unit 41. The information analysis unit 31 acquires the wireless control information acquired by the information acquisition unit 41. The information analysis unit 31 determines whether or not a dedicated optical path is necessary for a specific traffic flow of the wireless terminal 50 on the basis of the acquired wireless control information. In a case where the predetermined determination criterion is satisfied, the information analysis unit 31 transmits an optical path generation instruction to each of the optical transmission devices 201 and 251. When transmitting the optical path generation instruction, the information analysis unit 31 notifies each of the optical transmission devices 201 and 251 of an optical path identifier of the dedicated optical path.

In the signal transfer system 100o according to the fifth embodiment, the information acquisition unit 41 and the information analysis unit 31 are provided in a control unit of the distributed station 80o.

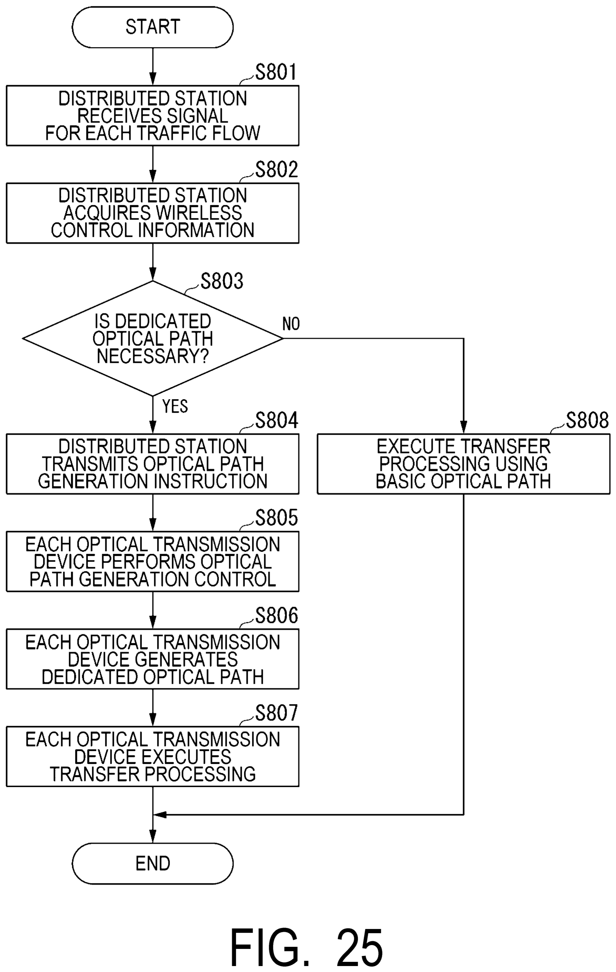

Fig. 25 is a flowchart illustrating an example of a flow of processing executed by the signal transfer system 100o in the fifth embodiment. In the signal transfer system 100o, the processing illustrated in Fig. 25 is repeatedly performed. Note that it is assumed that a basic optical path is generated in a wired section from the central station 70 to the distributed station 80o at the start of the processing in Fig. 25.

The distributed station 80o receives a signal of each traffic flow (step S801). The information acquisition unit 41 included in the distributed station 80o acquires the wireless control information for each traffic flow on the basis of the received signal (step S802). The information acquisition unit 41 outputs the acquired wireless control information to the information analysis unit 31 included in the distributed station 80o.

The information analysis unit 31 acquires the wireless control information output from the information acquisition unit 41. The information analysis unit 31 determines whether or not the dedicated optical path is necessary on the basis of the acquired wireless control information (step S803). In a case where the information analysis unit 31 determines that the dedicated optical path is necessary (YES in step S803), the information analysis unit 31 transmits the optical path generation instruction to each of the optical transmission devices 201 and 251 (step S804).

Control determination units 22 and 27 included in the respective optical transmission devices 201 and 251 acquire the optical path generation instruction transmitted from the distributed station 80o. The control determination units 22 and 27 perform optical path generation control on the basis of the acquired optical path generation instruction (step S805). Specifically, the control determination unit 22 included in the optical transmission device 201 instructs the control unit 21 to execute the optical path generation control, and the control determination unit 27 included in the optical transmission device 251 instructs the control unit 26 to execute the optical path generation control. As a result, the control units 21 and 26 of the respective optical transmission devices 201 and 251 generate the dedicated optical path between the optical transmission device 201 and the optical transmission device 251 (step S806). Thereafter, each of the optical transmission devices 201 and 251 performs transfer processing of an input optical signal (step S807).

Specifically, the distributed station 80o converts the signal transmitted from the wireless terminal 50 into an optical signal and outputs the optical signal to the optical transmission device 251. The optical transmission device 251 receives the optical signal output from the distributed station 80o. The control unit 26 of the optical transmission device 251 determines which of the basic optical path or the dedicated optical path the received optical signal is output to on the basis of the received optical signal and an optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 251 is input to the optical transmission device 201 via the optical path. The optical transmission device 201 receives the optical signal output from the optical transmission device 251. The control unit 21 of the optical transmission device 201 transmits the received optical signal to the central station 70 via the optical transmission line. Note that, in a case where the dedicated optical path is also generated between the central station 70 and the optical transmission device 201, the control unit 21 determines which of the basic optical path or the dedicated optical path the received optical signal is output to on the basis of the received optical signal and the optical path identifier. In this way, in the signal transfer system 100o, a signal based on a specific traffic flow can be transferred through the dedicated optical path.

In the processing of step S803, in a case where the information analysis unit 31 included in the distributed station 80o determines that the dedicated optical path is not necessary (NO in step S803), the information analysis unit 31 does not transmit the optical path generation instruction to each of the optical transmission devices 201 and 251. As a result, the transfer processing using the basic optical path is executed in the wired section from the distributed station 80o to the central station 70 (step S808).

According to the signal transfer system 100o configured as described above, it is possible to obtain similar effects to those of the first embodiment even in the configuration not including a control device such as the base station controller 30 or the optical transmission device controller 35.

### (Modification 1 of Fifth Embodiment)

The signal transfer system 100o may include the optical transmission device controller 35 illustrated in Fig. 1 and may not include the base station controller 30. In such a configuration, the optical transmission device 201 may not include the control determination unit 22, and the optical transmission device 251 may not include the control determination unit 27. The information analysis unit 31 of the distributed station 80o transmits the optical path generation instruction to the optical transmission device controller 35. A control determination unit 36 of the optical transmission device controller 35 receives the optical path generation instruction transmitted from the distributed station 80o. The control determination unit 36 controls the optical transmission devices 201 and 251 according to the received optical path generation instruction.

### (Modification 2 of Fifth Embodiment)

The signal transfer system 100o may include the base station controller 30 illustrated in Fig. 1 and may not include the optical transmission device controller 35. In such a configuration, the distributed station 80o may not include the information analysis unit 31. The information acquisition unit 41 of the distributed station 80o transmits the acquired wireless control information to the base station controller 30. The information analysis unit 31 of the base station controller 30 receives the wireless control information transmitted from the distributed station 80o. The information analysis unit 31 determines necessity of generation of the dedicated optical path on the basis of the received wireless control information. In a case of determining that the generation of the dedicated optical path is necessary as a result of the determination, the information analysis unit 31 transmits the optical path generation instruction to the optical transmission devices 201 and 251. The control determination unit 22 of the optical transmission device 201 and the control determination unit 27 of the optical transmission device 25l receive the optical path generation instruction transmitted from the base station controller 30. The control determination units 22 and 27 perform control according to the received optical path generation instruction.

### (Application Example 1 of Fifth Embodiment)

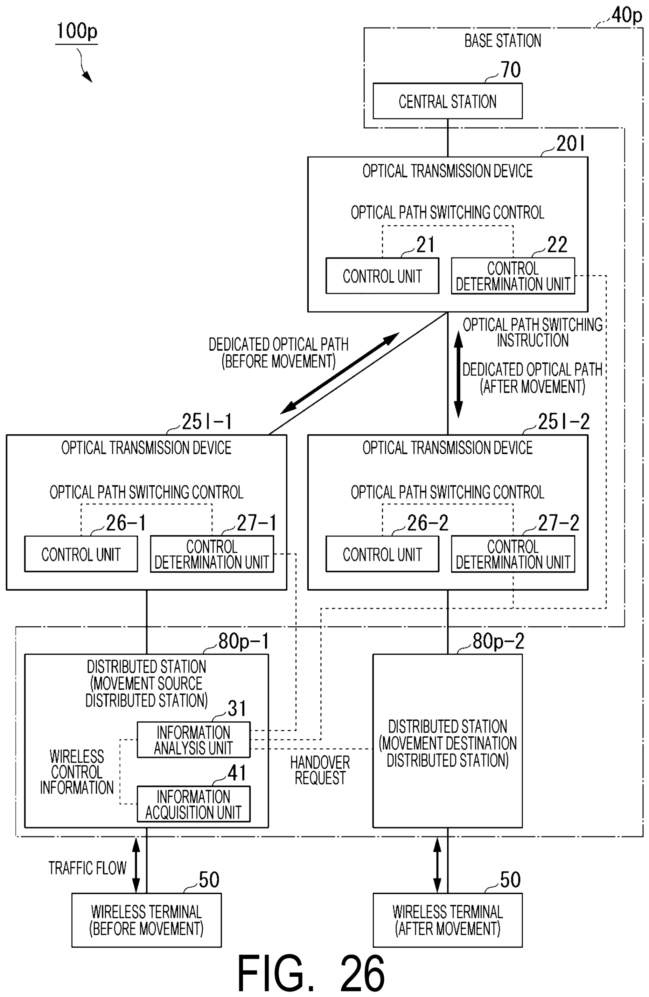

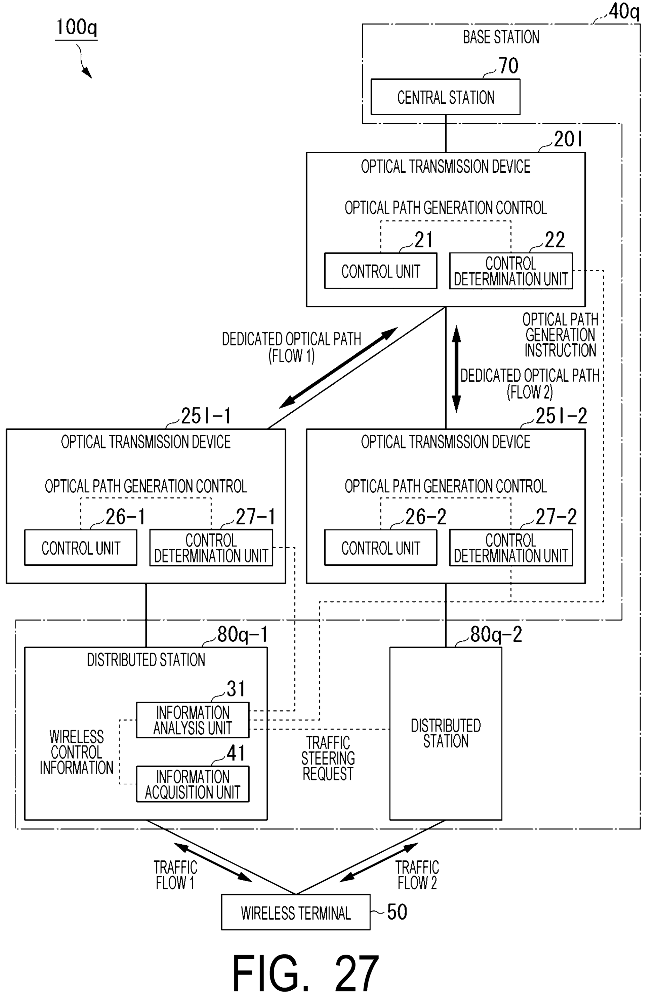

Next, an application example of the signal transfer system 100o in the fifth embodiment will be described with reference to Figs. 26 and 27. Fig. 26 is a diagram illustrating a configuration example of an application example (part 1) of the signal transfer system 100o according to the fifth embodiment. In the application example (part 1) of the signal transfer system 100o, switching of the dedicated optical path according to handover will be described.

As illustrated in Fig. 26, a signal transfer system 100p includes, for example, the one or more optical transmission devices 201 and 251, and one or more base stations 40p. The base station 40p includes the central station 70 and one or more distributed stations 80p. Fig. 26 illustrates a configuration in which the signal transfer system 100p includes the two optical transmission devices 251 (for example, optical transmission devices 251-1 and 251-2) and the two distributed stations 80p (for example, distributed stations 80p-1 and 80p-2), but the number of the optical transmission devices 251 and the number of the distributed stations 80p may be three or more. Hereinafter, differences from the signal transfer system 100o will be mainly described.

It is assumed that the distributed station 80p-1 is a distributed station (movement source distributed station) that performs communication before the wireless terminal 50 moves, and the distributed station 80p-2 is a distributed station (movement destination distributed station) that performs communication after the wireless terminal 50 moves. Moreover, it is assumed that the dedicated optical path is generated by the method illustrated in Fig. 25 between the optical transmission device 201 and the optical transmission device 251-1 connected to the distributed station 80p-1. In such a case, the wireless terminal 50 communicates with the central station 70 via the distributed station 80p-1, the optical transmission device 25l-1, and the optical transmission device 201 before moving.

The distributed station 80p includes the information analysis unit 31 and the information acquisition unit 41. The information acquisition unit 41 acquires the wireless control information for each traffic flow exchanged between the wireless terminal 50 and the central station 70. The information acquisition unit 41 outputs the acquired wireless control information to the information analysis unit 31.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information acquired by the information acquisition unit 41. In a case of determining that the handover is necessary, the information analysis unit 31 performs a handover request to the target distributed station 80p. Moreover, in a case of determining that the handover is necessary, the information analysis unit 31 transmits an optical path switching instruction to each of the optical transmission devices 201 and 251.

When transmitting the optical path switching instruction, the information analysis unit 31 notifies each of the optical transmission devices 201 and 251 of information indicating the distributed station 80p as a switching source, information indicating the distributed station 80p as a switching destination, and the optical path identifier of the dedicated optical path.

The optical transmission device 201 includes the control unit 21 and the control determination unit 22. The control unit 21 generates the dedicated optical path in a predetermined section according to the optical path generation control of the control determination unit 22. Moreover, when the optical signal is input after the generation of the dedicated optical path, the control unit 21 determines which of the basic optical path or the dedicated optical path the input optical signal is output to according to the optical path identifier notification of which is provided from the distributed station 80p. Moreover, the control unit 21 switches the dedicated optical path in a predetermined section according to optical path switching control of the control determination unit 22. Here, the optical path switching control may be performed in a way of further generating another dedicated optical path for the path after the switching and deleting the dedicated optical path of the path before the switching, or may be performed in a way of switching an output port of the optical transmission device 20 (for example, switching an output port of the optical transmission device 201 from the optical transmission device 251-1 to the optical transmission device 251-2) while keeping one dedicated optical path.

When the optical path generation instruction is received from the distributed station 80p, the control determination unit 22 performs the optical path generation control of the dedicated optical path for the control unit 21. Moreover, when the optical path switching instruction is received from the distributed station 80p, the control determination unit 22 performs the optical path switching control of the dedicated optical path for the control unit 21.

The optical transmission devices 251-1 and 251-2 include control units 26-1 and 26-2 and control determination units 27-1 and 27-2. The control units 26-1 and 26-2 generate the dedicated optical path in a predetermined section according to the optical path generation control of the control determination units 27-1 and 27-2. Moreover, when the optical signal is input after the generation of the dedicated optical path, the control units 26-1 and 26-2 determine which of the basic optical path or the dedicated optical path the input optical signal is output to according to the optical path identifier notification of which is provided from the distributed station 80p. Moreover, the control units 26-1 and 26-2 switch the dedicated optical path in a predetermined section according to the optical path switching control of the control determination units 27-1 and 27-2.

In the signal transfer system 100p, the information analysis unit 31 and the information acquisition unit 41 are provided in a control unit of the distributed station 80p.

Since processing at the time of handover in the signal transfer system 100p is similar to the processing illustrated in Fig. 7, description thereof will be omitted. For example, a movement source base station in Fig. 21 may be set to a movement source distributed station, a movement destination base station may be set to a movement destination distributed station, and the core node 10 may be set to the central station 70.

According to the signal transfer system 100p configured as described above, it is possible to cope with the handover due to movement of the wireless terminal 50 while reducing a delay in the dedicated optical path.

### (Modification of Application Example 1 of Fifth Embodiment)

The signal transfer system 100p may be modified as in Modification 1 and Modification 2 in the fifth embodiment.

### (Application Example 2 of Fifth Embodiment)

Next, an application example of a signal transfer system 100q in the fifth embodiment will be described. Fig. 27 is a diagram illustrating a configuration example of an application example (part 2) of the signal transfer system 100q according to the fifth embodiment. In the application example (part 2) of the signal transfer system 100q, generation of the dedicated optical path for each base station according to traffic steering will be described.

As illustrated in Fig. 27, the signal transfer system 100q includes, for example, the one or more optical transmission devices 201 and 251, and one or more base stations 40q. The base station 40q includes the central station 70 and the one or more distributed stations 80q. Fig. 27 illustrates a configuration in which the signal transfer system 100q includes the two optical transmission devices 251 (for example, optical transmission devices 251-1 and 251-2) and the two distributed stations 80q (for example, distributed stations 80q-1 and 80q-2), but the number of the optical transmission devices 251 and the number of the distributed stations 80q may be three or more.

The central station 70 and the optical transmission device 201, the optical transmission device 201 and the optical transmission device 251-1, the optical transmission device 201 and the optical transmission device 251-2, the optical transmission device 251-1 and the distributed station 80q-1, and the optical transmission device 251-2 and the distributed station 80q-2 are connected by an optical transmission line.

Functional units included in the optical transmission devices 201, 251-1, and 251-2 and the distributed stations 80q-1 and 80q-2 are similar to those of the signal transfer system 100o. Operation in some devices is different from that of the signal transfer system 100o. Hereinafter, differences from the signal transfer system 100o will be mainly described.

It is assumed that the distributed station 80q-1 is a base station that performs communication before the wireless terminal 50 performs the traffic steering. Moreover, it is assumed that the dedicated optical path is generated by the method illustrated in Fig. 25 between the optical transmission device 201 and the optical transmission device 251-1 connected to the distributed station 80q-1. In such a case, the wireless terminal 50q communicates with the central station 70 via the distributed station 80-1, the optical transmission device 251-1, and the optical transmission device 201.

The distributed station 80q includes the information analysis unit 31 and the information acquisition unit 41. The information acquisition unit 41 acquires the wireless control information for each traffic flow exchanged between the wireless terminal 50 and the central station 70. The information acquisition unit 41 outputs the acquired wireless control information to the information analysis unit 31.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information received from the distributed station 80q. In a case of determining that the traffic steering is necessary, the information analysis unit 31 requests the target distributed station 80q to perform the traffic steering. Moreover, in a case of determining that traffic steering is necessary, the information analysis unit 31 transmits an optical path generation instruction to each of the optical transmission devices 201 and 251. In this case, when transmitting the optical path generation instruction, the information analysis unit 31 notifies each of the optical transmission devices 201 and 251 of the optical path identifier of the dedicated optical path to be generated in each optical transmission device 251 connected to each distributed station 80q.

The optical transmission device 201 includes the control unit 21 and the control determination unit 22. The control unit 21 generates the dedicated optical path in a predetermined section according to the optical path generation control of the control determination unit 22. Moreover, when the optical signal is input after the generation of the dedicated optical path, the control unit 21 determines which of the basic optical path or the dedicated optical path the input optical signal is output to according to the optical path identifier notification of which is provided from the distributed station 80q.

When the optical path generation instruction is received from the distributed station 80q, the control determination unit 22 performs optical path generation control of the dedicated optical path for the control unit 21. For example, in a case where the optical path identifier of the dedicated optical path generated in each of the optical transmission devices 25 is included in the optical path generation instruction, the control determination unit 22 instructs the control unit 21 to generate the dedicated optical paths having different wavelengths.

The optical transmission devices 25-1 and 25-2 include control units 26-1 and 26-2 and control determination units 27-1 and 27-2. The control units 26-1 and 26-2 generate the dedicated optical path in a predetermined section according to the optical path generation control of the control determination units 27-1 and 27-2. Moreover, when the optical signal is input after the generation of the dedicated optical path, the control units 26-1 and 26-2 determine which of the basic optical path or the dedicated optical path the input optical signal is output to according to the optical path identifier notification of which is provided from the distributed station 80q.

When the optical path generation instruction is received from the distributed station 80q, the control determination units 27-1 and 27-2 perform the optical path generation control of the dedicated optical path for the control units 26-1 and 26-2. In a case where the optical path identifier of the dedicated optical path generated in the optical transmission device 25-1 is included in the optical path generation instruction, for example, the control determination unit 27-1 instructs the control unit 21-1 to generate the dedicated optical path. In a case where the optical path identifier of the dedicated optical path generated in the optical transmission device 25-2 is included in the optical path generation instruction, for example, the control determination unit 27-2 instructs the control unit 21-2 to generate the dedicated optical path.

Note that the information analysis unit 31 of the distributed station 80q may determine release of the traffic steering on the basis of the wireless control information in a similar procedure to the above procedure, and instruct each of the optical transmission devices 201 and 251 to delete the dedicated optical path. In this case, the control determination units 22 and 27 of the respective optical transmission devices 201 and 251 perform control to delete the dedicated optical path to be deleted.

Since processing at the time of traffic steering in the signal transfer system 100q is similar to the processing illustrated in Fig. 23, description thereof will be omitted. For example, the base station (Flow 1) in Fig. 23 may be set to the distributed station 80q-1, the base station (Flow 2) may be set to the distributed station 80q-2, and the core node 10 may be set to the central station 70.

According to the signal transfer system 100q configured as described above, it is possible to support the traffic steering of dividing the connection destination base station for each traffic flow of the wireless terminal 50 while reducing a delay in the dedicated optical path.

### (Modification of Application Example 2 of Fifth Embodiment)

The signal transfer system 100q may be modified as in Modification 1 and Modification 2 in the fifth embodiment.

### (Sixth Embodiment)

In a sixth embodiment, a signal transfer system using a central station and a distributed station arranged in a distributed manner as a base station will be described. More specifically, in the sixth embodiment, an optical transmission device is installed in a section called an MFH, the signal transfer system does not include a base station controller and an optical transmission device controller, and the base station instructs each optical transmission device to generate or switch an optical path.

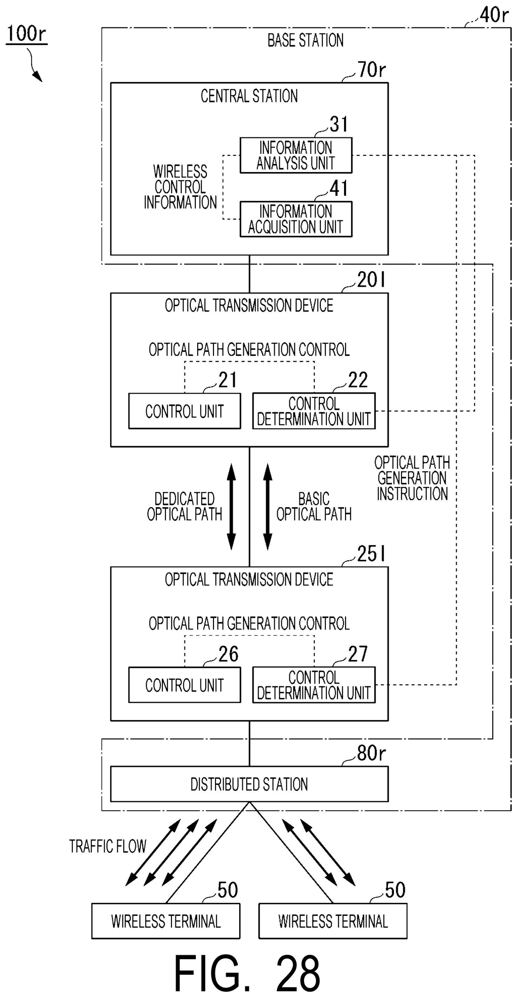

Fig. 28 is a diagram illustrating a configuration example of a signal transfer system 100r in the sixth embodiment. The signal transfer system 100r includes, for example, one or more optical transmission devices 201 and 251, and one or more base stations 40r. The base station 40r includes a central station 70r and one or more distributed stations 80r. As described above, the signal transfer system 100r is different in configuration from the signal transfer system 1001 in not including the core node 10 but including the base station 40r including the central station 70r and the one or more distributed stations 80r instead of the base station 40. Hereinafter, differences from the signal transfer system 1001 will be mainly described.

The central station 70r and the one or more distributed stations 80r are configured using, for example, a processor such as a CPU, a memory, and a communication interface. Each device of the central station 70r and the one or more distributed stations 80r functions as a communication device including a control unit when the processor executes a program.

The control unit provides each function for causing the communication device to function as the central station 70r or the distributed station 80r. Note that all or some of the functions of the control unit may be implemented by using hardware such as an ASIC, a PLD, or an FPGA. The program may be recorded on a computer-readable recording medium. The computer-readable recording medium is, for example, a portable medium such as a flexible disk, a magneto-optical disk, a ROM, a CD-ROM, or a semiconductor storage device (for example, SSD), or a storage device such as a hard disk or a semiconductor storage device built in a computer system. The above-described program may be transmitted via a telecommunication line.

For example, the central station 70r in the sixth embodiment is one or more DUs in a mobile communication system, and the one or more distributed stations 80r are RUs in the mobile communication system. In this case, a DU-RU section in which the optical transmission devices 201 and 251 are installed is referred to as a mobile fronthaul (MFH).

Note that the central station 70r may be a Wi-Fi controller, and one or more distributed stations 80r may be Wi-Fi access points. The signal transfer system 100r is not necessarily applied to the mobile communication system, and may be applied to a wireless communication system other than the mobile communication system.

The optical transmission devices 20l and 25l perform processing similar to that of the device of the same name described in the fourth embodiment.

The central station 70r is a central station that transmits and receives signals. The central station 70r includes an information analysis unit 31 and an information acquisition unit 41. The information acquisition unit 41 included in the central station 70r acquires wireless control information for each traffic flow exchanged between the wireless terminal 50 and the central station 70r. The information acquisition unit 41 included in the central station 70r outputs the acquired wireless control information to the information analysis unit 31.

The distributed station 80r is a device that communicates with a wireless terminal 50. The distributed station 80r transmits a signal transferred from the optical transmission device 251 to the wireless terminal 50 or transfers a signal received from the wireless terminal 50 to the optical transmission device 251 of the transfer destination by communication with the wireless terminal 50.

In the signal transfer system 1001 according to the sixth embodiment, the information analysis unit 31 and the information acquisition unit 41 are included in a control unit of the central station 70r.

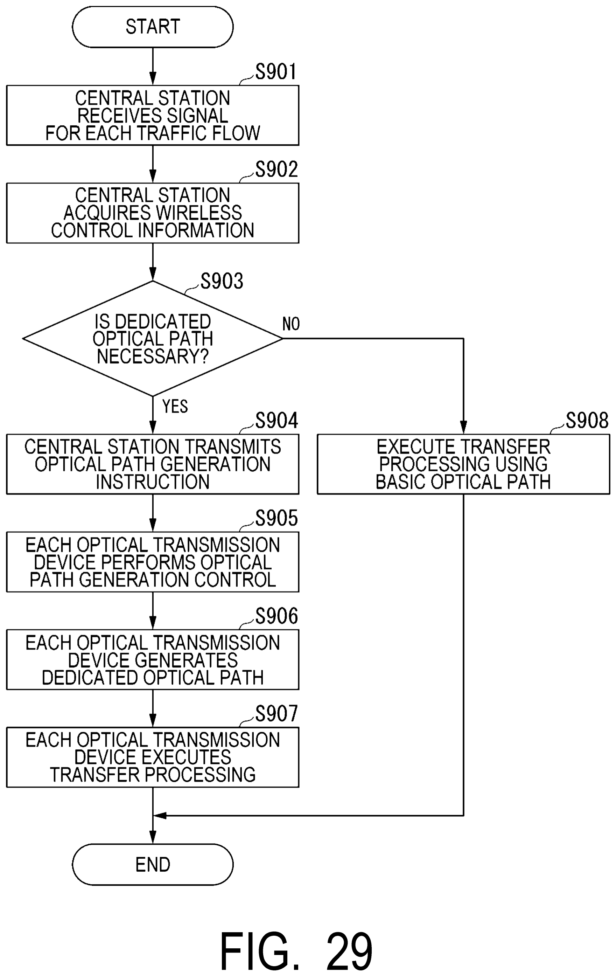

Fig. 29 is a flowchart illustrating an example of a flow of processing executed by the signal transfer system 100r in the sixth embodiment. In the signal transfer system 100r, the processing illustrated in Fig. 29 is repeatedly performed. Note that it is assumed that a basic optical path is generated in a wired section from the central station 70r to the distributed station 80r at the start of the processing in Fig. 29.

The distributed station 80r receives a signal of each traffic flow (step S901). The information acquisition unit 41 included in the distributed station 80r acquires the wireless control information for each traffic flow on the basis of the received signal (step S902). The information acquisition unit 41 outputs the acquired wireless control information to the information analysis unit 31 included in the distributed station 80r.

The information analysis unit 31 acquires the wireless control information output from the information acquisition unit 41. The information analysis unit 31 determines whether or not a dedicated optical path is necessary on the basis of the acquired wireless control information (step S903). In a case where the information analysis unit 31 determines that the dedicated optical path is necessary (YES in step S903), the information analysis unit 31 transmits an optical path generation instruction to each of the optical transmission devices 201 and 251 (step S904).

Control determination units 22 and 27 included in the respective optical transmission devices 201 and 251 acquire the optical path generation instruction transmitted from the central station 70r. The control determination units 22 and 27 perform optical path generation control on the basis of the acquired optical path generation instruction (step S905). Specifically, the control determination unit 22 included in the optical transmission device 201 instructs the control unit 21 to execute the optical path generation control, and the control determination unit 27 included in the optical transmission device 251 instructs the control unit 26 to execute the optical path generation control. As a result, the control units 21 and 26 of the respective optical transmission devices 201 and 251 generate the dedicated optical path between the optical transmission device 201 and the optical transmission device 251 (step S906). Thereafter, each of the optical transmission devices 201 and 251 performs transfer processing of an input optical signal (step S907).

Specifically, the distributed station 80r converts the signal transmitted from the wireless terminal 50 into an optical signal and outputs the optical signal to the optical transmission device 251. The optical transmission device 251 receives the optical signal output from the distributed station 80r. The control unit 26 of the optical transmission device 251 determines which of the basic optical path or the dedicated optical path the received optical signal is output to on the basis of the received optical signal and an optical path identifier. In a case of determining to output the optical signal to the basic optical path, the control unit 26 outputs the optical signal to the basic optical path. Meanwhile, in a case of determining to output the optical signal to the dedicated optical path, the control unit 26 outputs the optical signal to the dedicated optical path.

The optical signal output from the optical transmission device 251 is input to the optical transmission device 201 via the optical path. The optical transmission device 201 receives the optical signal output from the optical transmission device 251. The control unit 21 of the optical transmission device 201 transmits the received optical signal to the central station 70r via the optical transmission line. Note that, in a case where the dedicated optical path is also generated between the central station 70r and the optical transmission device 201, the control unit 21 determines which of the basic optical path or the dedicated optical path the received optical signal is output to on the basis of the received optical signal and the optical path identifier. In this way, in the signal transfer system 100r, a signal based on a specific traffic flow can be transferred through the dedicated optical path.

In the processing of step S903, in a case where the information analysis unit 31 included in the central station 70r determines that the dedicated optical path is not necessary (NO in step S903), the information analysis unit 31 does not transmit the optical path generation instruction to each of the optical transmission devices 201 and 251. As a result, the transfer processing using the basic optical path is executed in the wired section from the distributed station 80r to the central station 70r (step S908).

According to the signal transfer system 100r configured as described above, it is possible to obtain similar effects to those of the first embodiment even in the configuration not including a control device such as the base station controller 30 or the optical transmission device controller 35.

### (Modification 1 of Sixth Embodiment)

The signal transfer system 100r may include the optical transmission device controller 35 illustrated in Fig. 1 and may not include the base station controller 30. In such a configuration, the optical transmission device 201 may not include the control determination unit 22, and the optical transmission device 251 may not include the control determination unit 27. The information analysis unit 31 of the central station 70r transmits the optical path generation instruction to the optical transmission device controller 35. A control determination unit 36 of the optical transmission device controller 35 receives the optical path generation instruction transmitted from the central station 70r. The control determination unit 36 controls the optical transmission devices 201 and 251 according to the received optical path generation instruction.

### (Modification 2 of Sixth Embodiment)

The signal transfer system 100r may include the base station controller 30 illustrated in Fig. 1 and may not include the optical transmission device controller 35. In such a configuration, the central station 70r may not include the information analysis unit 31. The information acquisition unit 41 of the central station 70r transmits the acquired wireless control information to the base station controller 30. The information analysis unit 31 of the base station controller 30 receives the wireless control information transmitted from the central station 70r. The information analysis unit 31 determines necessity of generation of the dedicated optical path on the basis of the received wireless control information. In a case of determining that the generation of the dedicated optical path is necessary as a result of the determination, the information analysis unit 31 transmits the optical path generation instruction to the optical transmission devices 201 and 251. The control determination unit 22 of the optical transmission device 201 and the control determination unit 27 of the optical transmission device 251 receive the optical path generation instruction transmitted from the base station controller 30. The control determination units 22 and 27 perform control according to the received optical path generation instruction.

### (Application Example 1 of Sixth Embodiment)

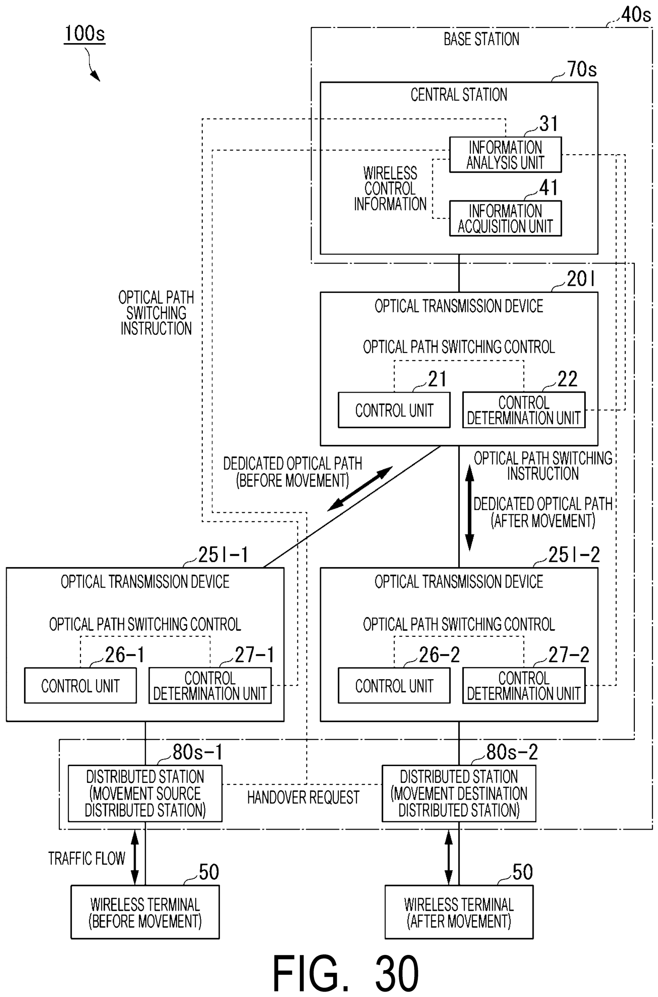

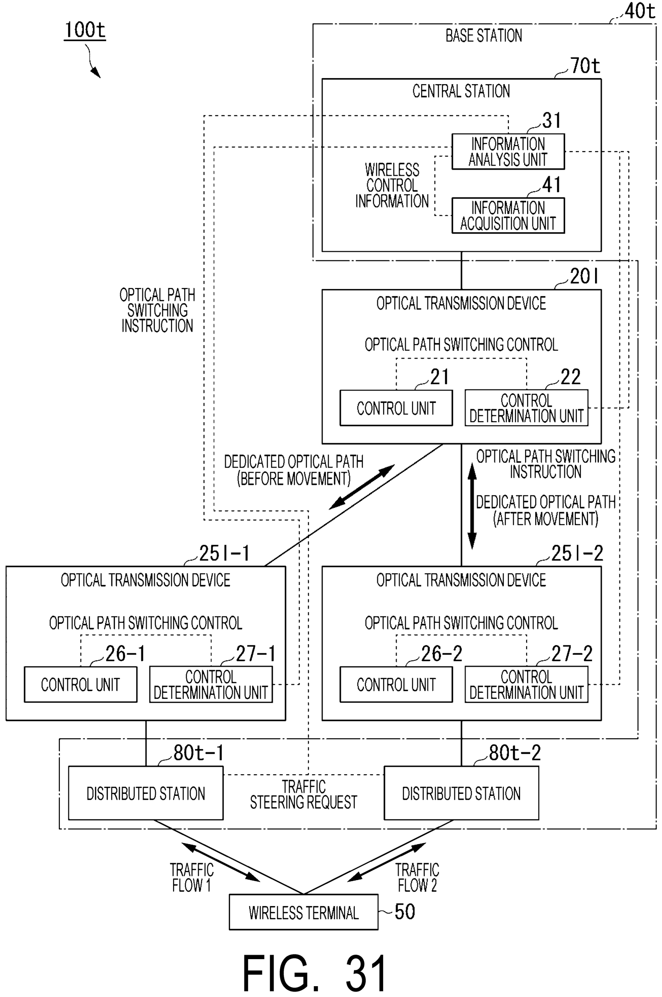

Next, an application example of the signal transfer system 100r in the sixth embodiment will be described with reference to Figs. 30 and 31. Fig. 30 is a diagram illustrating a configuration example of an application example (part 1) of the signal transfer system 100r according to the sixth embodiment. In the application example (part 1) of the signal transfer system 100r, switching of the dedicated optical path according to handover will be described.

As illustrated in Fig. 30, a signal transfer system 100s includes, for example, the one or more optical transmission devices 201 and 251, and one or more base stations 40s. The base station 40s includes a central station 70s and one or more distributed stations 80s. Fig. 30 illustrates a configuration in which the signal transfer system 100s includes the two optical transmission devices 251 (for example, optical transmission devices 251-1 and 251-2) and the two distributed stations 80s (for example, distributed stations 80s-1 and 80s-2), but the number of the optical transmission devices 251 and the number of the distributed stations 80s may be three or more. Hereinafter, differences from the signal transfer system 1001 will be mainly described.

It is assumed that the distributed station 80s-1 is a distributed station (movement source distributed station) that performs communication before the wireless terminal 50 moves, and the distributed station 80s-2 is a distributed station (movement destination distributed station) that performs communication after the wireless terminal 50 moves. Moreover, it is assumed that the dedicated optical path is generated by the method illustrated in Fig. 29 between the optical transmission device 201 and the optical transmission device 251-1 connected to the distributed station 80s-1. In such a case, the wireless terminal 50 communicates with the central station 70s via the distributed station 80s-1, the optical transmission device 251-1, and the optical transmission device 201 before moving.

The central station 70s includes the information analysis unit 31 and the information acquisition unit 41. The information acquisition unit 41 acquires the wireless control information for each traffic flow exchanged between the wireless terminal 50 and the central station 70s. The information acquisition unit 41 outputs the acquired wireless control information to the information analysis unit 31.

The information analysis unit 31 acquires the wireless control information acquired by the information acquisition unit 41. The information analysis unit 31 determines whether or not the dedicated optical path is necessary for a specific traffic flow of the wireless terminal 50 on the basis of the acquired wireless control information.

Moreover, the information analysis unit 31 determines whether or not the handover is necessary on the basis of the wireless control information received from the distributed station 80s. In a case of determining that the handover is necessary, the information analysis unit 31 performs a handover request to the target distributed station 80s. Moreover, in a case of determining that the handover is necessary, the information analysis unit 31 transmits an optical path switching instruction to each of the optical transmission devices 201 and 251.

When transmitting the optical path switching instruction, the information analysis unit 31 notifies each of the optical transmission devices 201 and 251 of information indicating the distributed station 80s-1 as a switching source, information indicating the distributed station 80s-2 as a switching destination, and the optical path identifier of the dedicated optical path.

The optical transmission device 201 includes a control unit 21 and a control determination unit 22. The control unit 21 generates the dedicated optical path in a predetermined section according to the optical path generation control of the control determination unit 22. Moreover, when the optical signal is input after the generation of the dedicated optical path, the control unit 21 determines which of the basic optical path or the dedicated optical path the input optical signal is output to according to the optical path identifier notification of which is provided from the distributed station 80s. Moreover, the control unit 21 switches the dedicated optical path in a predetermined section according to optical path switching control of the control determination unit 22. Here, the optical path switching control may be performed in a way of further generating another dedicated optical path for the path after the switching and deleting the dedicated optical path of the path before the switching, or may be performed in a way of switching an output port of the optical transmission device 201 (for example, switching an output port of the optical transmission device 201 from for the optical transmission device 251-1 to for the optical transmission device 251-2) while keeping one dedicated optical path.

When the optical path generation instruction is received from the distributed station 80s, the control determination unit 22 performs optical path generation control of the dedicated optical path for the control unit 21. Moreover, when the optical path switching instruction is received from the distributed station 80s, the control determination unit 22 performs the optical path switching control of the dedicated optical path for the control unit 21.

The optical transmission devices 25-1 and 25-2 include control units 26-1 and 26-2 and control determination units 27-1 and 27-2. The control units 26-1 and 26-2 generate the dedicated optical path in a predetermined section according to the optical path generation control of the control determination units 27-1 and 27-2. Moreover, when the optical signal is input after the generation of the dedicated optical path, the control units 26-1 and 26-2 determine which of the basic optical path or the dedicated optical path the input optical signal is output to according to the optical path identifier notification of which is provided from the distributed station 80s. Moreover, the control units 26-1 and 26-2 switch the dedicated optical path in a predetermined section according to the optical path switching control of the control determination units 27-1 and 27-2.

When the optical path generation instruction is received from the distributed station 80s, the control determination units 27-1 and 27-2 perform optical path generation control of the dedicated optical path for the control units 26-1 and 26-2. Moreover, when the optical path switching instruction is received from the distributed station 80s, the control determination units 27-1 and 27-2 perform the optical path switching control of the dedicated optical path for the control units 26-1 and 26-2.

In the signal transfer system 100s, the information analysis unit 31 and the information acquisition unit 41 are provided in a control unit of the central station 70s.

Since processing at the time of handover in the signal transfer system 100s is similar to the processing illustrated in Fig. 21, description thereof will be omitted. For example, a movement source base station in Fig. 21 may be set to a movement source distributed station, a movement destination base station may be set to a movement destination distributed station, and the core node 10 may be set to the central station 70s.

According to the signal transfer system 100s configured as described above, it is possible to cope with the handover due to movement of the wireless terminal 50 while reducing a delay in the dedicated optical path.

### (Modification of Application Example 1 of Sixth Embodiment)

The signal transfer system 100s may be modified as in Modification 1 and Modification 2 in the sixth embodiment.

### (Application Example 2 of Sixth Embodiment)

Next, an application example of the signal transfer system 100r in the sixth embodiment will be described. Fig. 31 is a diagram illustrating a configuration example of an application example (part 2) of the signal transfer system 100r according to the sixth embodiment. In the application example (part 2) of the signal transfer system 100r, generation of the dedicated optical path for each base station according to traffic steering will be described.

As illustrated in Fig. 31, a signal transfer system 100t includes, for example, the one or more optical transmission devices 201 and 251, and one or more base stations 40t. The base station 40t includes a central station 70t and one or more distributed stations 80t. Fig. 31 illustrates a configuration in which the signal transfer system 100t includes the two optical transmission devices 251 (for example, optical transmission devices 251-1 and 251-2) and the two distributed stations 80t (for example, distributed stations 80t-1 and 80t-2), but the number of the optical transmission devices 251 and the number of the distributed stations 80t may be three or more.

The central station 70t and the optical transmission device 201, the optical transmission device 201 and the optical transmission device 251-1, the optical transmission device 201 and the optical transmission device 251-2, the optical transmission device 251-1 and the distributed station 80t-1, and the optical transmission device 251-2 and the distributed station 80t-2 are connected by an optical transmission line.

Functional units included in the optical transmission devices 201, 251-1, and 251-2 and the central station 70t are similar to those of the signal transfer system 100r. Operation in some devices is different from that of the signal transfer system 100r. Hereinafter, differences from the signal transfer system 100r will be mainly described.

It is assumed that the distributed station 80t-1 is a base station that performs communication before the wireless terminal 50 performs the traffic steering. Moreover, it is assumed that the dedicated optical path is generated by the method illustrated in Fig. 29 between the optical transmission device 201 and the optical transmission device 251-1 connected to the distributed station 80t-1. In such a case, the wireless terminal 50t communicates with the central station 70t via the distributed station 80-1, the optical transmission device 251-1, and the optical transmission device 201.

The central station 70t includes the information analysis unit 31 and the information acquisition unit 41. The information acquisition unit 41 acquires the wireless control information for each traffic flow exchanged between the wireless terminal 50 and the central station 70t. The information acquisition unit 41 outputs the acquired wireless control information to the information analysis unit 31.

The information analysis unit 31 acquires the wireless control information acquired by the information acquisition unit 41 of the central station 70t. The information analysis unit 31 determines whether or not the dedicated optical path is necessary for a specific traffic flow of the wireless terminal 50 on the basis of the acquired wireless control information.

Further, the information analysis unit 31 determines whether or not the traffic steering for the wireless terminal 50 is necessary on the basis of the wireless control information acquired by the information acquisition unit 41 of the central station 70t. In a case of determining that the traffic steering is necessary, the information analysis unit 31 requests the target distributed station 80t to perform the traffic steering. Moreover, in a case of determining that traffic steering is necessary, the information analysis unit 31 transmits an optical path generation instruction to each of the optical transmission devices 201 and 251. In this case, when transmitting the optical path generation instruction, the information analysis unit 31 notifies each of the optical transmission devices 201 and 251 of the optical path identifier of the dedicated optical path to be generated in each optical transmission device 251 connected to each distributed station 80t.

The optical transmission device 201 includes a control unit 21 and a control determination unit 22. The control unit 21 generates the dedicated optical path in a predetermined section according to the optical path generation control of the control determination unit 22. Moreover, when the optical signal is input after the generation of the dedicated optical path, the control unit 21 determines which of the basic optical path or the dedicated optical path the input optical signal is output to according to the optical path identifier notification of which is provided from the distributed station 80t.

When the optical path generation instruction is received from the distributed station 80t, the control determination unit 22 performs optical path generation control of the dedicated optical path for the control unit 21. For example, in a case where the optical path identifier of the dedicated optical path generated in each of the optical transmission devices 251 is included in the optical path generation instruction, the control determination unit 22 instructs the control unit 21 to generate the dedicated optical paths having different wavelengths.

The optical transmission devices 25-1 and 25-2 include the control units 26-1 and 26-2 and the control determination units 27-1 and 27-2. The control units 26-1 and 26-2 generate the dedicated optical path in a predetermined section according to the optical path generation control of the control determination units 27-1 and 27-2. Moreover, when the optical signal is input after the generation of the dedicated optical path, the control units 26-1 and 26-2 determine which of the basic optical path or the dedicated optical path the input optical signal is output to according to the optical path identifier notification of which is provided from the base station 40l.

When the optical path generation instruction is received from the distributed station 80t, the control determination units 27-1 and 27-2 perform optical path generation control of the dedicated optical path for the control units 26-1 and 26-2. For example, in a case where the optical path identifier of the dedicated optical path generated in each of the control units 26-1 and 26-2 is included in the optical path generation instruction, the control determination units 27-1 and 27-2 instruct the control units 26-1 and 26-2 to generate the dedicated optical paths having different wavelengths.

Note that the information analysis unit 31 of the central station 70t may determine release of the traffic steering on the basis of the wireless control information in a similar procedure to the above procedure, and instruct each of the optical transmission devices 201 and 251 to delete the dedicated optical path. In this case, the control determination units 22 and 27 of the respective optical transmission devices 201 and 251 perform control to delete the dedicated optical path to be deleted.

Since processing at the time of traffic steering in the signal transfer system 100t is similar to the processing illustrated in Fig. 23, description thereof will be omitted. For example, the base station (Flow 1) in Fig. 23 may be set to the distributed station 80t-1, the base station (Flow 2) may be set to the distributed station 80t-2, and the core node 10 may be set to the central station 70t.

According to the signal transfer system 100t configured as described above, it is possible to support the traffic steering of dividing the connection destination base station for each traffic flow of the wireless terminal 50 while reducing a delay in the dedicated optical path.

### (Modification of Application Example 2 of Sixth Embodiment)

The signal transfer system 100t may be modified as in Modification 1 and Modification 2 in the sixth embodiment.

The following problem may occur in the switching of the dedicated optical path according to the handover described as the application examples of the signal transfer systems in the first to sixth embodiments. Specifically, when the dedicated optical path is switched, if the optical path switching is not performed at appropriate timing in accordance with the path switching accompanying a handover sequence between the base station and the core node or between the distributed station and the central station, there is a possibility that a packet to be transmitted to the movement source base station is transmitted to the movement destination base station and packet loss occurs. Furthermore, since communication interruption occurs in the optical transmission device when the optical path switching is executed, packet loss occurs in a case where a packet is input to the optical transmission device at the timing of communication interruption. Therefore, in the seventh to twelfth embodiments to be described below, configurations for solving the above problem that may occur in the first to sixth embodiments will be described. Specifically, the above problem is solved by adjusting instruction timing of the optical path switching transmitted from the optical transmission device controller or by buffering a packet in any one of the optical transmission device, the base station, or the core node in accordance with the communication interruption of the optical transmission device.

### (Seventh Embodiment)

In a seventh embodiment, a configuration for solving the above problem that may occur in the first embodiment will be described. The configuration of a signal transfer system according to the seventh embodiment is similar to that of the signal transfer system 100d in the first embodiment. Hereinafter, differences from the first embodiment will be mainly described.

An optical transmission device controller 35 performs processing similar to the optical transmission device controller 35 in Application Example 1 of the first embodiment. The optical transmission device controller 35 includes a control determination unit 36. The control determination unit 36 performs processing similar to the control determination unit 36 in Application Example 1 of the first embodiment.

Further, the control determination unit 36 adjusts timing of optical path switching control of a dedicated optical path accompanying handover. Here, the adjustment of timing of optical path switching control means adjusting timing for instructing optical transmission devices 20 and 25 to switch an optical path. Specifically, the control determination unit 36 may delay instruction timing of the optical path switching control in consideration of a delay time according to a distance between a base station 40 and a core node 10 acquired in advance, or may transmit an instruction of the optical path switching control to the optical transmission devices 20 and 25 earlier by a time difference in consideration of the time difference from timing at which the optical transmission devices 20 and 25 receive the instruction of the optical path switching control until optical path switching is actually performed. The intention of delaying the instruction timing of the optical path switching control in consideration of the delay time according to the distance between the base station 40 and the core node 10 and transmitting the instruction is to perform the optical path switching after path change in the core node 10 is completed. The time difference from the timing at which the optical transmission devices 20 and 25 receive the instruction until the optical path switching is actually performed may be measured in advance and held by the control determination unit 36, or may be acquired from another device.

Note that the adjustment of the timing of the optical path switching control may be performed not by the optical transmission device controller 35 but by a base station controller 30. In this case, the base station controller 30 may delay the transmission timing of the optical path switching instruction to the optical transmission device controller 35 by a time corresponding to the distance between the base station 40 and the core node 10 acquired in advance. The optical transmission device controller 35 performs the optical path switching control of the dedicated optical path for the optical transmission devices 20 and 25 at timing of receiving the optical path switching instruction. Alternatively, the base station controller 30 may hold information of the time difference from the timing at which the optical transmission devices 20 and 25 receive the instruction of the optical path switching control until the optical path switching is actually performed, and transmit the optical path switching instruction to the optical transmission device controller 35 at timing in which the time difference is taken into consideration. The optical transmission device controller 35 performs the optical path switching control of the dedicated optical path for the optical transmission devices 20 and 25 at timing of receiving the optical path switching instruction. Alternatively, the base station controller 30 may adjust the timing of the optical path switching control of the optical transmission device controller 35 by transmitting the optical path switching instruction and transmitting, to the optical transmission device controller 35, information of the time to be taken into consideration as the timing of the optical path switching control in the optical transmission device controller 35.

Any of the optical transmission devices 20 and 25, the base station 40, or the core node 10 may temporarily buffer the packet in accordance with the communication interruption of the optical transmission devices 20 and 25. As a result, it is possible to prevent the packet loss due to the communication interruption in the optical transmission devices 20 and 25 caused when the optical path switching is executed in the optical transmission devices 20 and 25. Here, in a case where the packet is buffered by the optical transmission devices 20 and 25, the optical transmission device controller 35 may include, for example, information of buffer start timing and a buffer time of the packet in consideration of the time difference between the transmission timing of the optical path switching control and the execution of the optical path switching in the instruction of the optical path switching control to be transmitted to the optical transmission devices 20 and 25. The buffer time represents a period during which the packet is buffered.

The optical transmission devices 20 and 25 buffer the packet input to the optical transmission devices 20 and 25 within a period indicated by the buffer time with reference to the buffer start timing of the packet included in the instruction of the optical path switching control from the optical transmission device controller 35. The optical transmission devices 20 and 25 transfer the buffered packet after the period indicated by the buffer time has elapsed.

In a case where the packet is buffered in the base station 40 or the core node 10, the optical transmission device controller 35 transmits, to the base station 40 or the core node 10, for example, a control instruction including information of the buffer start timing and the buffer time of the packet in consideration of the time difference between the transmission timing of the optical path switching control and the execution of the optical path switching. Note that the buffer control instruction may be transmitted from the base station controller 30.

The base station 40 or the core node 10 buffers the packet input to the base station 40 or the core node 10 within a period indicated by the buffer time with reference to the buffer start timing of the packet included in the control instruction transmitted from the optical transmission device controller 35 or the base station controller 30. The base station 40 or the core node 10 transfers the buffered packet after the period indicated by the buffer time has elapsed.

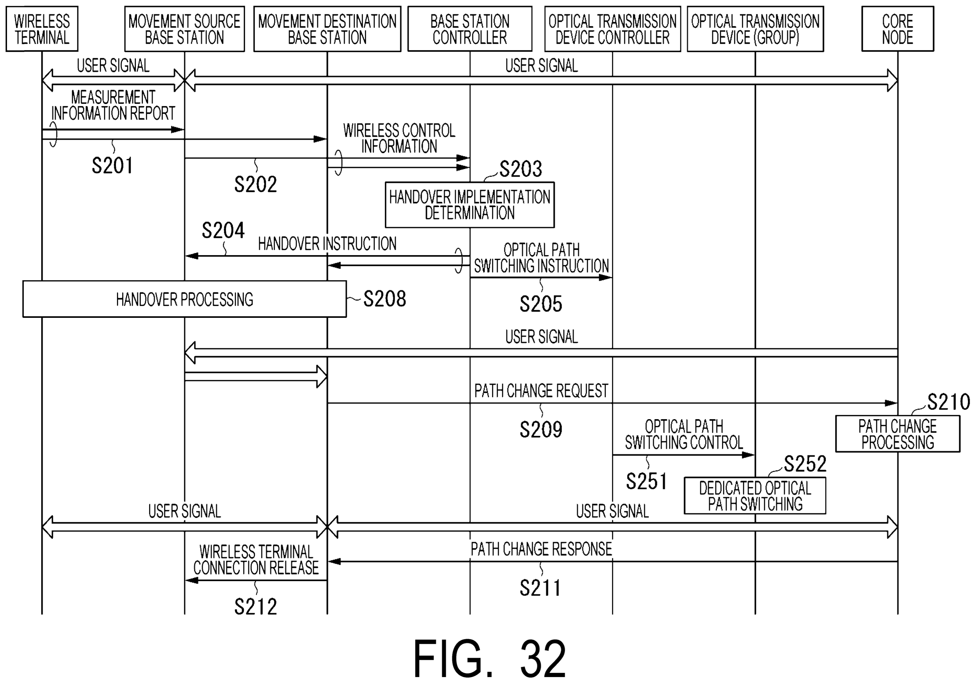

Fig. 32 is a sequence diagram illustrating a flow of processing of the signal transfer system 100d according to the seventh embodiment. Note that, in Fig. 32, the optical transmission devices 20 and 25 are collectively referred to as an optical transmission device (group). At the start of the processing of Fig. 32, it is assumed that a wireless terminal 50 is connected to a base station 40-1 as a movement source base station. Therefore, a user signal transmitted from the wireless terminal 50 is transferred to the core node 10 via the base station 40-1. In Fig. 32, the same processing steps as those in Fig. 7 will be denoted by the same reference signs as those used in Fig. 7, and description thereof will be omitted.

Processing from step S201 to step S205 and processing from step S208 to step S210 are similar to those in Fig. 7. As illustrated in Fig. 32, even after handover processing, a downlink user signal is transmitted to the movement source base station until path change processing is completed. When the processing from step S201 to step S205 and the processing from step S208 to step S210 are completed, the control determination unit 36 of the optical transmission device controller 35 performs the optical path switching control of the dedicated optical path for the optical transmission devices 20 and 25 according to the optical path switching instruction transmitted from the base station controller 30 in the processing of step S205 (step S251).

At this time, the control determination unit 36 adjusts the transmission timing of the optical path switching control so that the optical path switching is executed immediately before the core node 10 starts transmitting a downlink signal to the movement destination base station, in consideration of a delay according to a distance between the base station 40 and the core node 10 or the time difference from the timing when the optical transmission devices 20 and 25 receive the instruction of the optical path switching control to the actual execution of the optical path switching. The control determination unit 36 transmits the instruction of the optical path switching control to the optical transmission devices 20 and 25 at the transmission timing of the optical path switching control.

Control units 21 and 26 of the optical transmission devices 20 and 25 switch the dedicated optical path according to the optical path switching control from the optical transmission device controller 35 (step S252). Specifically, a control unit 26-1 of an optical transmission device 25-1 deletes the dedicated optical path to the optical transmission device 20. A control unit 26-2 of an optical transmission device 25-2 generates the dedicated optical path to the optical transmission device 20. The control unit 21 of the optical transmission device 20 performs switching so as to form the dedicated optical path to the optical transmission device 25.

In the above-described example, for convenience of description, the configuration has been described in which the control determination unit 36 of the optical transmission device controller 35 performs the optical path switching control of the dedicated optical path after the processing from step S201 to step S205 and the processing from step S208 to step S210 are completed. However, the control determination unit 36 may adjust the transmission timing of the optical path switching control after receiving the optical path switching instruction transmitted from the base station controller 30 and transmit the instruction of the optical path switching control to the optical transmission devices 20 and 25.

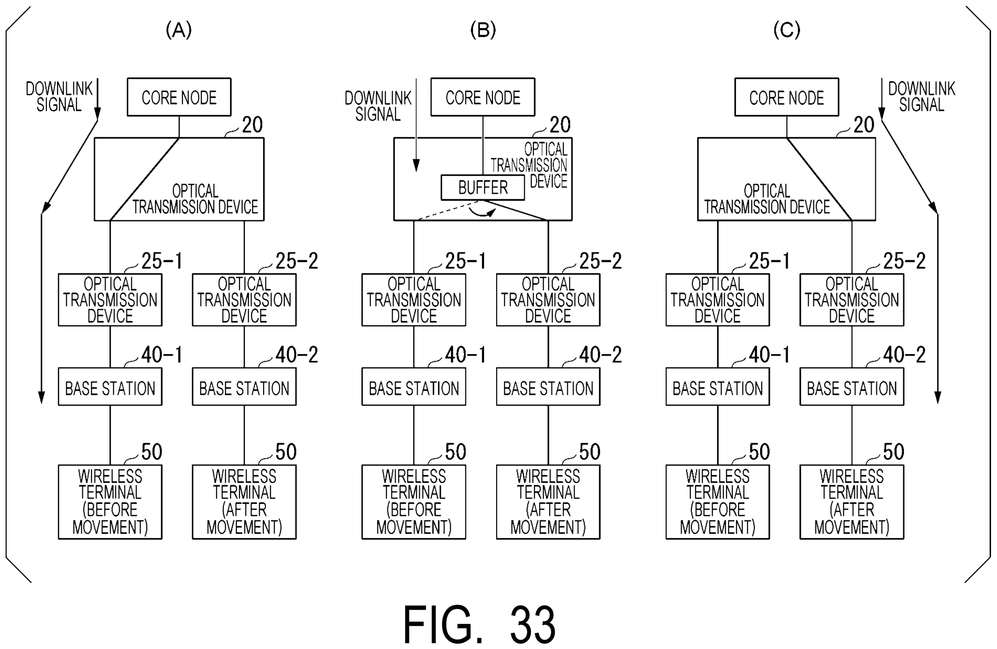

Next, a specific example of a case of buffering a packet in the optical path switching will be described with reference to Figs. 33 to 36. Fig. 33 is a diagram (part 1) for describing the processing of buffering the packet in the optical path switching according to the seventh embodiment. In Fig. 33, a case where the downlink signal is buffered by the optical transmission device 20 will be described. (A) of Fig. 33 illustrates a state before the optical path switching, (B) of Fig. 33 illustrates a state at the time of optical path switching, and (C) of Fig. 33 illustrates a state after the optical path switching.

As illustrated in (A) of Fig. 33, before the optical path switching, the optical transmission device 20 generates the dedicated optical path to the optical transmission device 25-1. Therefore, the downlink signal transmitted from the core node 10 is transferred to the optical transmission device 20 via the optical transmission device 25-1. The optical transmission device 25-1 transfers the transferred downlink signal to the wireless terminal 50 via the base station 40-1.

As illustrated in (B) of Fig. 33, at the time of optical path switching, the optical transmission device 20 temporarily buffers the downlink signal transmitted from the core node 10 in response to a buffer instruction from the optical transmission device controller 35. As described above, the optical transmission device 20 buffers the downlink signal with the buffer provided inside such that the packet loss does not occur due to instantaneous interruption at the time of optical path switching. Further, the optical transmission device 20 deletes the dedicated optical path generated with the optical transmission device 25-1 and generates the dedicated optical path to the optical transmission device 25-2 according to the optical path switching control of the optical transmission device controller 35. In this manner, the optical transmission device 20 performs the optical path switching of the dedicated optical path.

After the period indicated by the buffer time has elapsed, the optical transmission device 20 transfers the buffered downlink signal to the optical transmission device 25-2 as illustrated in (C) of Fig. 33. The optical transmission device 25-2 transfers the transferred downlink signal to the wireless terminal 50 via the base station 40-2.

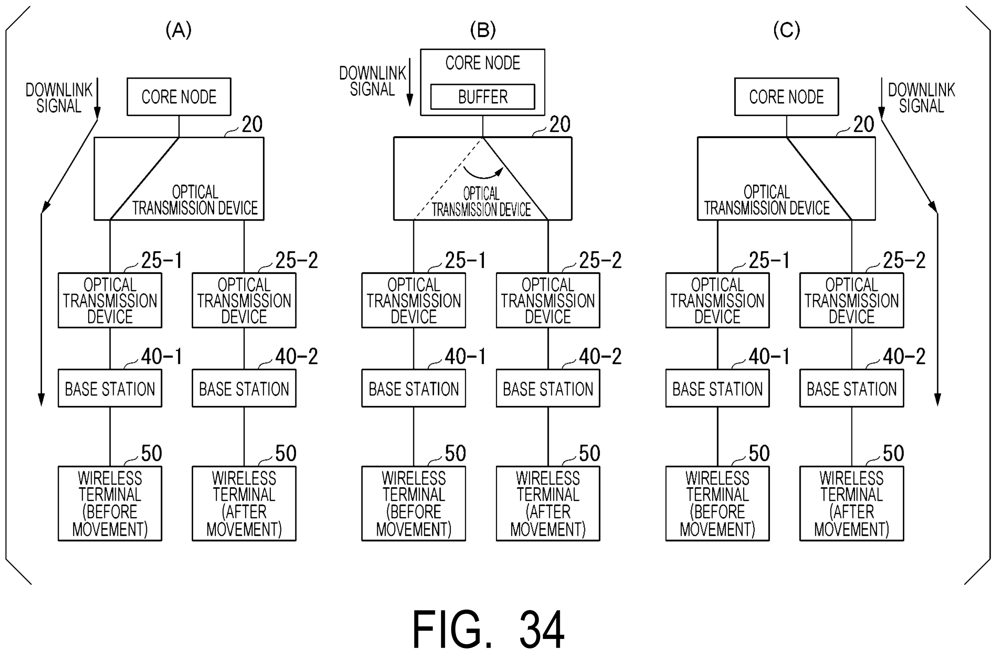

Fig. 34 is a diagram (part 2) for describing the processing of buffering the packet in the optical path switching according to the seventh embodiment. In Fig. 34, a case where a downlink signal is buffered by the core node 10 will be described. (A) of Fig. 34 illustrates a state before the optical path switching, (B) of Fig. 34 illustrates a state at the time of optical path switching, and (C) of Fig. 34 illustrates a state after the optical path switching.

As illustrated in (A) of Fig. 34, before the optical path switching, the optical transmission device 20 generates the dedicated optical path to the optical transmission device 25-1. Therefore, the downlink signal transmitted from the core node 10 is transferred to the optical transmission device 20 via the optical transmission device 25-1. The optical transmission device 25-1 transfers the transferred downlink signal to the wireless terminal 50 via the base station 40-1.

As illustrated in (B) of Fig. 34, at the time of optical path switching, the core node 10 temporarily buffers the downlink signal scheduled to be transmitted in response to a buffer instruction from the optical transmission device controller 35. As described above, the core node 10 buffers the downlink signal with the buffer provided inside such that the packet loss does not occur due to instantaneous interruption at the time of optical path switching. The optical transmission device 20 deletes the dedicated optical path generated with the optical transmission device 25-1 and generates the dedicated optical path to the optical transmission device 25-2 according to the optical path switching control of the optical transmission device controller 35. In this manner, the optical transmission device 20 performs the optical path switching of the dedicated optical path.

After the period indicated by the buffer time has elapsed, the core node 10 transmits the buffered downlink signal to the optical transmission device 20 as illustrated in (C) of Fig. 34. The optical transmission device 20 transfers the downlink signal transmitted from the core node 10 to the optical transmission device 25-2. The optical transmission device 25-2 transfers the transferred downlink signal to the wireless terminal 50 via the base station 40-2.

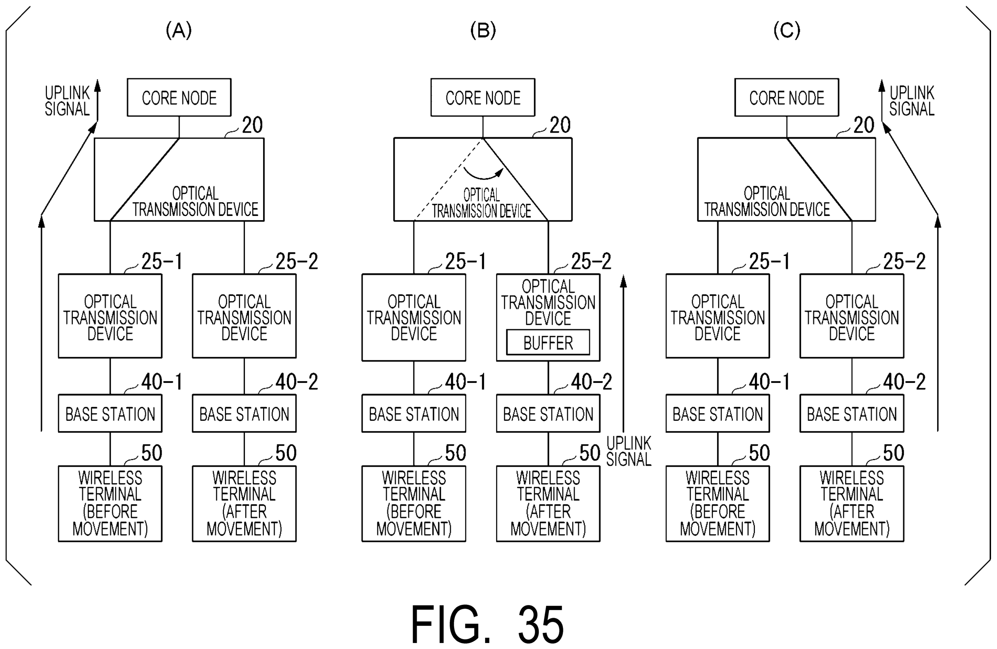

Fig. 35 is a diagram (part 3) for describing the processing of buffering the packet in the optical path switching according to the seventh embodiment. In Fig. 35, a case where an uplink signal is buffered by the optical transmission device 25 will be described. (A) of Fig. 35 illustrates a state before the optical path switching, (B) of Fig. 35 illustrates a state at the time of optical path switching, and (C) of Fig. 35 illustrates a state after the optical path switching.

As illustrated in (A) of Fig. 35, before the optical path switching, the optical transmission device 20 generates the dedicated optical path to the optical transmission device 25-1. Therefore, the uplink signal transmitted from the wireless terminal 50 is transferred to the core node 10 via the base station 40-1, the optical transmission device 25-1, and the optical transmission device 20.

As illustrated in (B) of Fig. 35, at the time of optical path switching, the optical transmission device 25-2 as an optical path switching destination temporarily buffers the uplink signal transmitted from the wireless terminal 50 in response to a buffer instruction from the optical transmission device controller 35. As described above, the optical transmission device 25-2 buffers the downlink signal with the buffer provided inside such that the packet loss does not occur due to instantaneous interruption at the time of optical path switching. The optical transmission device 20 deletes the dedicated optical path generated with the optical transmission device 25-1 and generates the dedicated optical path to the optical transmission device 25-2 according to the optical path switching control of the optical transmission device controller 35. In this manner, the optical transmission device 20 performs the optical path switching of the dedicated optical path.

The optical transmission device 25-2 generates the dedicated optical path to the base station 40-2 according to the optical path switching control of the optical transmission device controller 35. The optical transmission device 25-1 deletes the generated dedicated optical path to the base station 40-2 according to the optical path switching control of the optical transmission device controller 35.

After the period indicated by the buffer time has elapsed, the optical transmission device 25-2 transfers the buffered uplink signal to the optical transmission device 20 as illustrated in (C) of Fig. 35. The optical transmission device 20 transfers the transferred uplink signal to the core node 10.

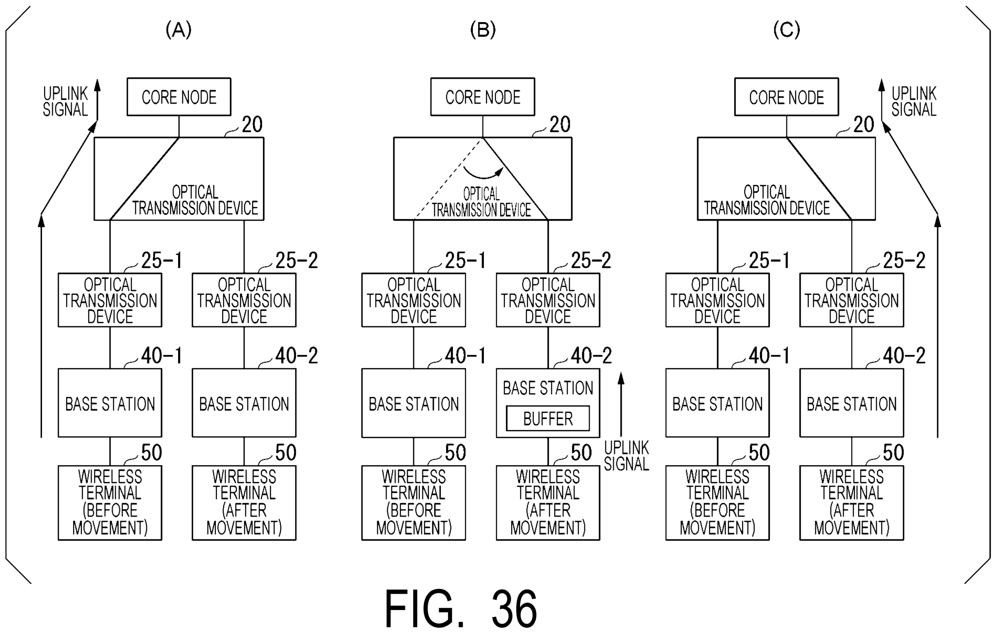

Fig. 36 is a diagram (part 4) for describing the processing of buffering the packet in the optical path switching according to the seventh embodiment. In Fig. 36, a case where an uplink signal is buffered by the base station 40 will be described. (A) of Fig. 36 illustrates a state before the optical path switching, (B) of Fig. 36 illustrates a state at the time of optical path switching, and (C) of Fig. 36 illustrates a state after the optical path switching.

As illustrated in (A) of Fig. 36, before the optical path switching, the optical transmission device 20 generates the dedicated optical path to the optical transmission device 25-1. Therefore, the uplink signal transmitted from the wireless terminal 50 is transferred to the core node 10 via the base station 40-1, the optical transmission device 25-1, and the optical transmission device 20.

As illustrated in (B) of Fig. 36, at the time of optical path switching, the base station 40-2 as an optical path switching destination temporarily buffers the uplink signal transmitted from the wireless terminal 50 in response to a buffer instruction from the optical transmission device controller 35. As described above, the base station 40-2 buffers the downlink signal with the buffer provided inside such that the packet loss does not occur due to instantaneous interruption at the time of optical path switching. The optical transmission device 20 deletes the dedicated optical path generated with the optical transmission device 25-1 and generates the dedicated optical path to the optical transmission device 25-2 according to the optical path switching control of the optical transmission device controller 35. In this manner, the optical transmission device 20 performs the optical path switching of the dedicated optical path.

The optical transmission device 25-2 generates the dedicated optical path to the base station 40-2 according to the optical path switching control of the optical transmission device controller 35. The optical transmission device 25-1 deletes the generated dedicated optical path to the base station 40-2 according to the optical path switching control of the optical transmission device controller 35.

After the period indicated by the buffer time has elapsed, the base station 40-2 transfers the buffered uplink signal to the optical transmission device 25-2 as illustrated in (C) of Fig. 36. The optical transmission device 25-2 transfers the transferred uplink signal to the core node 10 via the optical transmission device 20. Note that, in the following eighth and ninth embodiments, the processing of buffering a packet in the optical path switching is similar where a device included in the signal transfer system is merely changed.

According to the signal transfer system 100d in the seventh embodiment configured as described above, it is possible to obtain similar effects to those of the first embodiment. Furthermore, in the signal transfer system 100d according to the seventh embodiment, it is possible to suppress occurrence of the packet loss by adjusting the instruction timing of the optical path switching or by buffering the packet in any of the optical transmission device, the base station, or the core node in accordance with the communication interruption of the optical transmission device.

### (Modification of Seventh Embodiment)

The signal transfer system 100d according to the seventh embodiment may be modified as in Modification 1, Modification 2, and Modification 3 in the first embodiment.

### (Eighth Embodiment)

In an eighth embodiment, a configuration for solving the above problem that may occur in the second embodiment will be described. The configuration of a signal transfer system in the eighth embodiment is similar to that of the signal transfer system 100g in the second embodiment. Hereinafter, differences from the second embodiment will be mainly described.

An optical transmission device controller 35 performs processing similar to the optical transmission device controller 35 in Application Example 1 of the second embodiment. The optical transmission device controller 35 includes a control determination unit 36. The control determination unit 36 performs processing similar to the control determination unit 36 in Application Example 1 of the second embodiment.

Further, the control determination unit 36 adjusts timing of optical path switching control of a dedicated optical path accompanying handover. Specifically, the control determination unit 36 may delay instruction timing of the optical path switching control in accordance with a distance between a central station 70 and a movement destination base station (for example, a distributed station 80-2) acquired in advance, or may transmit an instruction of the optical path switching control to optical transmission devices 20 and 25 earlier by a time difference in consideration of a time difference from timing at which the optical transmission devices 20 and 25 receive an instruction of the optical path switching control until optical path switching is actually performed. The time difference from the timing at which the optical transmission devices 20 and 25 receive the instruction until the optical path switching is actually performed may be measured in advance and held by the control determination unit 36, or may be acquired from another device.

Note that the adjustment of the timing of the optical path switching control may be performed not by the optical transmission device controller 35 but by a base station controller 30. In this case, the base station controller 30 may delay transmission timing of an optical path switching instruction to the optical transmission device controller 35 by a time corresponding to the distance between the central station 70 and a distributed station 80 acquired in advance. The optical transmission device controller 35 performs the optical path switching control of the dedicated optical path for the optical transmission devices 20 and 25 at timing of receiving the optical path switching instruction. Alternatively, the base station controller 30 may hold information of the time difference from the timing at which the optical transmission devices 20 and 25 receive the instruction until the optical path switching is actually performed, and transmit the optical path switching instruction to the optical transmission device controller 35 at timing in which the time difference is taken into consideration. The optical transmission device controller 35 performs the optical path switching control of the dedicated optical path for the optical transmission devices 20 and 25 at timing of receiving the optical path switching instruction. Alternatively, the base station controller 30 may adjust the timing of the optical path switching control of the optical transmission device controller 35 by transmitting the optical path switching instruction and transmitting, to the optical transmission device controller 35, information of the time to be taken into consideration as the timing of the optical path switching control in the optical transmission device controller 35.

Any of the optical transmission devices 20 and 25, the central station 70, or the distributed station 80 may temporarily buffer a packet in accordance with communication interruption of the optical transmission devices 20 and 25. As a result, it is possible to prevent the packet loss due to the communication interruption in the optical transmission devices 20 and 25 caused when the optical path switching is executed in the optical transmission devices 20 and 25. Here, in a case where the packet is buffered by the optical transmission devices 20 and 25, the optical transmission device controller 35 may include, for example, information of buffer start timing and a buffer time of the packet in consideration of the time difference between the transmission timing of the optical path switching control and the execution of the optical path switching in the instruction of the optical path switching control to be transmitted to the optical transmission devices 20 and 25.

The optical transmission devices 20 and 25 buffer the packet input to the optical transmission devices 20 and 25 within a period indicated by the buffer time with reference to the buffer start timing of the packet included in the instruction of the optical path switching control from the optical transmission device controller 35. The optical transmission devices 20 and 25 transfer the buffered packet after the period indicated by the buffer time has elapsed.

In a case where the packet is buffered in the central station 70 or the distributed station 80, the optical transmission device controller 35 transmits, to the central station 70 or the distributed station 80, for example, a control instruction including information of the buffer start timing and the buffer time of the packet in consideration of the time difference between the transmission timing of the optical path switching control and the execution of the optical path switching. Note that the buffer control instruction may be transmitted from the base station controller 30.

The central station 70 or the distributed station 80 buffers the packet input to central station 70 or the distributed station 80 within a period indicated by the buffer time with reference to the buffer start timing of the packet included in the control instruction transmitted from the optical transmission device controller 35 or the base station controller 30. The central station 70 or the distributed station 80 transfers the buffered packet after the period indicated by the buffer time has elapsed.

Since processing at the time of handover in a signal transfer system 100g according to the eighth embodiment is similar to the processing illustrated in Fig. 32, description thereof will be omitted. For example, a movement source base station in Fig. 32 may be set to a movement source distributed station, a movement destination base station may be set to a movement destination distributed station, and the core node 10 may be set to the central station 70.

According to the signal transfer system 100g in the eighth embodiment configured as described above, it is possible to obtain similar effects to those of the second embodiment. Furthermore, in the signal transfer system 100g according to the eighth embodiment, it is possible to suppress occurrence of packet loss by adjusting the instruction timing of the optical path switching or by buffering the packet in any of the optical transmission device, the base station, or the core node in accordance with communication interruption of the optical transmission device.

### (Modification of Eighth Embodiment)

The signal transfer system 100g according to the eighth embodiment may be modified as in Modification 1, Modification 2, and Modification 3 in the second embodiment.

### (Ninth Embodiment)

In a ninth embodiment, a configuration for solving the above problem that may occur in the third embodiment will be described. The configuration of a signal transfer system in the ninth embodiment is similar to that of the signal transfer system 100j in the third embodiment. Differences from the third embodiment will be mainly described.

An optical transmission device controller 35 performs processing similar to the optical transmission device controller 35 in Application Example 1 of the third embodiment. The optical transmission device controller 35 includes a control determination unit 36. The control determination unit 36 performs processing similar to the control determination unit 36 in Application Example 1 of the third embodiment.

Further, the control determination unit 36 adjusts timing of optical path switching control of a dedicated optical path accompanying handover. Specifically, the control determination unit 36 may delay instruction timing of the optical path switching control in accordance with a distance between a central station 70i and a distributed station 80j acquired in advance, or may transmit an instruction of the optical path switching control to optical transmission devices 20 and 25 earlier by a time difference in consideration of a time difference from timing at which the optical transmission devices 20 and 25 receive an instruction of the optical path switching control until the optical path switching is actually performed. The time difference from the timing at which the optical transmission devices 20 and 25 receive the instruction until the optical path switching is actually performed may be measured in advance and held by the control determination unit 36, or may be acquired from another device.

Note that the adjustment of the timing of the optical path switching control may be performed not by the optical transmission device controller 35 but by a base station controller 30. In this case, the base station controller 30 may hold information of the time difference from the timing at which the optical transmission devices 20 and 25 receive the instruction until the optical path switching is actually performed, and transmit an optical path switching instruction to the optical transmission device controller 35 at timing in which the time difference is taken into consideration. The optical transmission device controller 35 performs the optical path switching control of the dedicated optical path for the optical transmission devices 20 and 25 at timing of receiving the optical path switching instruction. Alternatively, the base station controller 30 may delay transmission timing of an optical path switching instruction to the optical transmission device controller 35 by a time corresponding to the distance between the central station 70i and the distributed station 80j acquired in advance. The optical transmission device controller 35 performs the optical path switching control of the dedicated optical path for the optical transmission devices 20 and 25 at timing of receiving the optical path switching instruction. Alternatively, the base station controller 30 may adjust the timing of the optical path switching control of the optical transmission device controller 35 by transmitting the optical path switching instruction and transmitting, to the optical transmission device controller 35, information of the time to be taken into consideration as the timing of the optical path switching control in the optical transmission device controller 35.

Any of the optical transmission devices 20 and 25, the central station 70i, or the distributed station 80j may temporarily buffer a packet in accordance with communication interruption of the optical transmission devices 20 and 25. As a result, it is possible to prevent the packet loss due to the communication interruption in the optical transmission devices 20 and 25 caused when the optical path switching is executed in the optical transmission devices 20 and 25. Here, in a case where the packet is buffered by the optical transmission devices 20 and 25, the optical transmission device controller 35 may include, for example, information of buffer start timing and a buffer time of the packet in consideration of the time difference between the transmission timing of the optical path switching control and the execution of the optical path switching in the instruction of the optical path switching control to be transmitted to the optical transmission devices 20 and 25.

The optical transmission devices 20 and 25 buffer the packet input to the optical transmission devices 20 and 25 within a period indicated by the buffer time with reference to the buffer start timing of the packet included in the instruction of the optical path switching control from the optical transmission device controller 35. The optical transmission devices 20 and 25 transfer the buffered packet after the period indicated by the buffer time has elapsed.

In a case where the packet is buffered in the central station 70i or the distributed station 80j, the optical transmission device controller 35 transmits, to the central station 70i or the distributed station 80j, for example, a control instruction including information of the buffer start timing and the buffer time of the packet in consideration of the time difference between the transmission timing of the optical path switching control and the execution of the optical path switching. Note that the buffer control instruction may be transmitted from the base station controller 30.

The central station 70i or the distributed station 80j buffers the packet input to central station 70i or the distributed station 80j within a period indicated by the buffer time with reference to the buffer start timing of the packet included in the control instruction transmitted from the optical transmission device controller 35 or the base station controller 30. The central station 70i or the distributed station 80j transfers the buffered packet after the period indicated by the buffer time has elapsed.

Since processing at the time of handover in the signal transfer system 100j according to the ninth embodiment is similar to the processing illustrated in Fig. 32, description thereof will be omitted. For example, a movement source base station in Fig. 32 may be set to a movement source distributed station, a movement destination base station may be set to a movement destination distributed station, and the core node 10 may be set to the central station 70i.

According to the signal transfer system 100j in the ninth embodiment configured as described above, it is possible to obtain similar effects to those of the third embodiment. Furthermore, in the signal transfer system 100j according to the ninth embodiment, it is possible to suppress occurrence of packet loss by adjusting the instruction timing of the optical path switching or by buffering the packet in any of the optical transmission device, the base station, or the core node in accordance with communication interruption of the optical transmission device.

### (Tenth Embodiment)

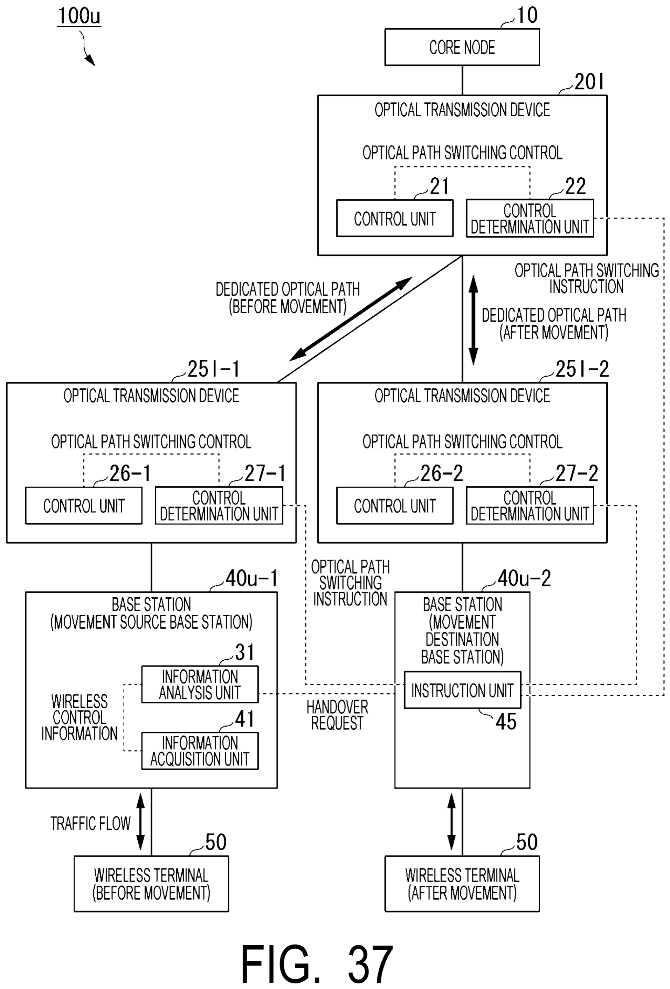

In a tenth embodiment, a configuration for solving the above problem that may occur in the fourth embodiment will be described. Fig. 37 is a diagram illustrating a configuration example of a signal transfer system 100u in the tenth embodiment. As illustrated in Fig. 37, the signal transfer system 100u includes, for example, a core node 10, one or more optical transmission devices 201 and 251, and one or more base stations 40u. Fig. 37 illustrates a configuration in which the signal transfer system 100u includes the two optical transmission devices 251 (for example, optical transmission devices 251-1 and 251-2) and the two base stations 40u (for example, base stations 40u-1 and 40u-2), but the number of the optical transmission devices 251 and the number of the base stations 40u may be three or more.

The core node 10 and the optical transmission device 201, the optical transmission device 201 and the optical transmission device 251-1, the optical transmission device 201 and the optical transmission device 251-2, the optical transmission device 251-1 and the base station 40u-1, and the optical transmission device 251-2 and the base station 40u-2 are connected by an optical transmission line.

In the signal transfer system 100u, processing performed by the base stations 40u-1 and 40u-2 is different from that of the signal transfer system 100m. Hereinafter, differences from the signal transfer system 100m will be mainly described.

It is assumed that the base station 40u-1 is a base station (movement source base station) that performs communication before a wireless terminal 50 moves, and the base station 40u-2 is a base station (movement destination base station) that performs communication after the wireless terminal 50 moves. Moreover, it is assumed that a dedicated optical path is generated by the method illustrated in Fig. 19 between the optical transmission device 201 and the optical transmission device 251-1 connected to the base station 40u-1. In such a case, the wireless terminal 50 communicates with the core node 10 via the base station 40u-1, the optical transmission device 25l-1, and the optical transmission device 201 before moving.

The base station 40u-1 includes an information analysis unit 31 and an information acquisition unit 41. The information analysis unit 31 and the information acquisition unit 41 basically perform processing similar to that of the information analysis unit 31 and the information acquisition unit 41 in Application Example 1 of the fourth embodiment. Here, in a case of determining that handover is necessary, the information analysis unit 31 according to the tenth embodiment does not transmit an optical path switching instruction to each of the optical transmission devices 201 and 251.

The base station 40u-2 includes an instruction unit 45. The instruction unit 45 transmits the optical path switching instruction to each of the optical transmission devices 201 and 251 in response to reception of a handover request transmitted from the base station 40u-1. At this time, the instruction unit 45 adjusts timing of optical path switching control of the dedicated optical path accompanying handover. Specifically, the instruction unit 45 may delay instruction timing of the optical path switching instruction in accordance with a distance between a movement destination base station (for example, the base station 40u-2) and the core node 10 acquired in advance, or may transmit the optical path switching instruction to optical transmission devices 201 and 251 earlier by a time difference in consideration of a time difference from timing at which the optical transmission devices 201 and 251 receive the optical path switching instruction until optical path switching is actually performed. The time difference from the timing at which the optical transmission devices 201 and 251 receive the instruction until the optical path switching is actually performed may be measured in advance and held by the instruction unit 45, or may be acquired from another device.

In the signal transfer system 100u, the information analysis unit 31 and the information acquisition unit 41 are included in a control unit of the base station 40u-1, and the instruction unit 45 is included in a control unit of the base station 40u-2.

Any of the optical transmission devices 201 and 251, the base station 40u, or the core node 10 may temporarily buffer a packet in accordance with communication interruption of the optical transmission devices 201 and 251. As a result, it is possible to prevent packet loss due to the communication interruption in the optical transmission devices 201 and 251 caused when the optical path switching is executed in the optical transmission devices 201 and 251. Here, in a case where the packet is buffered by the optical transmission devices 201 and 251, information of buffer start timing and a buffer time of the packet in consideration of a time difference from transmission timing of the optical path switching control until when the optical path switching is executed may be included in the instruction for the optical path switching control transmitted from control determination units 22 and 27 to control units 21 and 26 inside the optical transmission device 201 and 251.

The control units 21 and 26 buffer the packet input to the optical transmission devices 201 and 251 within a period indicated by a buffer time with reference to the buffer start timing of the packet included in the instruction of the optical path switching control from the control determination units 22 and 27. The control units 21 and 26 transfer the buffered packet after the period indicated by the buffer time has elapsed.

In a case where the packet is buffered in the base station 40u or the core node 10, a control instruction including information of the buffer start timing and the buffer time of the packet in consideration of the time difference between the transmission timing of the optical path switching control and the execution of the optical path switching is transmitted from the control determination units 22 and 27 of the optical transmission devices 201 and 251 to the base station 40u or the core node 10.

The base station 40u or the core node 10 buffers the packet input to the base station 40u or the core node 10 within the period indicated by the buffer time with reference to the buffer start timing of the packet included in the control instruction transmitted from the optical transmission devices 201 and 251. The base station 40u or the core node 10 transfers the buffered packet after the period indicated by the buffer time has elapsed.

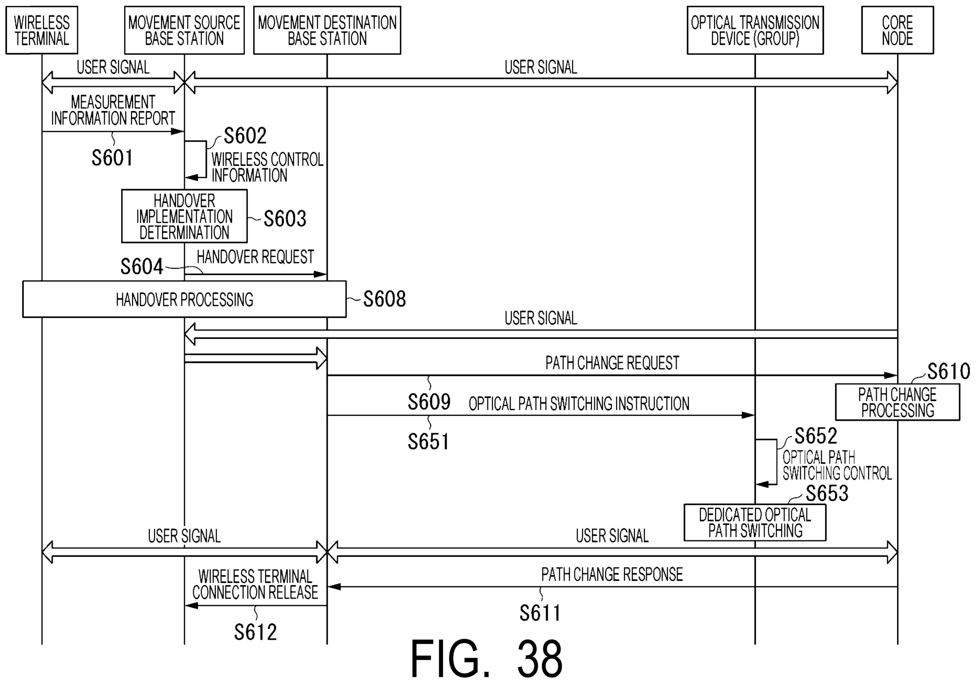

Fig. 38 is a sequence diagram illustrating a flow of processing of the signal transfer system 100m according to the tenth embodiment. Note that, in Fig. 38, the optical transmission devices 201 and 251 are collectively referred to as an optical transmission device (group). At the start of the processing of Fig. 38, it is assumed that the wireless terminal 50 is connected to the base station 40u-1 as a movement source base station. Therefore, a user signal transmitted from the wireless terminal 50 is transferred to the core node 10 via the base station 40u-1. In Fig. 38, the same processing steps as those in Fig. 21 will be denoted by the same reference signs as those used in Fig. 21, and description thereof will be omitted.

Processing from step S601 to step S604 and processing from step S608 to step S610 are similar to those in Fig. 21. As illustrated in Fig. 38, even after the handover processing, a downlink user signal is transmitted to the movement source base station until the path change processing is completed. When the processing from step S601 to step S604 and the processing from step S608 to step S610 are completed, the instruction unit 45 of the movement destination base station (base station 40u-2) transmits the optical path switching instruction of the dedicated optical path to the optical transmission devices 20 and 25 in response to the reception of the handover request transmitted from the base station 40u-1 in the processing of step S604 (step S651).

At this time, the instruction unit 45 of the movement destination base station (base station 40u-2) adjusts the transmission timing of the optical path switching instruction so that the optical path switching is executed immediately before the core node 10 starts transmitting a downlink signal to the movement destination base station, in consideration of a delay according to a distance between the movement destination base station and the core node 10 or the time difference from the timing when the optical transmission devices 201 and 251 receive the instruction of the optical path switching to the actual execution of the optical path switching. The instruction unit 45 transmits the optical path switching instruction to the optical transmission devices 201 and 251 at the transmission timing of the optical path switching instruction.

The control determination units 22 and 27 of the respective optical transmission devices 201 and 251 receive the optical path switching instruction transmitted from the base station 40u-2. The control determination units 22 and 27 performs the optical path switching control of the dedicated optical path for the control units 21 and 26 in response to the received optical path switching instruction (step S652). The control units 21 and 26 of the optical transmission devices 201 and 251 switch the dedicated optical path according to the optical path switching control from the control determination units 22 and 27 (step S653). Specifically, the control unit 26-1 of the optical transmission device 251-1 deletes the dedicated optical path to the optical transmission device 20. The control unit 26-2 of the optical transmission device 251-2 generates the dedicated optical path to the optical transmission device 201. The control unit 21 of the optical transmission device 201 performs switching so as to form the dedicated optical path to the optical transmission device 251.

For convenience of description, the above example illustrates a configuration in which the instruction unit 45 of the movement destination base station (base station 40u-2) performs the optical path switching control of the dedicated optical path after the processing from step S601 to step S604 and the processing from step S608 to step S610 are completed. However, the instruction unit 45 may adjust the transmission timing of the optical path switching instruction after receiving the handover request transmitted from the base station 40u-1 and transmit the optical path switching instruction to the optical transmission devices 201 and 251.

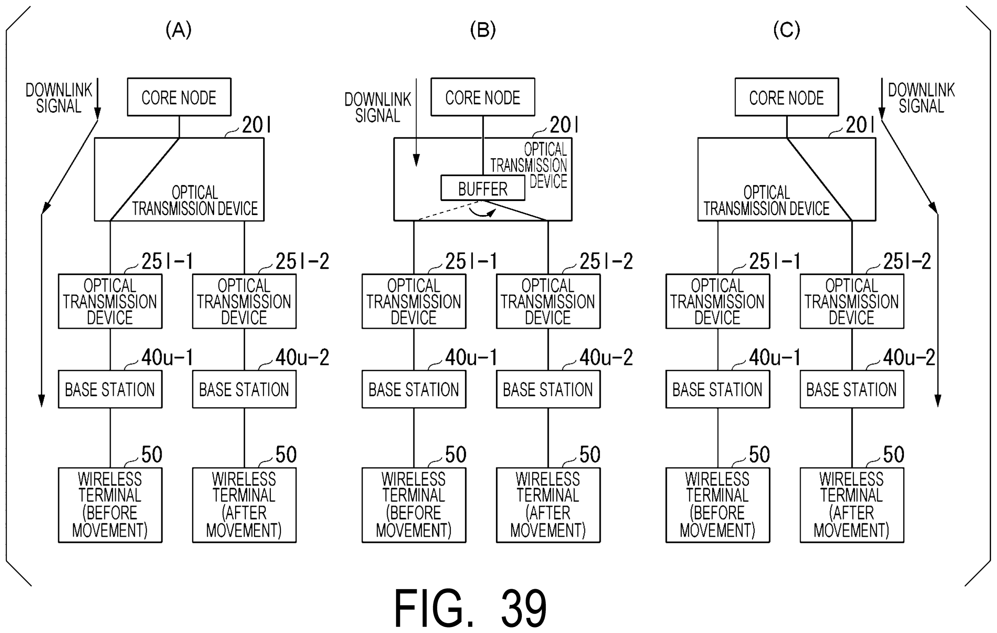

Next, a specific example of a case of buffering a packet in the optical path switching will be described with reference to Figs. 39 to 42. Fig. 39 is a diagram (part 1) for describing the processing of buffering the packet in the optical path switching according to the tenth embodiment. In Fig. 39, a case where the downlink signal is buffered by the optical transmission device 201 will be described. (A) of Fig. 39 illustrates a state before the optical path switching, (B) of Fig. 39 illustrates a state at the time of optical path switching, and (C) of Fig. 39 illustrates a state after the optical path switching.

As illustrated in (A) of Fig. 39, before the optical path switching, the optical transmission device 201 generates the dedicated optical path to the optical transmission device 251-1. Therefore, the downlink signal transmitted from the core node 10 is transferred to the optical transmission device 201 via the optical transmission device 251-1. The optical transmission device 251-2 transfers the transferred downlink signal to the wireless terminal 50 via the base station 40u-1.

As illustrated in (B) of Fig. 39, at the time of optical path switching, the optical transmission device 201 temporarily buffers the downlink signal transmitted from the core node 10. As described above, the optical transmission device 201 buffers the downlink signal with the buffer provided inside such that the packet loss does not occur due to instantaneous interruption at the time of optical path switching. Further, the optical transmission device 201 deletes the dedicated optical path generated with the optical transmission device 251-1 and generates the dedicated optical path to the optical transmission device 251-2 according to the optical path switching control of the control determination unit 22. In this manner, the optical transmission device 201 performs the optical path switching of the dedicated optical path.

After the period indicated by the buffer time has elapsed, the optical transmission device 201 transfers the buffered downlink signal to the optical transmission device 251-2 as illustrated in (C) of Fig. 39. The optical transmission device 251-2 transfers the transferred downlink signal to the wireless terminal 50 via the base station 40u-2.

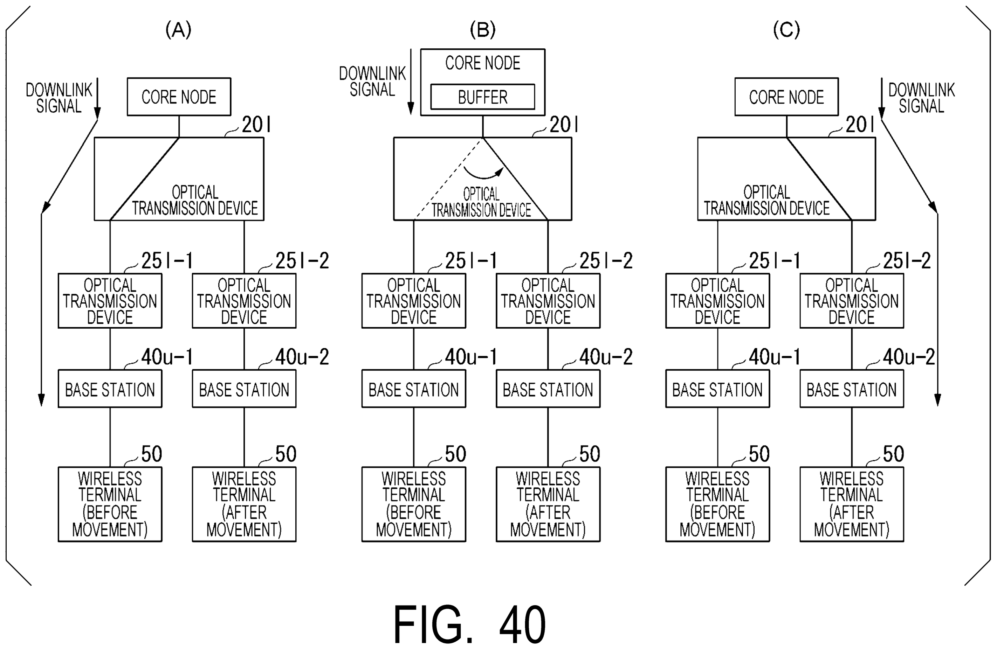

Fig. 40 is a diagram (part 2) for describing the processing of buffering the packet in the optical path switching according to the tenth embodiment. In Fig. 40, a case where the downlink signal is buffered by the core node 10 will be described. (A) of Fig. 40 illustrates a state before the optical path switching, (B) of Fig. 40 illustrates a state at the time of optical path switching, and (C) of Fig. 40 illustrates a state after the optical path switching.

As illustrated in (A) of Fig. 40, before the optical path switching, the optical transmission device 201 generates the dedicated optical path to the optical transmission device 251-1. Therefore, the downlink signal transmitted from the core node 10 is transferred to the optical transmission device 201 via the optical transmission device 251-1. The optical transmission device 251-2 transfers the transferred downlink signal to the wireless terminal 50 via the base station 40u-1.

As illustrated in (B) of Fig. 40, at the time of optical path switching, the core node 10 temporarily buffers the downlink signal scheduled to be transmitted in response to a buffer instruction from the optical transmission device 201-1. As described above, the core node 10 buffers the downlink signal with the buffer provided inside such that the packet loss does not occur due to instantaneous interruption at the time of optical path switching. The optical transmission device 201 deletes the dedicated optical path generated with the optical transmission device 251-1 and generates the dedicated optical path to the optical transmission device 251-2 according to the optical path switching control of the control determination unit 22. In this manner, the optical transmission device 201 performs the optical path switching of the dedicated optical path.

After the period indicated by the buffer time has elapsed, the core node 10 transmits the buffered downlink signal to the optical transmission device 201 as illustrated in (C) of Fig. 40. The optical transmission device 201 transfers the downlink signal transmitted from the core node 10 to the optical transmission device 251-2. The optical transmission device 251-2 transfers the transferred downlink signal to the wireless terminal 50 via the base station 40u-2.

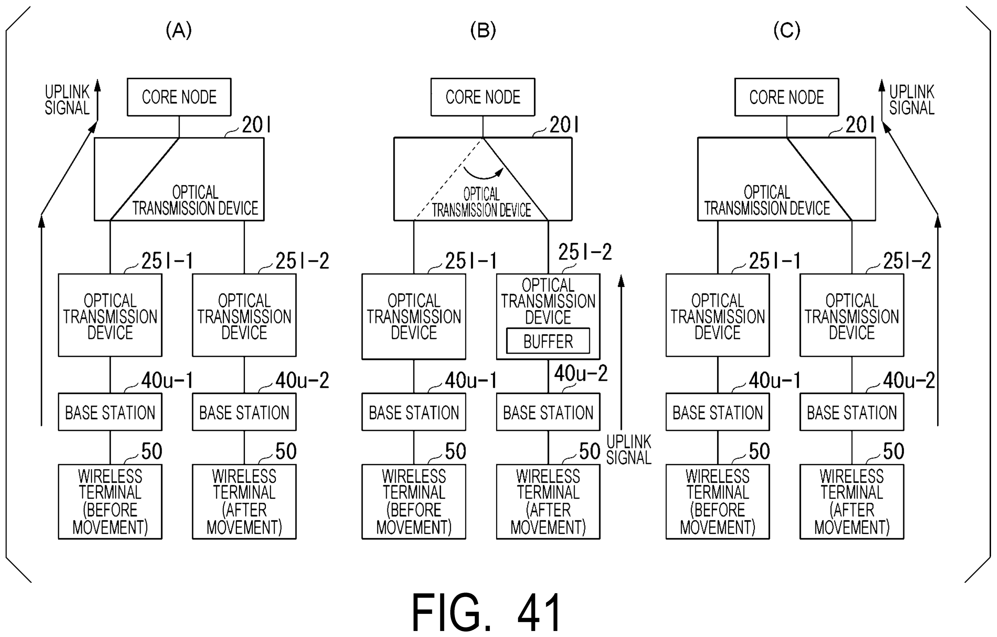

Fig. 41 is a diagram (part 3) for describing the processing of buffering the packet in the optical path switching according to the tenth embodiment. In Fig. 41, a case where the uplink signal is buffered by the optical transmission device 251 will be described. (A) of Fig. 41 illustrates a state before the optical path switching, (B) of Fig. 41 illustrates a state at the time of optical path switching, and (C) of Fig. 41 illustrates a state after the optical path switching.

As illustrated in (A) of Fig. 41, before the optical path switching, the optical transmission device 201 generates the dedicated optical path to the optical transmission device 251-1. Therefore, the uplink signal transmitted from the wireless terminal 50 is transferred to the core node 10 via the base station 40u-1, the optical transmission device 251-1, and the optical transmission device 201.

As illustrated in (B) of Fig. 41, at the time of optical path switching, the optical transmission device 251-2 as an optical path switching destination temporarily buffers the uplink signal transmitted from the wireless terminal 50 in response to a buffer instruction from the optical transmission device 201-1. As described above, the optical transmission device 251-2 buffers the downlink signal with the buffer provided inside such that the packet loss does not occur due to instantaneous interruption at the time of optical path switching. The optical transmission device 201 deletes the dedicated optical path generated with the optical transmission device 251-1 and generates the dedicated optical path to the optical transmission device 251-2 according to the optical path switching control of the control determination unit 22. In this manner, the optical transmission device 201 performs the optical path switching of the dedicated optical path.

The optical transmission device 251-2 generates the dedicated optical path to the base station 40u-2 according to the optical path switching control of the control determination unit 27-2. The optical transmission device 251-1 deletes the generated dedicated optical path to the base station 40u-2 according to the optical path switching control of the control determination unit 27-1.

After the period indicated by the buffer time has elapsed, the optical transmission device 251-2 transfers the buffered uplink signal to the optical transmission device 201 as illustrated in (C) of Fig. 41. The optical transmission device 201 transfers the transferred uplink signal to the core node 10.

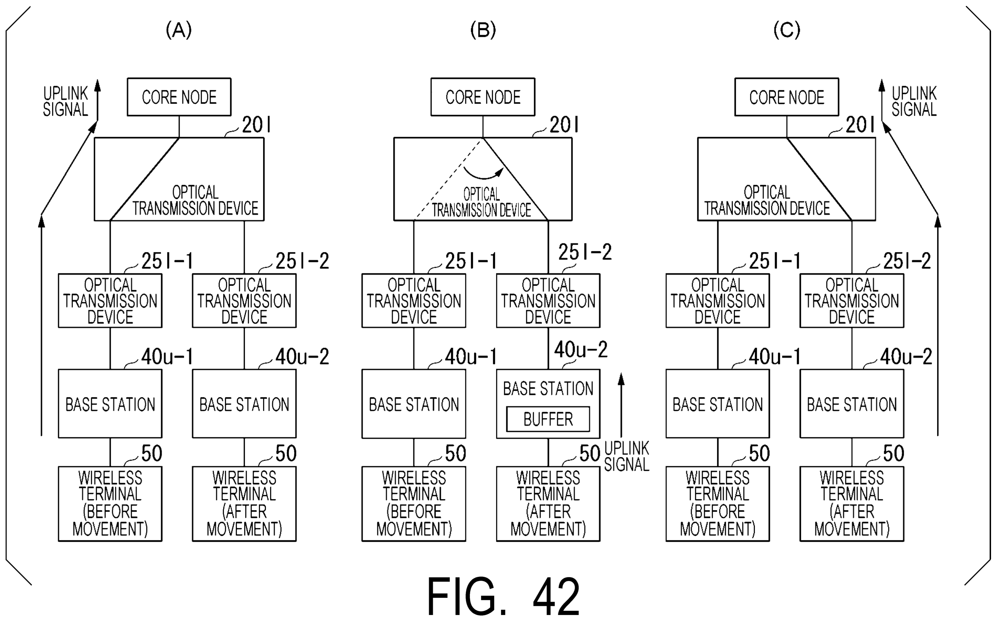

Fig. 42 is a diagram (part 4) for describing the processing of buffering the packet in the optical path switching according to the tenth embodiment. In Fig. 42, a case where the uplink signal is buffered by the base station 40u will be described. (A) of Fig. 42 illustrates a state before the optical path switching, (B) of Fig. 42 illustrates a state at the time of optical path switching, and (C) of Fig. 42 illustrates a state after the optical path switching.

As illustrated in (A) of Fig. 42, before the optical path switching, the optical transmission device 201 generates the dedicated optical path to the optical transmission device 251-1. Therefore, the uplink signal transmitted from the wireless terminal 50 is transferred to the core node 10 via the base station 40u-1, the optical transmission device 251-1, and the optical transmission device 201.

As illustrated in (B) of Fig. 42, at the time of optical path switching, the base station 40u-2 as an optical path switching destination temporarily buffers the uplink signal transmitted from the wireless terminal 50 in response to a buffer instruction from the optical transmission device 201. As described above, the base station 40u-2 buffers the downlink signal with the buffer provided inside such that the packet loss does not occur due to instantaneous interruption at the time of optical path switching. The optical transmission device 201 deletes the dedicated optical path generated with the optical transmission device 251-1 and generates the dedicated optical path to the optical transmission device 251-2 according to the optical path switching control of the control determination unit 22. In this manner, the optical transmission device 201 performs the optical path switching of the dedicated optical path.

The optical transmission device 251-2 generates the dedicated optical path to the base station 40u-2 according to the optical path switching control of the control determination unit 27-2. The optical transmission device 251-1 deletes the generated dedicated optical path to the base station 40u-2 according to the optical path switching control of the control determination unit 27-1.

After the period indicated by the buffer time has elapsed, the base station 40u-2 transfers the buffered uplink signal to the optical transmission device 251-2 as illustrated in (C) of Fig. 42. The optical transmission device 251-2 transfers the transferred uplink signal to the core node 10 via the optical transmission device 201. Note that, in the following eleventh and twelfth embodiments, the processing of buffering a packet in the optical path switching is similar where a device included in the signal transfer system is merely changed.

According to the signal transfer system 100u in the tenth embodiment configured as described above, it is possible to obtain similar effects to those of the fourth embodiment. Furthermore, in the signal transfer system 100u according to the tenth embodiment, it is possible to suppress occurrence of packet loss by adjusting the instruction timing of the optical path switching or by buffering the packet in any of the optical transmission device, the base station, or the core node in accordance with communication interruption of the optical transmission device.

### (Modification of Tenth Embodiment)

The signal transfer system 100u may be modified as in Modification 1, Modification 2, and Modification 3 in the fourth embodiment.

### (Eleventh Embodiment)

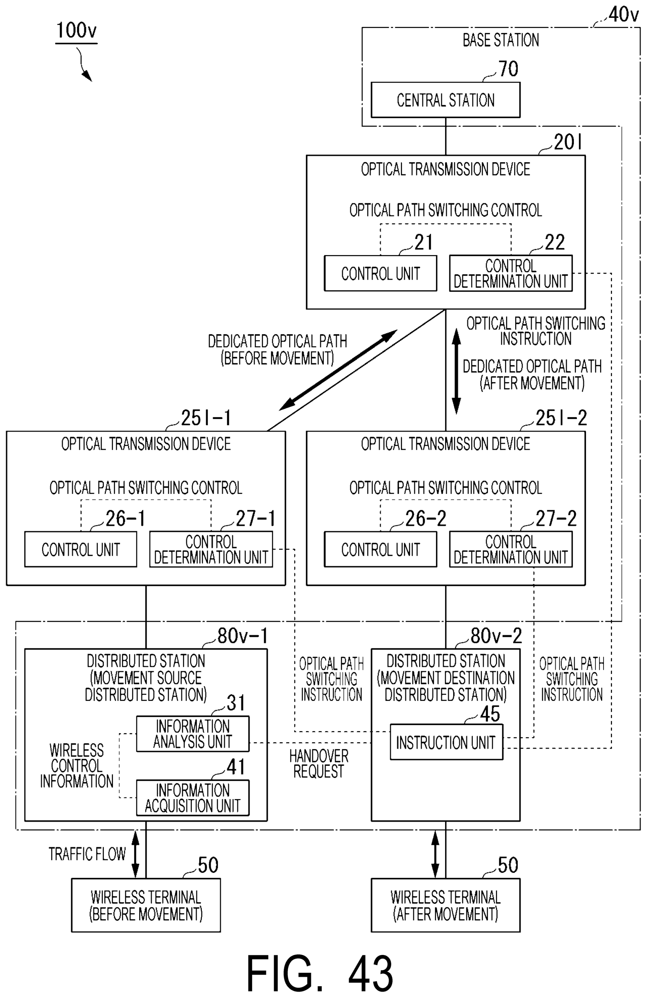

In an eleventh embodiment, a configuration for solving the above problem that may occur in the fifth embodiment will be described. Fig. 43 is a diagram illustrating a configuration example of a signal transfer system 100v in the eleventh embodiment. As illustrated in Fig. 43, the signal transfer system 100v includes, for example, one or more optical transmission devices 201 and 251, and one or more base stations 40v. The base station 40v includes a central station 70 and a plurality of distributed stations 80v. Fig. 43 illustrates a configuration in which the signal transfer system 100v includes the two optical transmission devices 251 (for example, optical transmission devices 251-1 and 251-2) and the two distributed stations 80v (for example, distributed stations 80v-1 and 80v-2), but the number of the optical transmission devices 251 and the number of the distributed stations 80v may be three or more.

The central station 70 and the optical transmission device 201, the optical transmission device 201 and the optical transmission device 251-1, the optical transmission device 201 and the optical transmission device 251-2, the optical transmission device 251-1 and the distributed station 80v-1, and the optical transmission device 251-2 and the distributed station 80v-2 are connected by an optical transmission line.

In the signal transfer system 100v, processing performed by the distributed stations 80v-1 and 80u-2 are different from that of the signal transfer system 100p. Hereinafter, differences from the signal transfer system 100p will be mainly described.

It is assumed that the distributed station 80v-1 is a distributed station (movement source distributed station) that performs communication before a wireless terminal 50 moves, and the distributed station 80v-2 is a distributed station (movement destination distributed station) that performs communication after the wireless terminal 50 moves. Moreover, it is assumed that the dedicated optical path is generated by the method illustrated in Fig. 25 between the optical transmission device 201 and the optical transmission device 251-1 connected to the distributed station 80v-1. In such a case, the wireless terminal 50 communicates with the central station 70 via the distributed station 80v-1, the optical transmission device 251-1, and the optical transmission device 201 before moving.

The distributed station 80v-1 includes an information analysis unit 31 and an information acquisition unit 41. The information analysis unit 31 and the information acquisition unit 41 basically perform processing similar to that of the information analysis unit 31 and the information acquisition unit 41 in Application Example 1 of the fifth embodiment. Here, in a case of determining that handover is necessary, the information analysis unit 31 according to the eleventh embodiment does not transmit an optical path switching instruction to each of the optical transmission devices 201 and 251.

The distributed station 80v-2 includes an instruction unit 45. The instruction unit 45 transmits the optical path switching instruction to each of the optical transmission devices 201 and 251 in response to reception of a handover request transmitted from the distributed station 80v-1. At this time, the instruction unit 45 adjusts timing of optical path switching control of the dedicated optical path accompanying handover. Specifically, the instruction unit 45 may delay instruction timing of the optical path switching instruction in accordance with a distance between the central station 70 and a movement destination distributed station (for example, the distributed station 80v-2) acquired in advance, or may transmit the optical path switching instruction to optical transmission devices 201 and 251 earlier by a time difference in consideration of a time difference from timing at which the optical transmission devices 201 and 251 receive the optical path switching instruction until optical path switching is actually performed. The time difference from the timing at which the optical transmission devices 201 and 251 receive the instruction until the optical path switching is actually performed may be measured in advance and held by the instruction unit 45, or may be acquired from another device.

In the signal transfer system 100v, the information analysis unit 31 and the information acquisition unit 41 are included in a control unit of the distributed station 80v-1, and the instruction unit 45 is included in a control unit of the distributed station 80v-2.

Any of the optical transmission devices 201 and 251, the central station 70, or the distributed station 80v may temporarily buffer the packet in accordance with the communication interruption of the optical transmission devices 201 and 251. As a result, it is possible to prevent packet loss due to the communication interruption in the optical transmission devices 201 and 251 caused when the optical path switching is executed in the optical transmission devices 201 and 251. Here, in a case where the packet is buffered by the optical transmission devices 201 and 251, information of buffer start timing and a buffer time of the packet in consideration of a time difference from transmission timing of the optical path switching control until when the optical path switching is executed may be included in the instruction for the optical path switching control transmitted from control determination units 22 and 27 to control units 21 and 26 inside the optical transmission device 201 and 251.

The control units 21 and 26 buffer the packet input to the optical transmission devices 201 and 251 within a period indicated by a buffer time with reference to the buffer start timing of the packet included in the instruction of the optical path switching control from the control determination units 22 and 27. The control units 21 and 26 transfer the buffered packet after the period indicated by the buffer time has elapsed.

In a case where the packet is buffered in the central station 70 or the distributed station 80v, a control instruction including information of the buffer start timing and the buffer time of the packet in consideration of the time difference between the transmission timing of the optical path switching control and execution of the optical path switching is transmitted from the control determination units 22 and 27 of the optical transmission devices 201 and 251 to the central station 70 or the dis 80v.

The central station 70 or the distributed station 80v buffers the packet input to central station 70 or the distributed station 80v within the period indicated by the buffer time with reference to the buffer start timing of the packet included in the control instruction transmitted from the optical transmission devices 201 and 251. The central station 70 or the distributed station 80v transfers the buffered packet after the period indicated by the buffer time has elapsed.

Since processing at the time of handover in the signal transfer system 100p according to the eleventh embodiment is similar to the processing illustrated in Fig. 38, description thereof will be omitted. For example, a movement source base station in Fig. 38 may be set to a movement source distributed station, a movement destination base station may be set to a movement destination distributed station, and the core node 10 may be set to the central station 70.

According to the signal transfer system 100v in the eleventh embodiment configured as described above, it is possible to obtain similar effects to those of the fifth embodiment. Furthermore, in the signal transfer system 100v according to the eleventh embodiment, it is possible to suppress occurrence of packet loss by adjusting the instruction timing of the optical path switching or by buffering the packet in any of the optical transmission device, the base station, or the core node in accordance with communication interruption of the optical transmission device.

### (Modification of Eleventh Embodiment)

The signal transfer system 100v may be modified as in Modification 1, Modification 2, and Modification 3 in the fifth embodiment.

### (Twelfth Embodiment)

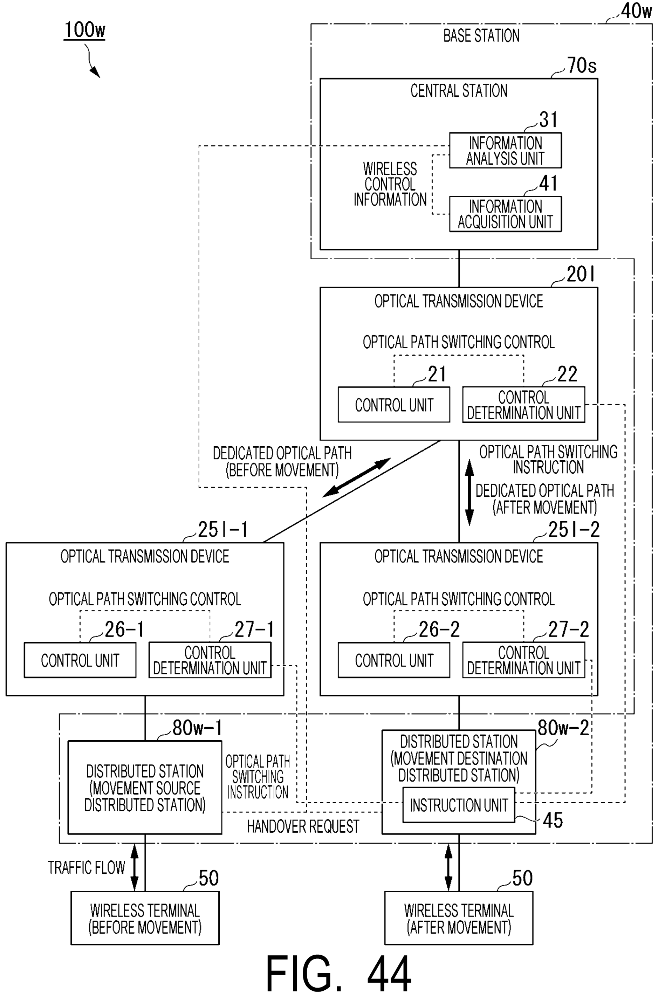

In a twelfth embodiment, a configuration for solving the above problem that may occur in the sixth embodiment will be described. Fig. 44 is a diagram illustrating a configuration example of a signal transfer system 100w according to the twelfth embodiment. As illustrated in Fig. 44, the signal transfer system 100w includes, for example, one or more optical transmission devices 201 and 251, and one or more base stations 40w. The base station 40w includes a central station 70w and one or more distributed stations 80w. Fig. 44 illustrates a configuration in which the signal transfer system 100w includes the two optical transmission devices 251 (for example, optical transmission devices 251-1 and 251-2) and the two distributed stations 80w (for example, distributed stations 80w-1 and 80w-2), but the number of the optical transmission devices 251 and the number of the distributed stations 80w may be three or more.

The central station 70w and the optical transmission device 201, the optical transmission device 201 and the optical transmission device 251-1, the optical transmission device 201 and the optical transmission device 251-2, the optical transmission device 251-1 and the distributed station 80w-1, and the optical transmission device 251-2 and the distributed station 80w-2 are connected by an optical transmission line.

In the signal transfer system 100w, processing performed by the central station 70w and the distributed station 80w-2 is different from that of the signal transfer system 100s. Hereinafter, differences from the signal transfer system 100s will be mainly described.

The central station 70s includes the information analysis unit 31 and the information acquisition unit 41. The information analysis unit 31 and the information acquisition unit 41 basically perform processing similar to that of the information analysis unit 31 and the information acquisition unit 41 in Application Example 1 of the sixth embodiment. Here, in a case of determining that handover is necessary, the information analysis unit 31 according to the twelfth embodiment does not transmit an optical path switching instruction to each of the optical transmission devices 201 and 251.

The distributed station 80w-2 includes an instruction unit 45. The instruction unit 45 transmits the optical path switching instruction to each of the optical transmission devices 201 and 251 in response to reception of a handover request transmitted from the central station 70s. At this time, the instruction unit 45 adjusts timing of optical path switching control of the dedicated optical path accompanying handover. Specifically, the instruction unit 45 may delay instruction timing of the optical path switching instruction in accordance with a distance between the central station 70s and a movement destination distributed station (for example, the distributed station 80w-2) acquired in advance, or may transmit the optical path switching instruction to optical transmission devices 201 and 251 earlier by a time difference in consideration of a time difference from timing at which the optical transmission devices 201 and 251 receive the optical path switching instruction until optical path switching is actually performed. The time difference from the timing at which the optical transmission devices 201 and 251 receive the instruction until the optical path switching is actually performed may be measured in advance and held by the instruction unit 45, or may be acquired from another device.

In the signal transfer system 100w, the information analysis unit 31 and the information acquisition unit 41 are included in a control unit of the central station 70s, and the instruction unit 45 is included in a control unit of the distributed station 80w-2.

Any of the optical transmission devices 201 and 251, the central station 70s, or the distributed station 80w may temporarily buffer the packet in accordance with the communication interruption of the optical transmission devices 201 and 251. As a result, it is possible to prevent packet loss due to the communication interruption in the optical transmission devices 201 and 251 caused when the optical path switching is executed in the optical transmission devices 201 and 251. Here, in a case where the packet is buffered by the optical transmission devices 201 and 251, information of buffer start timing and a buffer time of the packet in consideration of a time difference from transmission timing of the optical path switching control until when the optical path switching is executed may be included in the instruction for the optical path switching control transmitted from control determination units 22 and 27 to control units 21 and 26 inside the optical transmission device 201 and 251.

The control units 21 and 26 buffer the packet input to the optical transmission devices 201 and 251 within a period indicated by a buffer time with reference to the buffer start timing of the packet included in the instruction of the optical path switching control from the control determination units 22 and 27. The control units 21 and 26 transfer the buffered packet after the period indicated by the buffer time has elapsed.

In a case where the packet is buffered in the central station 70s or the distributed station 80w, a control instruction including information of the buffer start timing and the buffer time of the packet in consideration of the time difference between the transmission timing of the optical path switching control and the execution of the optical path switching is transmitted from the control determination units 22 and 27 of the optical transmission devices 201 and 251 to the central station 70s or the dis 80w.

The central station 70s or the distributed station 80w buffers the packet input to central station 70s or the distributed station 80w within the period indicated by the buffer time with reference to the buffer start timing of the packet included in the control instruction transmitted from the optical transmission devices 201 and 251. The central station 70s or the distributed station 80w transfers the buffered packet after the period indicated by the buffer time has elapsed.

Since processing at the time of handover in the signal transfer system 100s according to the twelfth embodiment is similar to the processing illustrated in Fig. 38, description thereof will be omitted. For example, a movement source base station in Fig. 38 may be set to a movement source distributed station, a movement destination base station may be set to a movement destination distributed station, and the core node 10 may be set to the central station 70s.

According to the signal transfer system 100w in the twelfth embodiment configured as described above, it is possible to obtain similar effects to those of the sixth embodiment. Furthermore, in the signal transfer system 100w according to the twelfth embodiment, it is possible to suppress occurrence of packet loss by adjusting the instruction timing of the optical path switching or by buffering the packet in any of the optical transmission device, the base station, or the core node in accordance with communication interruption of the optical transmission device.

### (Modification of Twelfth Embodiment)

The signal transfer system 100w may be modified as in Modification 1, Modification 2, and Modification 3 in the sixth embodiment.

### (Modification 1 Common to First to Twelfth Embodiments)

In each of the above-described embodiments, the configuration on the premise of a mobile communication network has been described, but each of the above-described embodiments may be applied to a wired network. In the case of such a configuration, a terminal device connected to the base station 40 (including other base stations) in a wired manner is used instead of the wireless terminal 50 in each of the above-described embodiments. The terminal device is a user terminal operated by a user. The terminal device has one or more traffic flows. The terminal device performs wired communication with the base station 40. The information acquisition unit 41 of the base station 40 acquires control information related to communication with one or more terminal devices for each traffic flow.

### (Modification 2 Common to First to Twelfth Embodiments)

In each of the above-described embodiments, the processing at the time of upstream communication has been described as an example. For example, the processing based on the traffic flow from the wireless terminal 50 to the core node 10 or the central station 70 that is the upper device has been described as an example. On the other hand, each of the above-described embodiments is also applicable to processing at the time of downstream communication. For example, each of the embodiments is similarly applicable to processing based on a traffic flow from the core node 10 or the central station 70, which is an upper device, to the wireless terminal 50. Specific processing is similar to that of each of the above-described embodiments except that a transmission source of the traffic flow is different.

Although the embodiment of the present invention has been described in detail with reference to the drawings, specific configurations are not limited to the embodiment, and include design and the like without departing from the gist of the present invention.

### Industrial Applicability

The present invention can be applied to a communication system and a communication control method that accommodate a wireless terminal.

### Reference Signs List

10 Core node
20, 201 Optical transmission device
21, 26, 26-1, 26-2 Control unit
22, 27, 36 Control determination unit
25, 25-1, 25-2, 251-1, 251-2 Optical transmission device
30 Base station controller
31, 37 Information analysis unit
35, 35c Optical transmission device controller
40, 40-1, 40-2, 40f, 40g, 40h, 40i, 40j, 40k, 40l-1, 401-2, 40o, 40p, 40q, 40t, 40r, 40u,
40v, 40w Base station
41, 41-1, 41-2 Information acquisition unit
45 Instruction unit
50 Wireless terminal
60 Optical wireless cooperation controller
65 Orchestrator
66 Signal transfer unit
70, 70i, 70r, 70s, 70t Central station
80, 80-1, 80-2, 80i, 80j-1, 80j-2, 80k-1, 80k-2, 80o, 80p-1, 80p-2, 80q-1, 80q-2, 80r,
80s-1, 80s-2, 80t-1, 80t-2, 80v-1, 80v-2, 80w-1, 80w-2 Distributed station
100, 100a, 100b, 100c, 100d, 100e, 100f, 100g, 100h, 100i, 100j, 100k, 1001, 100m,
100n, 100o, 100p, 100q, 100r, 100s, 100t, 100u, 100v, 100w Signal transfer system

## Claims

1. A base station comprising:
an information acquisition unit configured to acquire control information regarding communication with one or more terminals for each traffic flow exchanged between the one or more terminals and an upper device; and
a control unit configured to generate a dedicated optical path in any section to the upper device in a case where it is determined that the dedicated optical path for transferring a specific traffic flow is necessary on a basis of the control information acquired for the each traffic flow.

2. The base station according to claim 1, further comprising:
an instruction unit configured to instruct an optical transmission device to switch the dedicated optical path, the optical transmission device being connected to a base station connected after the one or more terminals are moved, in a case where the switching of the dedicated optical path is necessary in response to the movement of the one or more terminals, wherein
the instruction unit transmits the instruction to switch the dedicated optical path to the optical transmission device by delaying by a delay time due to a distance between the upper device and a base station to serve as a switching destination or by a delay time due to a distance between a distributed station and a central station in a case where the base station includes the distributed station and the central station, or transmits the instruction to switch the dedicated optical path to the optical transmission device earlier by a time difference from timing when the optical transmission device receives the instruction to switch the dedicated optical path to a time when optical path switching is actually performed, by taking the time difference into consideration.

3. The base station according to claim 1 or 2, wherein
an uplink signal transmitted from the one or more terminals is buffered in accordance with timing when the dedicated optical path is switched in an optical transmission device, and the buffered uplink signal is transferred after a lapse of a buffer time indicating a period for buffering the signal.

4. A control device in a signal transfer system including one or more base stations that accommodate one or more terminals, one or more optical transmission devices that communicate with the one or more base stations, and the control device that controls at least the one or more optical transmission devices, the control device comprising:
a control determination unit configured to transmit, to at least the one or more optical transmission devices, an instruction to generate a dedicated optical path in any section between the one or more base stations and an upper device in a case where it is determined that the dedicated optical path for transferring a specific traffic flow is necessary on a basis of control information regarding communication with the one or more terminals acquired for each traffic flow exchanged between the one or more terminals and the upper device.

5. The control device according to claim 4, wherein
the one or more base stations are a plurality of the base stations, and
the one or more optical transmission devices are a plurality of the optical transmission devices, and
the control determination unit
instructs an optical transmission device to switch the dedicated optical path, the optical transmission device being connected to a base station connected after the terminal is moved, when notification of the necessity of switching of the dedicated optical path is provided in response to the movement of the terminal.

6. The control device according to claim 4, wherein
the one or more base stations are a plurality of base stations, and
the one or more optical transmission devices are a plurality of optical transmission devices, and
the control determination unit
give an instruction on generation of the dedicated optical path according to each traffic flow in a case where it is determined that traffic steering processing is necessary on a basis of the control information.

7. The control device according to claim 5, wherein
the control determination unit transmits the instruction to switch the dedicated optical path to the one or more optical transmission devices by delaying by a delay time due to a distance between the upper device and a base station to serve as a switching destination or by a delay time due to a distance between a distributed station and a central station in a case where the base station includes the distributed station and the central station, or transmits the instruction to switch the dedicated optical path to the one or more optical transmission devices earlier by a time difference from timing when the one or more optical transmission devices receive the instruction to switch the dedicated optical path to a time when optical path switching is actually performed, by taking into account the time difference.

8. A control device in a signal transfer system including one or more base stations that accommodate one or more terminals, one or more optical transmission devices that communicate with the one or more base stations, and the control device that communicates with at least the one or more base stations, the control device comprising:
an information analysis unit configured to acquire, from the one or more base stations, control information regarding communication with the one or more terminals acquired for each traffic flow exchanged between the one or more terminals and an upper device, and determine whether or not a dedicated optical path for transferring a specific traffic flow is necessary on a basis of the acquired control information.

9. The control device according to claim 8, wherein
the information analysis unit transmits an instruction to switch the dedicated optical path to the one or more optical transmission devices by delaying by a delay time due to a distance between the upper device and a base station to serve as a switching destination or by a delay time due to a distance between a distributed station and a central station in a case where the base station includes the distributed station and the central station, or transmits the instruction to switch the dedicated optical path to the one or more optical transmission devices earlier by a time difference from timing when the one or more optical transmission devices receive the instruction to switch the dedicated optical path to a time when optical path switching is actually performed, by taking into account the time difference.

10. A signal transfer system comprising:
one or more base stations configured to accommodate one or more terminals; and
one or more optical transmission devices configured to perform communication with the one or more base stations, and
the signal transfer system comprising:
an information acquisition unit configured to acquire control information regarding communication between the one or more base stations and the one or more terminals for each traffic flow exchanged between the one or more terminals and an upper device; and
a control unit configured to generate a dedicated optical path in any section between the one or more base stations and the upper device in a case where it is determined that the dedicated optical path for transferring a specific traffic flow is necessary on a basis of the control information acquired for the each traffic flow, and transfer the specific traffic flow to a transfer destination via the generated dedicated optical path.

11. The signal transfer system according to claim 10, wherein
the one or more base stations are a plurality of the base stations, and
the one or more optical transmission devices are a plurality of the optical transmission devices, and
the control unit
switches the dedicated optical path after the generation of the dedicated optical path, switches the dedicated optical path in a case where an instruction to generate the dedicated optical path according to each traffic flow is made by execution of traffic steering, or generates the dedicated optical path according to each traffic flow.

12. The signal transfer system according to claim 10, further comprising:
an instruction unit configured to transmit the instruction to switch the dedicated optical path to the one or more optical transmission devices by delaying by a delay time due to a distance between the upper device and a base station to serve as a switching destination or by a delay time due to a distance between a distributed station and a central station in a case where the base station includes the distributed station and the central station, or transmit the instruction to switch the dedicated optical path to the one or more optical transmission devices earlier by a time difference from timing when the one or more optical transmission devices receive the instruction to switch the dedicated optical path to a time when optical path switching is actually performed, by taking the time difference into consideration.

13. The signal transfer system according to claim 10 or 12, wherein
any one of the one or more base stations, the one or more optical transmission devices, or the upper device buffers a signal in accordance with timing when the dedicated optical path is switched in the one or more optical transmission devices, and transfers the buffered signal after a lapse of a buffer time indicating a period for buffering the signal.

14. A signal transfer method in a signal transfer system including one or more base stations that accommodate one or more terminals and one or more optical transmission devices that communicate with the one or more base stations, the signal transfer method comprising:
acquiring control information regarding communication between the one or more base stations and the one or more terminals for each traffic flow exchanged between the one or more terminals and an upper device;
generating a dedicated optical path in any section between the one or more base stations and the upper device in a case where it is determined that the dedicated optical path for transferring a specific traffic flow is necessary on a basis of the control information acquired for the each traffic flow; and
transferring the specific traffic flow to a transfer destination via the generated dedicated optical path.

15. The signal transfer method according to claim 14, comprising:
transmitting the instruction to switch the dedicated optical path to the one or more optical transmission devices by delaying by a delay time due to a distance between the upper device and a base station to serve as a switching destination or by a delay time due to a distance between a distributed station and a central station in a case where the base station includes the distributed station and the central station, or transmitting the instruction to switch the dedicated optical path to the one or more optical transmission devices earlier by a time difference from timing when the one or more optical transmission devices receive the instruction to switch the dedicated optical path to a time when optical path switching is actually performed, by taking the time difference into consideration.

16. The signal transfer method according to claim 14 or 15, wherein
any one of the one or more base stations, the one or more optical transmission devices, or the upper device buffers a signal in accordance with timing when the dedicated optical path is switched in the one or more optical transmission devices, and transfers the buffered signal after a lapse of a buffer time indicating a period for buffering the signal.
